(19) **Europäisches Patentamt / European Patent Office / Office européen des brevets**

(11) **EP 4 753 260 A1**

(12) **EUROPEAN PATENT APPLICATION**
published in accordance with Art. 153(4) EPC

(43) Date of publication:
**03.06.2026 Bulletin 2026/23**

(21) Application number: **24845742.6**

(22) Date of filing: **13.05.2024**

(51) International Patent Classification (IPC):
**H04N 19/13** (2014.01)    **H04N 19/70** (2014.01)
**H04N 19/426** (2014.01)

(52) Cooperative Patent Classification (CPC):
**H04N 19/13; H04N 19/426; H04N 19/70**

(86) International application number:
**PCT/KR2024/006505**

(87) International publication number:
**WO 2025/023438 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 26.07.2023 KR 20230097806
31.10.2023 KR 20230148440

(71) Applicant: **Samsung Electronics Co., Ltd.**
**Suwon-si, Gyeonggi-do 16677 (KR)**

(72) Inventors:
• **PIAO, Yinji**
  **Suwon-si, Gyeonggi-do 16677 (KR)**
• **CHOI, Kwangpyo**
  **Suwon-si, Gyeonggi-do 16677 (KR)**

(74) Representative: **Appleyard Lees IP LLP**
**G Mill**
**Dean Clough Industrial Park**
**Halifax HX3 5AH (GB)**

(54) **METHOD AND DEVICE FOR CODING IMAGE USING PROBABILITY VALUE TUNING, AND METHOD AND DEVICE FOR DECODING IMAGE**

(57)     Provided is an image decoding method according to an embodiment including storing, according to a context of a syntax element, a bin obtained through entropy decoding with respect to a coding unit within a first largest coding unit; obtaining a probability value of a context of a syntax element after entropy decoding with respect to a coding unit within a second largest coding unit is completed, in order to entropy decode with respect to a current coding unit; updating the probability value of the context, based on the stored bin; and reconstructing a syntax element for the current coding unit, based on the updated probability value of the context, wherein a total number of bins stored is less than or equal to a pre-determined first threshold value, and the number of bins stored for any one context is less than or equal to a limit value, or less than or equal to a smaller value from among the limit value and a pre-determined second threshold value.

FIG. 20

## Description

### Technical Field

The present disclosure relates to the field of image encoding and decoding, and more particularly, to an apparatus and method for use in encoding and decoding a current block by tuning a probability value of a previous block.

### Background Art

In image encoding and decoding, an image is split into blocks, and each block is prediction-encoded and prediction-decoded through inter prediction or intra prediction.

Inter prediction is a technology for compressing an image by removing temporal redundancy between images. Inter prediction may predict blocks of a current image by using a reference image. A reference block that is most similar to a current block may be searched for in a preset search range in the reference image. The current block is predicted based on the reference block, and a prediction block generated as a result of prediction is subtracted from the current block to generate a residual block.

Intra prediction is a technology for compressing an image by removing spatial redundancy in the image. Intra prediction may generate a prediction block based on neighboring pixels of the current block according to an intra prediction mode. Then, a residual block may be generated by subtracting the prediction block from the current block.

Syntax elements containing information about a residual block generated during image encoding can be entropy encoded and included in a bitstream, and a decoder can entropy decode the bitstream to reconstruct the syntax elements.

### Disclosure of Invention

### Solution to Problem

An image decoding method according to an embodiment may include storing, according to a context of a syntax element, a bin obtained through entropy decoding with respect to at least one coding unit within a first largest coding unit, and at least one coding unit may be adjacent to a lower boundary or a right boundary of the first largest coding unit.

The image decoding method according to an embodiment may include obtaining a probability value of a context of a syntax element after entropy decoding with respect to at least one coding unit within a second largest coding unit is completed, in order to perform entropy-decoding with respect to a current coding unit within the current largest coding unit 2350, and the first largest coding unit and the second largest coding unit may be reconstructed before the current largest coding unit 2350.

The image decoding method according to an embodiment may include updating the probability value of the context, based on the bin stored according to the context.

The image decoding method according to an embodiment may include reconstructing a syntax element for the current coding unit, based on the updated probability value of the context.

According to an embodiment, a total number of bins stored according to the context may be less than or equal to a pre-determined first threshold value.

According to an embodiment, the number of bins stored for any one context may be less than or equal to a limit value set for the any one context, or less than or equal to a smaller value from among the limit value and a pre-determined second threshold value.

An image decoding apparatus according to an embodiment may include a context modeler 2010 configured to store, according to a context of a syntax element, a bin obtained through entropy decoding with respect to at least one coding unit within a first largest coding unit, obtain a probability value of a context of a syntax element after entropy decoding with respect to at least one coding unit within a second largest coding unit is completed, in order to perform entropy-decoding with respect to a current coding unit within the current largest coding unit 2350, and update the probability value of the context, based on the bin stored according to the context.

The image decoding apparatus according to an embodiment may include the arithmetic decoder 2030 configured to reconstruct a syntax element for the current coding unit, based on the updated probability value of the context.

According to an embodiment, at least one coding unit within the first largest coding unit may be adjacent to a lower boundary or a right boundary of the first largest coding unit.

According to an embodiment, the first largest coding unit and the second largest coding unit may be reconstructed before the current largest coding unit 2350.

According to an embodiment, a total number of bins stored according to the context may be less than or equal to a pre-determined first threshold value.

According to an embodiment, the number of bins stored for any one context may be less than or equal to a limit value set for the any one context, or less than or equal to a smaller value from among the limit value and a pre-determined second threshold value.

An image encoding method according to an embodiment may include storing, according to a context of a syntax element, a bin corresponding to a syntax element of at least one coding unit within a first largest coding unit, wherein the at least one coding unit may be adjacent to a lower boundary or a right boundary of the first largest coding unit.

The image encoding method according to an embodiment may include obtaining a probability value of a context of a syntax element after entropy encoding with respect to at least one coding unit within a second largest coding unit is completed, in order to perform entropy-encoding with respect to a current coding unit within the current largest coding unit 2350, wherein the first largest coding unit and the second largest coding unit may be encoded before the current largest coding unit 2350.

The image encoding method according to an embodiment may include updating the probability value of the context, based on the bin stored according to the context.

The image encoding method according to an embodiment may include arithmetically encoding a syntax element for the current coding unit, based on the updated probability value of the context.

According to an embodiment, a total number of bins stored according to the context may be less than or equal to a pre-determined first threshold value.

According to an embodiment, the number of bins stored for any one context may be less than or equal to a limit value set for the any one context, or less than or equal to a smaller value from among the limit value and a pre-determined second threshold value.

An image encoding apparatus according to an embodiment may include the context modeler 3430 configured to store, according to a context of a syntax element, a bin corresponding to a syntax element of at least one coding unit within a first largest coding unit, obtain a probability value of a context of a syntax element after entropy encoding with respect to at least one coding unit within a second largest coding unit is completed, in order to perform entropy-encoding with respect to a current coding unit within the current largest coding unit 2350, and update the probability value of the context, based on the bin stored according to the context.

The image encoding apparatus according to an embodiment may include the arithmetic encoder 3450 configured to arithmetically encode a syntax element for the current coding unit, based on the updated probability value of the context.

According to an embodiment, at least one coding unit within the first largest coding unit may be adjacent to a lower boundary or a right boundary of the first largest coding unit.

According to an embodiment, the first largest coding unit and the second largest coding unit may be encoded before the current largest coding unit 2350.

According to an embodiment, a total number of bins stored according to the context may be less than or equal to a pre-determined first threshold value.

According to an embodiment, the number of bins stored for any one context may be less than or equal to a limit value set for the any one context, or less than or equal to a smaller value from among the limit value and a pre-determined second threshold value.

In a computer-readable recording medium having recorded a bitstream thereon, according to an embodiment, the bitstream may correspond to a result of arithmetic encoding a syntax element for a current coding unit.

According to an embodiment, the result of arithmetic encoding the syntax element may be obtained by storing a bin corresponding to a syntax element of at least one coding unit within a first largest coding unit, according to a context of the syntax element.

According to an embodiment, the result of arithmetic encoding the syntax element may be obtained by obtaining a probability value of a context of a syntax element after entropy encoding with respect to at least one coding unit within a second largest coding unit is completed, in order to perform entropy-encoding with respect to the current coding unit within the current largest coding unit 2350.

According to an embodiment, the result of arithmetic encoding the syntax element may be obtained by updating the probability value of the context, based on the bin stored according to the context.

According to an embodiment, the result of arithmetic encoding the syntax element may be obtained by arithmetically encoding a syntax element for the current coding unit, based on the updated probability value of the context.

According to an embodiment, at least one coding unit within the first largest coding unit may be adjacent to a lower boundary or a right boundary of the first largest coding unit.

According to an embodiment, the first largest coding unit and the second largest coding unit may be encoded before the current largest coding unit 2350.

According to an embodiment, a total number of bins stored according to the context may be less than or equal to a pre-determined first threshold value.

According to an embodiment, the number of bins stored for any one context may be less than or equal to a limit value set for the any one context, or less than or equal to a smaller value from among the limit value and a pre-determined second threshold value.

**Brief Description of Drawings**

FIG. 1 is a block diagram of an image decoding apparatus according to an embodiment.
FIG. 2 is a block diagram of an image encoding apparatus according to an embodiment.
FIG. 3 illustrates a process of determining at least one coding unit by splitting a current coding unit, according to an embodiment.
FIG. 4 illustrates a process of determining at least one coding unit by splitting a non-square coding unit, according to an embodiment.
FIG. 5 illustrates a process of splitting a coding unit based on at least one of block shape information and split shape mode information, according to an embodiment.
FIG. 6 illustrates a method of determining a preset coding unit from among an odd number of coding units, according to an embodiment.
FIG. 7 illustrates an order of processing a plurality of coding units when determining the plurality of coding units by splitting a current coding unit, according to an embodiment.
FIG. 8 illustrates a process of determining that a current coding unit is to be split into an odd number of coding units, when the coding units are not processable in a preset order, according to an embodiment.
FIG. 9 illustrates a process of determining at least one coding unit by splitting a first coding unit, according to an embodiment.
FIG. 10 illustrates that a shape, into which a non-square second coding unit determined by splitting a first coding unit, is splittable, is restricted when the second coding unit satisfies a preset condition, according to an embodiment.
FIG. 11 illustrates a process of splitting a square coding unit when split shape mode information does not indicate splitting in units of four square coding units, according to an embodiment.
FIG. 12 illustrates that a processing order among a plurality of coding units may be changed depending on a process of splitting a coding unit, according to an embodiment.
FIG. 13 illustrates a process of determining a depth of a coding unit as a shape and size of the coding unit change, when the coding unit is recursively split such that a plurality of coding units are determined, according to an embodiment.
FIG. 14 illustrates depths that are determinable based on shapes and sizes of coding units, and part indexes (PIDs) for distinguishing the coding units, according to an embodiment.
FIG. 15 illustrates that a plurality of coding units are determined based on a plurality of preset data units included in a picture, according to an embodiment.
FIG. 16 illustrates coding units of individual pictures, when the individual pictures have different split shape combinations of coding units, according to an embodiment.
FIG. 17 illustrates various shapes of coding units that can be determined based on split shape mode information that is expressed with a binary code, according to an embodiment.
FIG. 18 illustrates other shapes of coding units that can be determined based on split shape mode information that is expressed with a binary code, according to an embodiment.
FIG. 19 is a block diagram of an image encoding and decoding system that performs loop filtering, according to an embodiment.
FIG. 20 is a block diagram of an image decoding apparatus according to an embodiment.
FIG. 21 is a diagram for describing an arithmetic encoding process according to an embodiment.
FIG. 22 is a diagram for describing an arithmetic decoding process according to an embodiment.
FIG. 23 is a diagram for explaining a method of obtaining a probability value of a context used in a process of entropy decoding a previous coding unit in order to entropy decode a current coding unit, according to an embodiment.
FIG. 24 is a diagram for explaining a method of obtaining a probability value of a context used in a process of entropy decoding a previous coding unit, in order to entropy decode a current coding unit, according to an embodiment.
FIG. 25 is a diagram for explaining a method of updating a probability value of a context, based on a bin stored according to a context, according to an embodiment.
FIG. 26 is a graph showing a tendency of a first probability value and a second probability value that are updated according to a first factor and a second factor, respectively, according to an embodiment.
FIG. 27 is a table showing bins obtained through entropy decoding with respect to at least one coding unit within a largest coding unit, according to an embodiment.
FIG. 28 is a table showing a probability value of a context of a syntax element stored after entropy decoding with respect to a previous coding unit is completed, according to an embodiment.

FIG. 29 is a table showing a process in which the probability values of the contexts shown in FIG. 28 are updated according to the bins shown in FIG. 27, according to an embodiment.

FIG. 30 is a table showing a comparison between the number of contexts tunable when the number of bins is limited to a second threshold value and the number of contexts tunable when the number of bins is limited to a smaller value among the second threshold value and a limit value, according to an embodiment.

FIG. 31 is a diagram illustrating a previous coding unit that may be used to update a probability value of a context, according to an embodiment.

FIG. 32 is a diagram illustrating a previous coding unit that may be used to update a probability value of a context, according to an embodiment.

FIG. 33 is a flowchart of an image decoding method according to an embodiment.

FIG. 34 is a block diagram of a structure of an image encoding apparatus according to an embodiment.

FIG. 35 is a flowchart of an image encoding method according to an embodiment.

**Best Mode for Carrying out the Invention**

An image decoding method according to an embodiment may include storing, according to a context of a syntax element, a bin obtained through entropy decoding with respect to at least one coding unit within a first largest coding unit, and at least one coding unit may be adjacent to a lower boundary or a right boundary of the first largest coding unit.

The image decoding method according to an embodiment may include obtaining a probability value of a context of a syntax element after entropy decoding with respect to at least one coding unit within a second largest coding unit is completed, in order to perform entropy-decoding with respect to a current coding unit within the current largest coding unit 2350, and the first largest coding unit and the second largest coding unit may be reconstructed before the current largest coding unit 2350.

The image decoding method according to an embodiment may include updating the probability value of the context, based on the bin stored according to the context.

The image decoding method according to an embodiment may include reconstructing a syntax element for the current coding unit, based on the updated probability value of the context.

According to an embodiment, a total number of bins stored according to the context may be less than or equal to a pre-determined first threshold value.

According to an embodiment, the number of bins stored for any one context may be less than or equal to a limit value set for the any one context, or less than or equal to a smaller value from among the limit value and a pre-determined second threshold value.

**Mode for the Invention**

As the disclosure allows for various changes and numerous embodiments, particular embodiments will be illustrated in the drawings and described in detail in the written description. However, this is not intended to limit the disclosure to particular modes of practice, and all changes, equivalents, and substitutes that do not depart from the spirit and technical scope of the disclosure are encompassed in the disclosure.

In the description of embodiments of the disclosure, certain detailed explanations of the related art may be omitted when it is deemed that they may unnecessarily obscure the essence of the disclosure. Terms (e.g., "first" and "second") used to describe embodiments may correspond to identifiers for distinguishing one component from another.

Throughout the disclosure, the expression "at least one of a, b or c" may indicate only a, only b, only c, both a and b, both a and c, both b and c, all of a, b, and c, or variations thereof.

When a component is "coupled to" or "connected to" another component, the one component may be directly coupled to or connected to the other component, or, unless otherwise described, an intervening component may exist therebetween.

Regarding a component represented as a "~ er (or) (unit)" or a "module" used herein, two or more components may be combined into one component or one component may be divided into two or more components. In addition, each component described hereinafter may additionally perform some or all of functions performed by another component, in addition to main functions of itself, and some of the main functions of each component may be performed entirely by another component.

An 'image' used herein may indicate a picture, a still image, a frame, a moving image composed of a plurality of continuous still images, or a video.

A 'sample' used herein may refer to, as data assigned to a sampling location of an image, data to be processed. For example, pixels in a frame of a spatial domain may correspond to samples. A unit including a plurality of samples may be defined as a block.

In the present disclosure, entropy decoding with respect to a block or unit may refer to a process of obtaining a syntax element of the block or unit from a bitstream (or bits included in the bitstream), or a process of obtaining a bin string corresponding to the syntax element.

In the present disclosure, entropy encoding with respect to a block or unit may refer to a process of generating a bitstream (or bits constituting the bitstream) from a syntax element of the block or unit, or a process of generating the bitstream (or the bits constituting the bitstream) from a bin string corresponding to the syntax element.

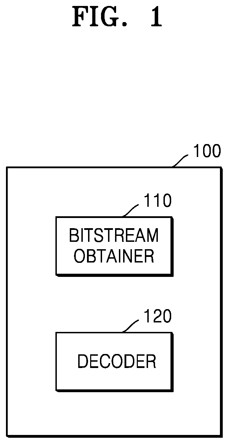

Hereinafter, an image encoding method and apparatus and an image decoding method and apparatus based on coding units and transformation units having a tree structure according to an embodiment will be described with reference to FIGS. 1 through 19.

FIG. 1 is a block diagram of an image decoding apparatus 100 according to an embodiment.

The image decoding apparatus 100 may include a bitstream obtainer 110 and a decoder 120. The bitstream obtainer 110 and the decoder 120 may include at least one processor. The bitstream obtainer 110 and the decoder 120 may include a memory storing instructions that are to be executed by the at least one processor.

The bitstream obtainer 110 may receive a bitstream. The bitstream may include information resulting from image encoding by an image encoding apparatus 200 which will be described later. The bitstream may be transmitted from the image encoding apparatus 200. The image decoding apparatus 100 may be connected to the image encoding apparatus 200 in a wired or wireless manner, and the bitstream obtainer 110 may receive a bitstream in a wired or wireless manner. The bitstream obtainer 110 may receive a bitstream from a storage medium, such as optical media, a hard disk, etc. The decoder 120 may reconstruct an image, based on information obtained from the received bitstream. The decoder 120 may obtain a syntax element for reconstructing an image from the bitstream. The decoder 120 may reconstruct the image, based on the syntax element.

Describing an operation of the image decoding apparatus 100 in detail, the bitstream obtainer 110 may receive a bitstream.

The image decoding apparatus 100 may perform an operation of obtaining a bin string corresponding to a split shape mode of a coding unit from the bitstream. The image decoding apparatus 100 may perform an operation of determining a split rule of a coding unit. The image decoding apparatus 100 may perform an operation of splitting a coding unit into a plurality of coding units, based on at least one of the bin string corresponding to the split shape mode and the split rule. The image decoding apparatus 100 may determine a first range which is an allowable size range of a coding unit, according to a ratio of a height to a width of the coding unit, in order to determine the split rule. The image decoding apparatus 100 may determine a second range which is an allowable size range of a coding unit, according to a split shape mode of the coding unit, in order to determine the split rule.

Hereinafter, splitting of a coding unit will be described in detail according to an embodiment of the disclosure.

First, one picture may be split into one or more slices or one or more tiles. One slice or one tile may be a sequence of one or more largest coding units (coding tree units (CTUs)). According to an implementation example, one slice includes one or more tiles, or one slice may include one or more largest coding units. A slice including one tile or a plurality of times may be determined within a picture.

There is a largest coding block (coding tree block (CTB)) conceptually compared to a largest coding unit (CTU). The largest coding block (CTB) denotes an NxN block including NxN samples (where N is an integer). Each color component may be split into one or more largest coding blocks.

When a picture has three sample arrays (sample arrays for Y, Cr, and Cb components), a largest coding unit (CTU) includes a largest coding block of a luma sample, two corresponding largest coding blocks of chroma samples, and syntax structures used to encode the luma sample and the chroma samples. When a picture is a monochrome picture, a largest coding unit includes a largest coding block of a monochrome sample and syntax structures used to encode the monochrome samples. When a picture is a picture encoded in color planes separated according to color components, a largest coding unit includes syntax structures used to encode the picture and samples of the picture.

One largest coding block (CTB) may be split into MxN coding blocks including MxN samples (M and N are integers).

When a picture has sample arrays for Y, Cr, and Cb components, a coding unit (CU) includes a coding block of a luma sample, two corresponding coding blocks of chroma samples, and syntax structures used to encode the luma sample and the chroma samples. When a picture is a monochrome picture, a coding unit includes a coding block of a monochrome sample and syntax structures used to encode the monochrome samples. When a picture is a picture encoded in color planes separated according to color components, a coding unit includes syntax structures used to encode the picture and samples of the picture.

As described above, a largest coding block and a largest coding unit are conceptually distinguished from each other, and a coding block and a coding unit are conceptually distinguished from each other. In other words, a (largest) coding unit refers to a data structure including a (largest) coding block including a corresponding sample and a syntax structure corresponding to the (largest) coding block. However, because it is understood by one of ordinary skill in the art that a (largest) coding unit or a (largest) coding block refers to a block of a preset size including a preset number of samples, a largest coding block and a largest coding unit, or a coding block and a coding unit are mentioned in the following specification without being distinguished unless otherwise described.

An image may be split into largest coding units (CTUs). A size of each largest coding unit may be determined based on information obtained from a bitstream. A shape of each largest coding unit may be a square shape of the same size. However, embodiments are not limited thereto.

For example, information about a maximum size of a luma coding block may be obtained from a bitstream. For example, the maximum size of the luma coding block indicated by the information about the maximum size of the luma coding block may be one of 4x4, 8x8, 16x16, 32x32, 64x64, 128x128, and 256x256.

For example, information about a luma block size difference and a maximum size of a luma coding block that may be split into two may be obtained from a bitstream. The information about the luma block size difference may refer to a size difference between a luma largest coding unit and a largest luma coding block that may be split into two. Accordingly, when the information about the maximum size of the luma coding block that may be split into two and the information about the luma block size difference obtained from the bitstream are combined with each other, a size of the luma largest coding unit may be determined. A size of a chroma largest coding unit may be determined by using the size of the luma largest coding unit. For example, when a Y: Cb: Cr ratio is 4:2:0 according to a color format, a size of a chroma block may be half a size of a luma block, and a size of a chroma largest coding unit may be half a size of a luma largest coding unit.

According to an embodiment, because information about a maximum size of a luma coding block that is binary splittable is obtained from a bitstream, the maximum size of the luma coding block that is binary splittable may be variably determined. In contrast, a maximum size of a luma coding block that is ternary splittable may be fixed. For example, the maximum size of the luma coding block that is ternary splittable in an I-picture may be 32x32, and the maximum size of the luma coding block that is ternary splittable in a P-picture or a B-picture may be 64x64.

A largest coding unit may be hierarchically split into coding units, based on split shape mode information obtained from a bitstream. At least one of information indicating whether quad splitting is performed, information indicating whether multi-splitting is performed, split direction information, and split type information may be obtained as the split shape mode information from the bitstream.

For example, the information indicating whether quad splitting is performed may indicate whether a current coding unit is quad split (QUAD_SPLIT) or not.

When the current coding unit is not quad split, the information indicating whether multi-splitting is performed may indicate whether the current coding unit is no longer split (NO_SPLIT) or binary/ternary split.

When the current coding unit is binary split or ternary split, the split direction information indicates that the current coding unit is split in one of a horizontal direction and a vertical direction.

When the current coding unit is split in the horizontal direction or the vertical direction, the split type information indicates that the current coding unit is binary split or ternary split.

A split mode of the current coding unit may be determined according to the split direction information and the split type information. A split mode when the current coding unit is binary split in the horizontal direction may be determined to be a binary horizontal split mode (SPLIT _BT_HOR), a split mode when the current coding unit is ternary split in the horizontal direction may be determined to be a ternary horizontal split mode (SPLIT_TT_HOR), a split mode when the current coding unit is binary split in the vertical direction may be determined to be a binary vertical split mode (SPLIT_BT_VER), and a split mode when the current coding unit is ternary split in the vertical direction may be determined to be a ternary vertical split mode (SPLIT_TT_VER).

The image decoding apparatus 100 may obtain, from the bitstream, the split shape mode information from one bin string. A form of the bitstream received by the image decoding apparatus 100 may include fixed length binary code, unary code, truncated unary code, pre-determined binary code, or the like. The bin string is information in a binary number. The bin string may include at least one bit. The image decoding apparatus 100 may obtain the split shape mode information corresponding to the bin string, based on the split rule. The image decoding apparatus 100 may determine whether to quad split a coding unit, whether not to split a coding unit, a split direction, and a split type, based on one bin string.

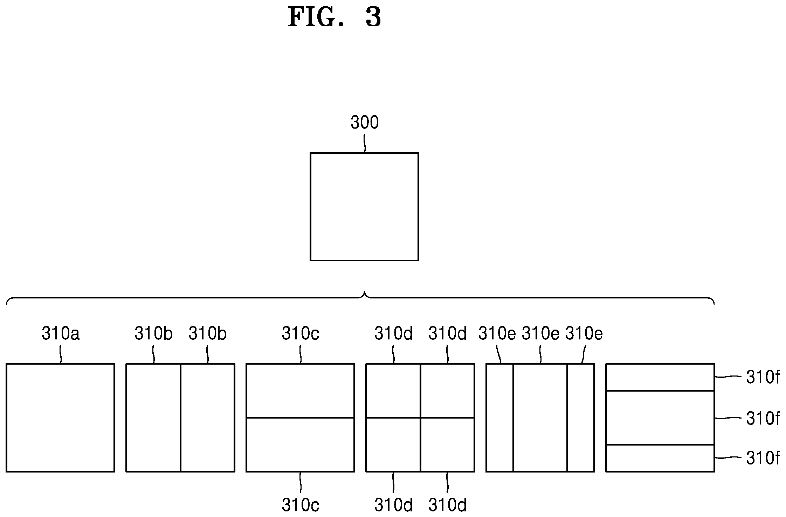

The coding unit may be smaller than or the same as the largest coding unit. For example, because a largest coding unit is a coding unit having a maximum size, the largest coding unit is one of coding units. When split shape mode information about a largest coding unit indicates that splitting is not performed, a coding unit determined in the largest coding unit has the same size as that of the largest coding unit. When split shape mode information about a largest coding unit indicates that splitting is performed, the largest coding unit may be split into coding units. Also, when split shape mode information about a coding unit indicates that splitting is performed, the coding unit may be split into smaller coding units. However, the splitting of the image is not limited thereto, and the largest coding unit and the coding unit may not be distinguished. The splitting of the coding unit will be described in detail with reference to FIGS. 3 through 16.

Also, one or more prediction blocks for prediction may be determined from a coding unit. The prediction block may be the same as or smaller than the coding unit. Also, one or more transform blocks for transformation may be determined from a coding unit. The transform block may be equal to or smaller than the coding unit.

The shapes and sizes of the transform block and prediction block may not be related to each other.

In another embodiment, prediction may be performed by using a coding unit as a predictor. Also, transformation may be performed by using a coding unit as a transform block.

The splitting of the coding unit will be described in detail with reference to FIGS. 3 through 16. A current block and an adjacent block of the disclosure may indicate one of the largest coding unit, the coding unit, the prediction block, and the transform block. Also, the current block of the current coding unit is a block that is currently being decoded or encoded or a block that is currently being split. The adjacent block may be a block reconstructed before the current block. The adjacent block may be adjacent to the current block spatially or temporally. The adjacent block may be located at one of the lower left, left, upper left, top, upper right, right, lower right of the current block.

FIG. 3 illustrates a process, performed by the image decoding apparatus 100, of determining at least one coding unit by splitting a current coding unit, according to an embodiment.

A block shape may include 4Nx4N, 4Nx2N, 2Nx4N, 4NxN, Nx4N, 32NxN, Nx32N, 16NxN, Nx16N, 8NxN, or Nx8N. Here, N may be a positive integer. Block shape information is information indicating at least one of a shape, a direction, a ratio of width and height, or size of a coding unit.

The shape of the coding unit may include a square and a non-square. When the lengths of the width and height of the coding unit are the same (i.e., when the block shape of the coding unit is 4Nx4N), the image decoding apparatus 100 may determine the block shape information of the coding unit as a square. The image decoding apparatus 100 may determine the shape of the coding unit to be a non-square.

When the width and the height of the coding unit are different from each other (i.e., when the block shape of the coding unit is 4Nx2N, 2Nx4N, 4NxN, Nx4N, 32NxN, Nx32N, 16NxN, Nx16N, 8NxN, or Nx8N), the image decoding apparatus 100 may determine the block shape information of the coding unit as a non-square shape. When the shape of the coding unit is non-square, the image decoding apparatus 100 may determine the ratio of the width and height among the block shape information of the coding unit to be at least one of 1:2, 2:1, 1:4, 4:1, 1:8, 8:1, 1:16, 16:1, 1:32, and 32:1. Also, the image decoding apparatus 100 may determine whether the coding unit is in a horizontal direction or a vertical direction, based on the length of the width and the length of the height of the coding unit. Also, the image decoding apparatus 100 may determine the size of the coding unit, based on at least one of the length of the width, the length of the height, or the area of the coding unit.

According to an embodiment, the image decoding apparatus 100 may determine the shape of the coding unit by using the block shape information, and may determine a splitting method of the coding unit by using the split shape mode information. That is, a coding unit splitting method indicated by the split shape mode information may be determined based on a block shape indicated by the block shape information used by the image decoding apparatus 100.

The image decoding apparatus 100 may obtain the split shape mode information from a bitstream. However, an embodiment is not limited thereto, and the image decoding apparatus 100 and the image encoding apparatus 200 may determine pre-agreed split shape mode information, based on the block shape information. The image decoding apparatus 100 may determine the pre-agreed split shape mode information with respect to a largest coding unit or a minimum coding unit. For example, the image decoding apparatus 100 may determine split shape mode information with respect to the largest coding unit to be a quad split. Also, the image decoding apparatus 100 may determine split shape mode information regarding the smallest coding unit to be "not to perform splitting". In detail, the image decoding apparatus 100 may determine the size of the largest coding unit to be 256x256. The image decoding apparatus 100 may determine the pre-agreed split shape mode information to be a quad split. The quad split is a split shape mode in which the width and the height of the coding unit are both bisected. The image decoding apparatus 100 may obtain a coding unit of a 128x128 size from the largest coding unit of a 256x256 size, based on the split shape mode information. Also, the image decoding apparatus 100 may determine the size of the smallest coding unit to be 4x4. The image decoding apparatus 100 may obtain split shape mode information indicating "not to perform splitting" with respect to the smallest coding unit.

According to an embodiment, the image decoding apparatus 100 may use the block shape information indicating that the current coding unit has a square shape. For example, the image decoding apparatus 100 may determine whether not to split a square coding unit, whether to vertically split the square coding unit, whether to horizontally split the square coding unit, or whether to split the square coding unit into four coding units, based on the split shape mode information. Referring to FIG. 3, when the block shape information of a current coding unit 300 indicates a square shape, the decoder 120 may not split a coding unit 310a having the same size as the current coding unit 300, based on the split shape mode information indicating not to perform splitting, or may determine coding units 310b, 310c, 310d, 310e, or 310f split based on the split shape mode information indicating a preset splitting method.

Referring to FIG. 3, according to an embodiment, the image decoding apparatus 100 may determine two coding units 310b obtained by splitting the current coding unit 300 in a vertical direction, based on the split shape mode information indicating to perform splitting in a vertical direction. The image decoding apparatus 100 may determine two coding units 310c obtained by splitting the current coding unit 300 in a horizontal direction, based on the split shape mode information indicating to perform splitting in a horizontal direction. The image decoding apparatus 100 may determine four coding units 310d obtained by splitting the current coding unit 300 in vertical and horizontal directions, based on the split shape mode information indicating to perform splitting in vertical and horizontal directions. According to an embodiment, the image decoding apparatus 100 may determine three coding units 310e obtained by splitting the current coding unit 300 in a vertical direction, based on the split shape mode information indicating to perform ternary splitting in a vertical direction. The image decoding apparatus 100 may determine three coding units 310f obtained by splitting the current coding unit 300 in a horizontal direction, based on the split shape mode information indicating to perform ternary splitting in a horizontal direction. However, splitting methods of the square coding unit are not limited to the above-described methods, and the split shape mode information may indicate various methods. Preset splitting methods of splitting the square coding unit will be described in detail below in relation to various embodiments.

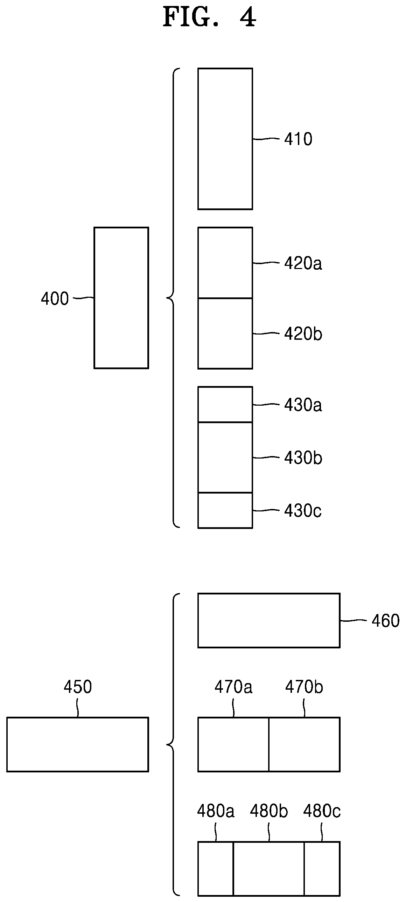

FIG. 4 illustrates a process, performed by the image decoding apparatus 100, of determining at least one coding unit by splitting a non-square coding unit, according to an embodiment.

According to an embodiment, the image decoding apparatus 100 may use block shape information indicating that a current coding unit has a non-square shape. The image decoding apparatus 100 may determine whether not to split the non-square current coding unit or whether to split the non-square current coding unit by using a preset splitting method, based on split shape mode information. Referring to FIG. 4, when the block shape information of a current coding unit 400 or 450 indicates a non-square shape, the image decoding apparatus 100 may determine a coding unit 410 or 460 having the same size as the current coding unit 400 or 450, based on the split shape mode information indicating not to perform splitting, or may determine coding units 420a and 420b, 430a to 430c, 470a and 470b, or 480a to 480c split based on the split shape mode information indicating a preset splitting method. Preset splitting methods of splitting a non-square coding unit will be described in detail below in relation to various embodiments.

According to an embodiment, the image decoding apparatus 100 may determine a splitting method of a coding unit by using the split shape mode information and, in this case, the split shape mode information may indicate the number of one or more coding units generated by splitting a coding unit. Referring to FIG. 4, when the split shape mode information indicates to split the current coding unit 400 or 450 into two coding units, the image decoding apparatus 100 may determine two coding units 420a and 420b, or 470a and 470b included in the current coding unit 400 or 450, by splitting the current coding unit 400 or 450 based on the split shape mode information.

According to an embodiment, when the image decoding apparatus 100 splits the current coding unit 400 or 450 having a non-square shape, based on the split shape mode information, the image decoding apparatus 100 may consider the location of a long side of the current coding unit 400 or 450 having a non-square shape to split a current coding unit. For example, the image decoding apparatus 100 may determine a plurality of coding units by splitting the current coding unit 400 or 450 in a direction of splitting a long side of the current coding unit 400 or 450, in consideration of the shape of the current coding unit 400 or 450.

According to an embodiment, when the split shape mode information indicates to split (ternary split) a coding unit into an odd number of blocks, the image decoding apparatus 100 may determine an odd number of coding units included in the current coding unit 400 or 450. For example, when the split shape mode information indicates to split the current coding unit 400 or 450 into three coding units, the image decoding apparatus 100 may split the current coding unit 400 or 450 into three coding units 430a, 430b, and 430c, or 480a, 480b, and 480c.

According to an embodiment, a ratio of the width and height of the current coding unit 400 or 450 may be 4:1 or 1:4. When the ratio of the width and height is 4:1, the block shape information may indicate a horizontal direction because the length of the width is longer than the length of the height. When the ratio of the width and height is 1:4, the block shape information may indicate a vertical direction because the length of the width is shorter than the length of the height. The image decoding apparatus 100 may determine to split a current coding unit into an odd number of blocks, based on the split shape mode information. Also, the image decoding apparatus 100 may determine a split direction of the current coding unit 400 or 450, based on the block shape information of the current coding unit 400 or 450. For example, when the current coding unit 400 is in the vertical direction, the image decoding apparatus 100 may determine the coding units 430a, 430b, and 430c by splitting the current coding unit 400 in the horizontal direction. Also, when the current coding unit 450 is in the horizontal direction, the image decoding apparatus 100 may determine the coding units 480a, 480b, and 480c by splitting the current coding unit 450 in the vertical direction.

According to an embodiment, the image decoding apparatus 100 may determine an odd number of coding units included in the current coding unit 400 or 450, and not all the determined coding units may have the same size. For example, a preset coding unit 430b or 480b from among the determined odd number of coding units 430a, 430b, and 430c, or 480a, 480b, and 480c may have a size different from the size of the other coding units 430a and 430c, or 480a and 480c. That is, coding units which may be determined by splitting the current coding unit 400 or 450 may have multiple sizes and, in some cases, all of the odd number of coding units 430a, 430b, and 430c, or 480a, 480b, and 480c may have different sizes.

According to an embodiment, when the split shape mode information indicates to split a coding unit into the odd number of blocks, the image decoding apparatus 100 may determine the odd number of coding units included in the current coding unit 400 or 450, and moreover, may put a preset restriction on at least one coding unit from among the odd number of coding units generated by splitting the current coding unit 400 or 450. Referring to FIG. 4, the image decoding apparatus 100 may set a decoding process regarding the coding unit 430b or 480b located at the center among the three coding units 430a, 430b, and 430c, or 480a, 480b, and 480c generated as the current coding unit 400 or 450 is split to be different from that of the other coding units 430a and 430c, or 480a and 480c. For example, the image decoding apparatus 100 may restrict the coding unit 430b or 480b at the center location to be no longer split or to be split only a preset number of times, unlike the other coding units 430a and 430c, or 480a and 480c.

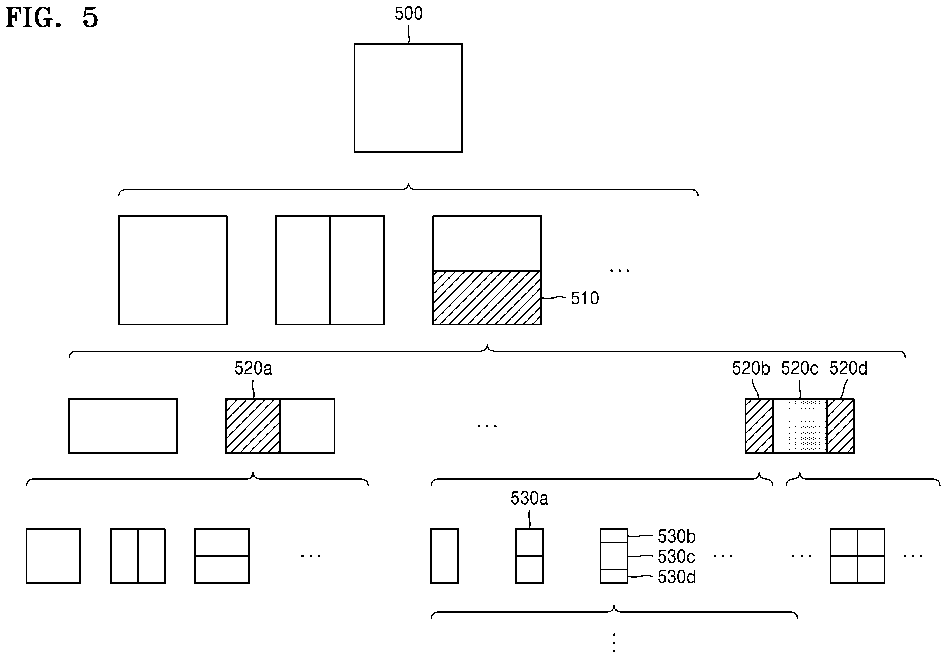

FIG. 5 illustrates a process, performed by the image decoding apparatus 100, of splitting a coding unit based on at least one of block shape information and split shape mode information, according to an embodiment.

According to an embodiment, the image decoding apparatus 100 may determine to split or to not split a first coding unit 500 having a square shape into coding units, based on at least one of the block shape information and the split shape mode information. According to an embodiment, when the split shape mode information indicates to split the first coding unit 500 in a horizontal direction, the image decoding apparatus 100 may determine a second coding unit 510 by splitting the first coding unit 500 in a horizontal direction. A first coding unit, a second coding unit, and a third coding unit used according to an embodiment are terms used to understand a relation before and after splitting a coding unit. For example, a second coding unit may be determined by splitting a first coding unit, and a third coding unit may be determined by splitting the second coding unit. It will be understood that the relation of the first coding unit, the second coding unit, and the third coding unit follows the above descriptions.

According to an embodiment, the image decoding apparatus 100 may determine to split or to not split the determined second coding unit 510 into coding units, based on the split shape mode information. Referring to FIG. 5, the image decoding apparatus 100 may split the second coding unit 510 having a non-square shape, which is determined by splitting the first coding unit 500, into one or more third coding units 520a, 520b, 520c, and 520d based on at least one of the split shape mode information and the split shape mode information, or may not split the second coding unit 510 having a non-square shape. The image decoding apparatus 100 may obtain the split shape mode information, and may obtain a plurality of various-shaped second coding units (e.g., 510) by splitting the first coding unit 500, based on the obtained split shape mode information, and the second coding unit 510 may be split by using a splitting method of the first coding unit 500 based on the split shape mode information. According to an embodiment, when the first coding unit 500 is split into the second coding units 510 based on the split shape mode information of the first coding unit 500, the second coding unit 510 may also be split into the third coding units (e.g., 520a, or 520b, 520c, and 520d) based on the split shape mode information of the second coding unit 510. That is, a coding unit may be recursively split based on the split shape mode information of each coding unit. Therefore, a coding unit having a square shape may be determined by splitting a coding unit having a non-square shape, and the coding unit having a non-square shape may be determined by recursively splitting the coding unit having a square shape.

Referring to FIG. 5, a preset coding unit (e.g., a coding unit located at a center location, or a coding unit having a square shape) from among an odd number of third coding units 520b, 520c, and 520d determined by splitting the second coding unit 510 having a non-square shape may be recursively split. According to an embodiment, the square third coding unit 520c from among the odd number of third coding units 520b, 520c, and 520d may be split in a horizontal direction into a plurality of fourth coding units. A fourth coding unit 530b or 530d having a non-square shape from among a plurality of fourth coding units 530a, 530b, 530c, and 530d may be re-split into a plurality of coding units. For example, the fourth coding unit 530b or 530d having a non-square shape may be re-split into an odd number of coding units. A method that may be used to recursively split a coding unit will be described below in relation to various embodiments.

According to an embodiment, the image decoding apparatus 100 may split each of the third coding units 520a, or 520b, 520c, and 520d into coding units, based on the split shape mode information. Also, the image decoding apparatus 100 may determine to not split the second coding unit 510 based on the split shape mode information. According to an embodiment, the image decoding apparatus 100 may split the second coding unit 510 having a non-square shape into the odd number of third coding units 520b, 520c, and 520d. The image decoding apparatus 100 may put a preset restriction on a preset third coding unit from among the odd number of third coding units 520b, 520c, and 520d. For example, the image decoding apparatus 100 may restrict the third coding unit 520c at a center location from among the odd number of third coding units 520b, 520c, and 520d to be no longer split or to be split a settable number of times.

Referring to FIG. 5, the image decoding apparatus 100 may restrict the third coding unit 520c, which is at the center location from among the odd number of third coding units 520b, 520c, and 520d included in the non-square second coding unit 510, to be no longer split, to be split by using a preset splitting method (e.g., split into only four coding units or split by using a splitting method of the second coding unit 510), or to be split only a preset number of times (e.g., split only n times (where n>0)). However, the restrictions on the third coding unit 520c at the center location are not limited to the above-described examples, and may include various restrictions for decoding the third coding unit 520c at the center location differently from the other third coding units 520b and 520d.

According to an embodiment, the image decoding apparatus 100 may obtain the split shape mode information, which is used to split a current coding unit, from a preset location in the current coding unit.

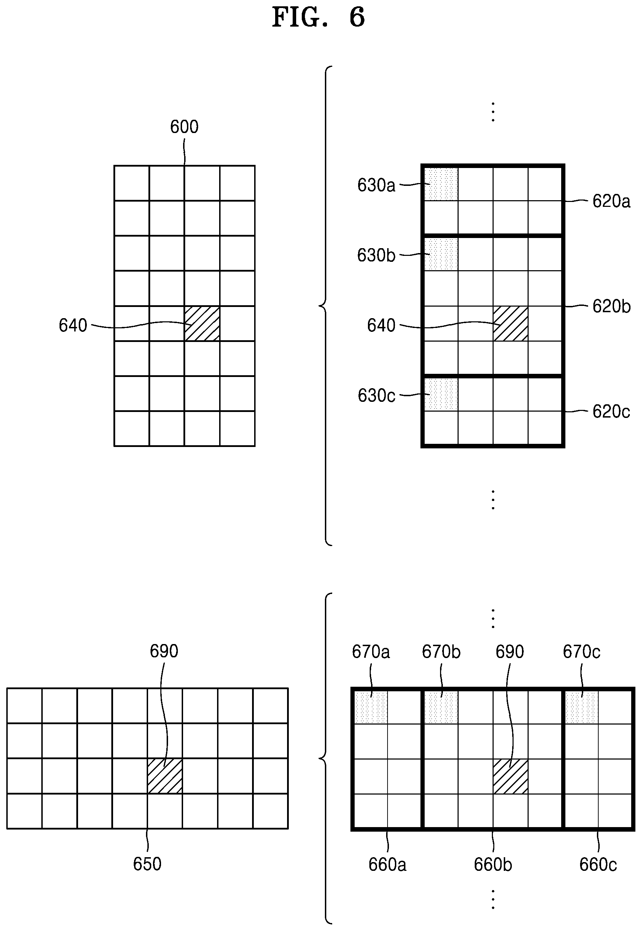

FIG. 6 illustrates a method, performed by the image decoding apparatus 100, of determining a preset coding unit from among an odd number of coding units, according to an embodiment.

Referring to FIG. 6, split shape mode information of a current coding unit 600 or 650 may be obtained from a sample of a preset location (e.g., a sample 640 or 690 of a center location) from among a plurality of samples included in the current coding unit 600 or 650. However, the preset location in the current coding unit 600, from which at least one piece of the split shape mode information may be obtained, is not limited to the center location in FIG. 6, and may include various locations included in the current coding unit 600 (e.g., top, bottom, left, right, upper left, lower left, upper right, lower right locations, or the like). The image decoding apparatus 100 may obtain the split shape mode information from the preset location and may determine to split or to not split the current coding unit into various-shaped and various-sized coding units.

According to an embodiment, when the current coding unit is split into a preset number of coding units, the image decoding apparatus 100 may select one of the coding units. Various methods may be used to select one of a plurality of coding units, as will be described below in relation to various embodiments.

According to an embodiment, the image decoding apparatus 100 may split the current coding unit into a plurality of coding units, and may determine a coding unit at a preset location.

According to an embodiment, image decoding apparatus 100 may use information indicating locations of the odd number of coding units, to determine a coding unit at a center location from among the odd number of coding units. Referring to FIG. 6, the image decoding apparatus 100 may determine the odd number of coding units 620a, 620b, and 620c or the odd number of coding units 660a, 660b, and 660c by splitting the current coding unit 600 or the current coding unit 650. The image decoding apparatus 100 may determine the middle coding unit 620b or the middle coding unit 660b by using information about the locations of the odd number of coding units 620a, 620b, and 620c or the odd number of coding units 660a, 660b, and 660c. For example, the image decoding apparatus 100 may determine the coding unit 620b of the center location by determining the locations of the coding units 620a, 620b, and 620c based on information indicating locations of preset samples included in the coding units 620a, 620b, and 620c. In detail, the image decoding apparatus 100 may determine the coding unit 620b at the center location by determining the locations of the coding units 620a, 620b, and 620c based on information indicating locations of upper-left samples 630a, 630b, and 630c of the coding units 620a, 620b, and 620c.

According to an embodiment, the information indicating the locations of the upper-left samples 630a, 630b, and 630c, which are included in the coding units 620a, 620b, and 620c, respectively, may include information about locations or coordinates of the coding units 620a, 620b, and 620c in a picture. According to an embodiment, the information indicating the locations of the upper-left samples 630a, 630b, and 630c, which are included in the coding units 620a, 620b, and 620c, respectively, may include information indicating widths or heights of the coding units 620a, 620b, and 620c included in the current coding unit 600, and the widths or heights may correspond to information indicating differences between the coordinates of the coding units 620a, 620b, and 620c in the picture. That is, the image decoding apparatus 100 may determine the coding unit 620b at the center location by directly using the information about the locations or coordinates of the coding units 620a, 620b, and 620c in the picture, or by using the information about the widths or heights of the coding units, which correspond to the difference values between the coordinates.

According to an embodiment, information indicating the location of the upper-left sample 630a of the upper coding unit 620a may include coordinates (xa, ya), information indicating the location of the upper-left sample 630b of the center coding unit 620b may include coordinates (xb, yb), and information indicating the location of the upper-left sample 630c of the lower coding unit 620c may include coordinates (xc, yc). The image decoding apparatus 100 may determine the middle coding unit 620b by using the coordinates of the upper-left samples 630a, 630b, and 630c which are included in the coding units 620a, 620b, and 620c, respectively. For example, when the coordinates of the upper-left samples 630a, 630b, and 630c are sorted in an ascending or descending order, the coding unit 620b including the coordinates (xb, yb) of the sample 630b at a center location may be determined as a coding unit at a center location from among the coding units 620a, 620b, and 620c determined by splitting the current coding unit 600. However, the coordinates indicating the locations of the upper-left samples 630a, 630b, and 630c may include coordinates indicating absolute locations in the picture, or may use coordinates (dxb, dyb) indicating a relative location of the upper-left sample 630b of the middle coding unit 620b and coordinates (dxc, dyc) indicating a relative location of the upper-left sample 630c of the lower coding unit 620c with reference to the location of the upper-left sample 630a of the upper coding unit 620a. A method of determining a coding unit at a preset location by using coordinates of a sample included in the coding unit, as information indicating a location of the sample, is not limited to the above-described method, and may include various arithmetic methods capable of using the coordinates of the sample.

According to an embodiment, the image decoding apparatus 100 may split the current coding unit 600 into a plurality of coding units 620a, 620b, and 620c, and may select one of the coding units 620a, 620b, and 620c based on a preset criterion. For example, the image decoding apparatus 100 may select the coding unit 620b, which has a size different from that of the others, from among the coding units 620a, 620b, and 620c.

According to an embodiment, the image decoding apparatus 100 may determine the width or height of each of the coding units 620a, 620b, and 620c by using the coordinates (xa, ya) that is the information indicating the location of the upper-left sample 630a of the upper coding unit 620a, the coordinates (xb, yb) that is the information indicating the location of the upper-left sample 630b of the middle coding unit 620b, and the coordinates (xc, yc) that are the information indicating the location of the upper-left sample 630c of the lower coding unit 620c. The image decoding apparatus 100 may determine the respective sizes of the coding units 620a, 620b, and 620c by using the coordinates (xa, ya), (xb, yb), and (xc, yc) indicating the locations of the coding units 620a, 620b, and 620c. According to an embodiment, the image decoding apparatus 100 may determine the width of the upper coding unit 620a to be the width of the current coding unit 600. The image decoding apparatus 100 may determine the height of the upper coding unit 620a to be yb-ya. According to an embodiment, the image decoding apparatus 100 may determine the width of the middle coding unit 620b to be the width of the current coding unit 600. The image decoding apparatus 100 may determine the height of the middle coding unit 620b to be yc-yb. According to an embodiment, the image decoding apparatus 100 may determine the width or height of the lower coding unit 620c by using the width or height of the current coding unit 600 or the widths or heights of the upper and middle coding units 620a and 620b. The image decoding apparatus 100 may determine a coding unit, which has a size different from that of the others, based on the determined widths and heights of the coding units 620a, 620b, and 620c. Referring to FIG. 6, the image decoding apparatus 100 may determine the middle coding unit 620b, which has a size different from the size of the upper and lower coding units 620a and 620c, as the coding unit of the preset location. However, the above-described method, performed by the image decoding apparatus 100, of determining a coding unit having a size different from the size of the other coding units merely corresponds to an example of determining coding unit at a preset location by using the sizes of coding units, which are determined based on coordinates of samples, and thus various methods of determining a coding unit at a preset location by comparing the sizes of coding units, which are determined based on coordinates of preset samples, may be used.

The image decoding apparatus 100 may determine the width or height of each of the coding units 660a, 660b, and 660c by using the coordinates (xd, yd) that are information indicating the location of an upper-left sample 670a of the left coding unit 660a, the coordinates (xe, ye) that are information indicating the location of an upper-left sample 670b of the middle coding unit 660b, and the coordinates (xf, yf) that are information indicating a location of the upper-left sample 670c of the right coding unit 660c. The image decoding apparatus 100 may determine the respective sizes of the coding units 660a, 660b, and 660c by using the coordinates (xd, yd), (xe, ye), and (xf, yf) indicating the locations of the coding units 660a, 660b, and 660c.

According to an embodiment, the image decoding apparatus 100 may determine the width of the left coding unit 660a to be xe-xd. The image decoding apparatus 100 may determine the height of the left coding unit 660a to be the height of the current coding unit 650. According to an embodiment, the image decoding apparatus 100 may determine the width of the middle coding unit 660b to be xf-xe. The image decoding apparatus 100 may determine the height of the middle coding unit 660b to be the height of the current coding unit 650. According to an embodiment, the image decoding apparatus 100 may determine the width or height of the right coding unit 660c by using the width or height of the current coding unit 650 or the widths or heights of the left and middle coding units 660a and 660b. The image decoding apparatus 100 may determine a coding unit, which has a size different from that of the others, based on the determined widths and heights of the coding units 660a, 660b, and 660c. Referring to FIG. 6, the image decoding apparatus 100 may determine the middle coding unit 660b, which has a size different from the sizes of the left and right coding units 660a and 660c, as the coding unit of the preset location. However, the above-described method, performed by the image decoding apparatus 100, of determining a coding unit having a size different from the size of the other coding units merely corresponds to an example of determining a coding unit at a preset location by using the sizes of coding units, which are determined based on coordinates of samples, and thus various methods of determining a coding unit at a preset location by comparing the sizes of coding units, which are determined based on coordinates of preset samples, may be used.

However, locations of samples considered to determine locations of coding units are not limited to the above-described upper left locations, and information about arbitrary locations of samples included in the coding units may be used.

According to an embodiment, the image decoding apparatus 100 may select a coding unit at a preset location from among an odd number of coding units determined by splitting the current coding unit, considering the shape of the current coding unit. For example, when the current coding unit has a non-square shape, a width of which is longer than a height, the image decoding apparatus 100 may determine the coding unit at the preset location in a horizontal direction. That is, the image decoding apparatus 100 may determine one of coding units at different locations in a horizontal direction and may put a restriction on the coding unit. When the current coding unit has a non-square shape, a height of which is longer than a width, the image decoding apparatus 100 may determine the coding unit at the preset location in a vertical direction. That is, the image decoding apparatus 100 may determine one of coding units at different locations in a vertical direction and may put a restriction on the coding unit.

According to an embodiment, the image decoding apparatus 100 may use information indicating respective locations of an even number of coding units, to determine the coding unit at the preset location from among the even number of coding units. The image decoding apparatus 100 may determine an even number of coding units by splitting (binary splitting) the current coding unit, and may determine the coding unit at the preset location by using the information about the locations of the even number of coding units. An operation related thereto may correspond to the operation of determining a coding unit at a preset location (e.g., a center location) from among an odd number of coding units, which has been described in detail above in relation to FIG. 6, and thus detailed descriptions thereof are not provided here.

According to an embodiment, when a non-square current coding unit is split into a plurality of coding units, preset information about a coding unit at a preset location may be used in a splitting operation to determine the coding unit at the preset location from among the plurality of coding units. For example, the image decoding apparatus 100 may use at least one of block shape information and split shape mode information, which is stored in a sample included in a middle coding unit, in a splitting operation to determine a coding unit at a center location from among the plurality of coding units determined by splitting the current coding unit.

Referring to FIG. 6, the image decoding apparatus 100 may split the current coding unit 600 into the plurality of coding units 620a, 620b, and 620c based on the split shape mode information, and may determine the coding unit 620b at a center location from among the plurality of coding units 620a, 620b, and 620c. Furthermore, the image decoding apparatus 100 may determine the coding unit 620b at the center location, in consideration of a location from which the split shape mode information is obtained. That is, the split shape mode information of the current coding unit 600 may be obtained from the sample 640 at a center location of the current coding unit 600 and, when the current coding unit 600 is split into the plurality of coding units 620a, 620b, and 620c based on the split shape mode information, the coding unit 620b including the sample 640 may be determined as the coding unit at the center location. However, information used to determine the coding unit at the center location is not limited to the split shape mode information, and various types of information may be used to determine the coding unit at the center location.

According to an embodiment, preset information for identifying the coding unit at the preset location may be obtained from a preset sample included in a coding unit to be determined. Referring to FIG. 6, the image decoding apparatus 100 may use the split shape mode information, which is obtained from a sample at a preset location in the current coding unit 600 (e.g., a sample at a center location of the current coding unit 600) to determine a coding unit at a preset location from among the plurality of coding units 620a, 620b, and 620c determined by splitting the current coding unit 600 (e.g., a coding unit at a center location from among a plurality of split coding units). That is, the image decoding apparatus 100 may determine the sample at the preset location by considering a block shape of the current coding unit 600, may determine the coding unit 620b including a sample, from which preset information (e.g., the split shape mode information) can be obtained, from among the plurality of coding units 620a, 620b, and 620c determined by splitting the current coding unit 600, and may put a preset restriction on the coding unit 620b. Referring to FIG. 6, according to an embodiment, the image decoding apparatus 100 may determine the sample 640 at the center location of the current coding unit 600 as the sample from which the preset information may be obtained, and may put a preset restriction on the coding unit 620b including the sample 640, in a decoding operation. However, the location of the sample from which the preset information can be obtained is not limited to the above-described location, and may include arbitrary locations of samples included in the coding unit 620b to be determined for a restriction.

According to an embodiment, the location of the sample from which the preset information may be obtained may be determined based on the shape of the current coding unit 600. According to an embodiment, the block shape information may indicate whether the current coding unit has a square or non-square shape, and the location of the sample from which the preset information may be obtained may be determined based on the shape. For example, the image decoding apparatus 100 may determine a sample located on a boundary for splitting at least one of a width and height of the current coding unit in half, as the sample from which the preset information can be obtained, by using at least one of information about the width of the current coding unit and information about the height of the current coding unit. As another example, when the block shape information of the current coding unit indicates a non-square shape, the image decoding apparatus 100 may determine one of samples adjacent to a boundary for splitting a long side of the current coding unit in half, as the sample from which the preset information can be obtained.

According to an embodiment, when the current coding unit is split into a plurality of coding units, the image decoding apparatus 100 may use the split shape mode information to determine a coding unit at a preset location from among the plurality of coding units. According to an embodiment, the image decoding apparatus 100 may obtain the split shape mode information from a sample at a preset location in a coding unit, and may split the plurality of coding units, which are generated by splitting the current coding unit, by using the split shape mode information, which is obtained from the sample of the preset location in each of the plurality of coding units. That is, a coding unit may be recursively split based on the split shape mode information, which is obtained from the sample at the preset location in each coding unit. An operation of recursively splitting a coding unit has been described above in relation to FIG. 5, and thus detailed descriptions thereof will not be provided here.

According to an embodiment, the image decoding apparatus 100 may determine one or more coding units by splitting the current coding unit, and may determine an order of decoding the one or more coding units, based on a preset block (e.g., the current coding unit).

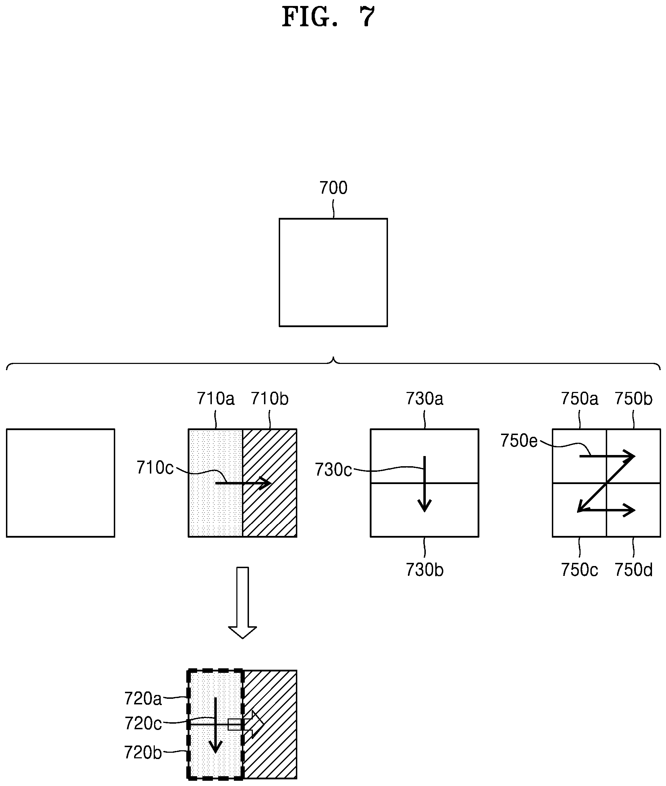

FIG. 7 illustrates an order of processing a plurality of coding units when the image decoding apparatus 100 determines the plurality of coding units by splitting a current coding unit, according to an embodiment.

According to an embodiment, the image decoding apparatus 100 may determine second coding units 710a and 710b by splitting a first coding unit 700 in a vertical direction, may determine second coding units 730a and 730b by splitting the first coding unit 700 in a horizontal direction, or may determine second coding units 750a, 750b, 750c, and 750d by splitting the first coding unit 700 in vertical and horizontal directions, based on split shape mode information.

Referring to FIG. 7, the image decoding apparatus 100 may determine to process the second coding units 710a and 710b, which are determined by splitting the first coding unit 700 in a vertical direction, in a horizontal direction order 710c. The image decoding apparatus 100 may determine to process the second coding units 730a and 730b, which are determined by splitting the first coding unit 700 in a horizontal direction, in a vertical direction order 730c. The image decoding apparatus 100 may determine the second coding units 750a, 750b, 750c, and 750d, which are determined by splitting the first coding unit 700 in vertical and horizontal directions, according to a preset order (e.g., a raster scan order or Z-scan order 750e) by which coding units in a row are processed and then coding units in a next row are processed.

According to an embodiment, the image decoding apparatus 100 may recursively split coding units. Referring to FIG. 7, the image decoding apparatus 100 may determine the plurality of coding units 710a and 710b, 730a and 730b, or 750a, 750b, 750c, and 750d by splitting the first coding unit 700, and may recursively split each of the determined plurality of coding units 710a, 710b, 730a, 730b, 750a, 750b, 750c, and 750d. A splitting method of the plurality of coding units 710a and 710b, 730a and 730b, or 750a, 750b, 750c, and 750d may correspond to a splitting method of the first coding unit 700. Accordingly, each of the plurality of coding units 710a and 710b, 730a and 730b, or 750a, 750b, 750c, and 750d may be independently split into a plurality of coding units. Referring to FIG. 7, the image decoding apparatus 100 may determine the second coding units 710a and 710b by splitting the first coding unit 700 in a vertical direction, and may determine to independently split or to not split each of the second coding units 710a and 710b.

According to an embodiment, the image decoding apparatus 100 may determine third coding units 720a and 720b by splitting the left second coding unit 710a in a horizontal direction, and may not split the right second coding unit 710b.

According to an embodiment, a processing order of coding units may be determined based on an operation of splitting a coding unit. In other words, a processing order of split coding units may be determined based on a processing order of coding units immediately before being split. The image decoding apparatus 100 may determine a processing order of the third coding units 720a and 720b determined by splitting the left second coding unit 710a, independently of the right second coding unit 710b. Because the third coding units 720a and 720b are determined by splitting the left second coding unit 710a in a horizontal direction, the third coding units 720a and 720b may be processed in a vertical direction order 720c. Because the left and right second coding units 710a and 710b are processed in the horizontal direction order 710c, the right second coding unit 710b may be processed after the third coding units 720a and 720b included in the left second coding unit 710a are processed in the vertical direction order 720c. An operation of determining a processing order of coding units based on a coding unit before being split is not limited to the above-described example, and various methods may be used to independently process coding units, which are split and determined to various shapes, in a preset order.

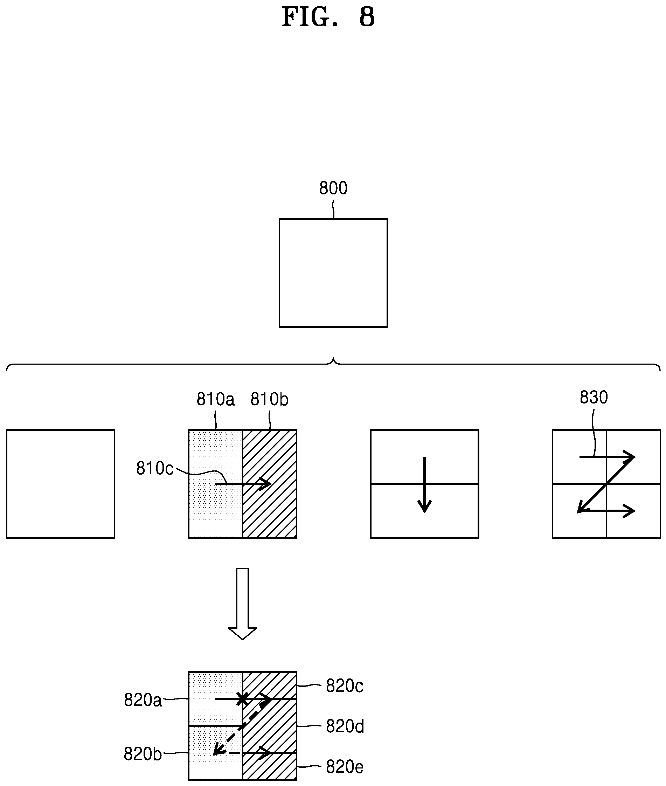

FIG. 8 illustrates a process, performed by the image decoding apparatus 100, of determining that a current coding unit is to be split into an odd number of coding units, when the coding units are not processable in a preset order, according to an embodiment.

According to an embodiment, the image decoding apparatus 100 may determine that the current coding unit is to be split into an odd number of coding units, based on obtained split shape mode information. Referring to FIG. 8, a square first coding unit 800 may be split into non-square second coding units 810a and 810b, and the second coding units 810a and 810b may be independently split into third coding units 820a and 820b, and 820c, 820d, and 820e. According to an embodiment, the image decoding apparatus 100 may determine the plurality of third coding units 820a and 820b by splitting the left second coding unit 810a in a horizontal direction, and may split the right second coding unit 810b into the odd number of third coding units 820c, 820d, and 820e.

According to an embodiment, the video decoding apparatus 100 may determine whether any coding unit is split into an odd number of coding units, by determining whether the third coding units 820a and 820b, and 820c, 820d, and 820e are processable in a preset order. Referring to FIG. 8, the image decoding apparatus 100 may determine the third coding units 820a and 820b, and 820c, 820d, and 820e by recursively splitting the first coding unit 800. The image decoding apparatus 100 may determine whether any of the first coding unit 800, the second coding units 810a and 810b, or the third coding units 820a and 820b, and 820c, 820d, and 820e are split into an odd number of coding units, based on at least one of the block shape information and the split shape mode information. For example, a coding unit located in the right from among the second coding units 810a and 810b may be split into an odd number of third coding units 820c, 820d, and 820e. A processing order of a plurality of coding units included in the first coding unit 800 may be a preset order (e.g., a Z-scan order 830), and the image decoding apparatus 100 may determine whether the third coding units 820c, 820d, and 820e, which are determined by splitting the right second coding unit 810b into an odd number of coding units, satisfy a condition for processing in the preset order.

According to an embodiment, the image decoding apparatus 100 may determine whether the third coding units 820a and 820b, and 820c, 820d, and 820e included in the first coding unit 800 satisfy the condition for processing in the preset order, and the condition relates to whether at least one of a width and height of the second coding units 810a and 810b is to be split in half along a boundary of the third coding units 820a and 820b, and 820c, 820d, and 820e. For example, the third coding units 820a and 820b determined when the height of the left second coding unit 810a of the non-square shape is split in half may satisfy the condition. It may be determined that the third coding units 820c, 820d, and 820e do not satisfy the condition because the boundaries of the third coding units 820c, 820d, and 820e determined when the right second coding unit 810b is split into three coding units are unable to split the width or height of the right second coding unit 810b in half. When the condition is not satisfied as described above, the image decoding apparatus 100 may determine disconnection of a scan order, and may determine that the right second coding unit 810b is to be split into an odd number of coding units, based on a result of the determination. According to an embodiment, when a coding unit is split into an odd number of coding units, the image decoding apparatus 100 may put a preset restriction on a coding unit at a preset location from among the split coding units. The restriction or the preset location has been described above in relation to various embodiments, and thus detailed descriptions thereof will not be provided herein.

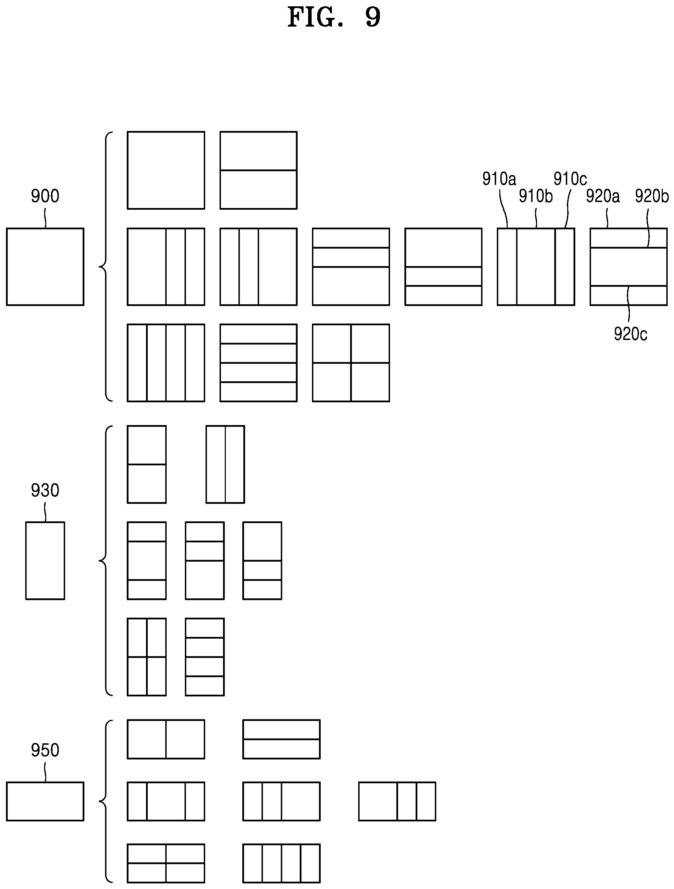

FIG. 9 illustrates a process, performed by the image decoding apparatus 100, of determining at least one coding unit by splitting a first coding unit 900, according to an embodiment.

According to an embodiment, the image decoding apparatus 100 may split the first coding unit 900, based on split shape mode information, which is obtained through the bitstream obtainer 110. The square first coding unit 900 may be split into four square coding units, or may be split into a plurality of non-square coding units. For example, referring to FIG. 9, when the first coding unit 900 has a square shape and the split shape mode information indicates to split the first coding unit 900 into non-square coding units, the image decoding apparatus 100 may split the first coding unit 900 into a plurality of non-square coding units. In detail, when the split shape mode information indicates to determine an odd number of coding units by splitting the first coding unit 900 in a horizontal direction or a vertical direction, the image decoding apparatus 100 may split the square first coding unit 900 into an odd number of coding units, e.g., second coding units 910a, 910b, and 910c determined by splitting the square first coding unit 900 in a vertical direction or second coding units 920a, 920b, and 920c determined by splitting the square first coding unit 900 in a horizontal direction.

According to an embodiment, the image decoding apparatus 100 may determine whether the second coding units 910a, 910b, 910c, 920a, 920b, and 920c included in the first coding unit 900 satisfy a condition for processing in a preset order, and the condition relates to whether at least one of a width and height of the first coding unit 900 is to be split in half along a boundary of the second coding units 910a, 910b, 910c, 920a, 920b, and 920c. Referring to FIG. 9, because boundaries of the second coding units 910a, 910b, and 910c determined by splitting the square first coding unit 900 in a vertical direction do not split the width of the first coding unit 900 in half, it may be determined that the first coding unit 900 does not satisfy the condition for processing in the preset order. Also, because boundaries of the second coding units 920a, 920b, and 920c determined by splitting the square first coding unit 900 in a horizontal direction do not split the height of the first coding unit 900 in half, it may be determined that the first coding unit 900 does not satisfy the condition for processing in the preset order. When the condition is not satisfied as described above, the image decoding apparatus 100 may decide disconnection of a scan order, and may determine that the first coding unit 900 is to be split into an odd number of coding units, based on a result of the decision. According to an embodiment, when a coding unit is split into an odd number of coding units, the image decoding apparatus 100 may put a preset restriction on a coding unit at a preset location from among the split coding units. The restriction or the preset location has been described above in relation to various embodiments, and thus detailed descriptions thereof will not be provided herein.

According to an embodiment, the image decoding apparatus 100 may determine various-shaped coding units by splitting a first coding unit.

Referring to FIG. 9, the image decoding apparatus 100 may split the square first coding unit 900 or a non-square first coding unit 930 or 950 into various-shaped coding units.

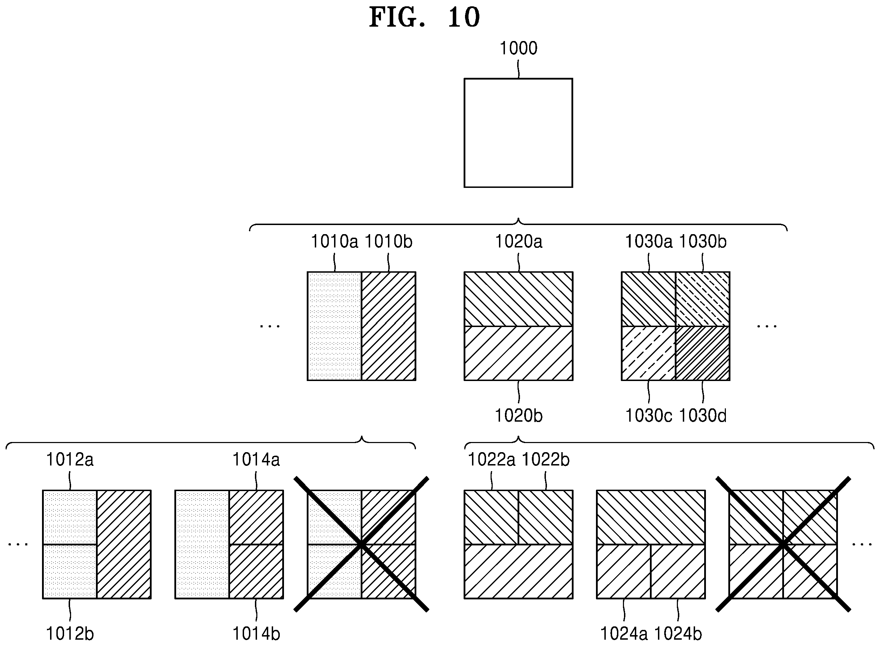

FIG. 10 illustrates that a shape into which a second coding unit is splittable is restricted when the second coding unit having a non-square shape, which is determined when the image decoding apparatus 100 splits a first coding unit 1000, satisfies a preset condition, according to an embodiment.

According to an embodiment, the image decoding apparatus 100 may determine to split the square first coding unit 1000 into non-square second coding units 1010a, and1010b or 1020a and 1020b, based on split shape mode information, which is obtained by the bitstream obtainer 110. The second coding units 1010a and 1010b, or 1020a and 1020b may be independently split. As such, the image decoding apparatus 100 may determine to split or to not split each of the second coding units 1010a and 1010b, or 1020a and 1020b into a plurality of coding units, based on the split shape mode information of each of the second coding units 1010a and 1010b, or 1020a and 1020b. According to an embodiment, the image decoding apparatus 100 may determine third coding units 1012a and 1012b by splitting the non-square left second coding unit 1010a, which is determined by splitting the first coding unit 1000 in a vertical direction, in a horizontal direction. However, when the left second coding unit 1010a is split in a horizontal direction, the image decoding apparatus 100 may restrict the right second coding unit 1010b to not be split in a horizontal direction in which the left second coding unit 1010a is split. When third coding units 1014a and 1014b are determined by splitting the right second coding unit 1010b in a same direction, because the left and right second coding units 1010a and 1010b are independently split in a horizontal direction, the third coding units 1012a and 1012b, or 1014a and 1014b may be determined. However, this case serves equally as a case in which the image decoding apparatus 100 splits the first coding unit 1000 into four square second coding units 1030a, 1030b, 1030c, and 1030d, based on the split shape mode information, and may be inefficient in terms of image decoding.

According to an embodiment, the image decoding apparatus 100 may determine third coding units 1022a and 1022b, or 1024a and 1024b by splitting the non-square second coding unit 1020a or 1020b, which is determined by splitting the first coding unit 1000 in a horizontal direction, in a vertical direction. However, when a second coding unit (e.g., the upper second coding unit 1020a) is split in a vertical direction, for the above-described reason, the image decoding apparatus 100 may restrict the other second coding unit (e.g., the lower second coding unit 1020b) to not be split in a vertical direction in which the upper second coding unit 1020a is split.

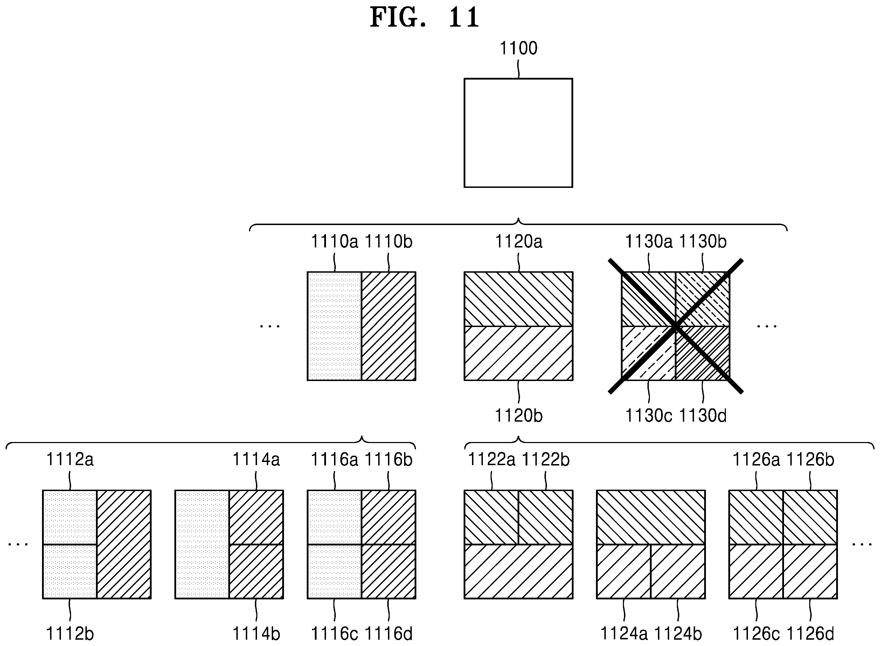

FIG. 11 illustrates a process, performed by the image decoding apparatus 100, of splitting a square coding unit when split shape mode information indicates that the square coding unit is to not be split into four square coding units, according to an embodiment.

According to an embodiment, the image decoding apparatus 100 may determine second coding units 1110a and 1110b, or 1120a and 1120b, etc. by splitting a first coding unit 1100, based on split shape mode information. The split shape mode information may include information about various methods of splitting a coding unit, but the information about various splitting methods may not include information for splitting a coding unit into four square coding units. According to such split shape mode information, the image decoding apparatus 100 may not split the square first coding unit 1100 into four square second coding units 1130a, 1130b, 1130c, and 1130d. The image decoding apparatus 100 may determine the non-square second coding units 1110a and 1110b, or 1120a and 1120b, etc., based on the split shape mode information.

According to an embodiment, the image decoding apparatus 100 may independently split the non-square second coding units 1110a and 1110b, or 1120a and 1120b, etc. Each of the second coding units 1110a and 1110b, or 1120a and 1120b, etc. may be recursively split in a preset order, and this splitting method may correspond to a method of splitting the first coding unit 1100, based on the split shape mode information.

For example, the image decoding apparatus 100 may determine square third coding units 1112a and 1112b by splitting the left second coding unit 1110a in a horizontal direction, and may determine square third coding units 1114a and 1114b by splitting the right second coding unit 1110b in a horizontal direction. Furthermore, the image decoding apparatus 100 may determine square third coding units 1116a, 1116b, 1116c, and 1116d by splitting both of the left and right second coding units 1110a and 1110b in a horizontal direction. In this case, coding units having the same shape as the four square second coding units 1130a, 1130b, 1130c, and 1130d split from the first coding unit 1100 may be determined.

As another example, the image decoding apparatus 100 may determine square third coding units 1122a and 1122b by splitting the upper second coding unit 1120a in a vertical direction, and may determine square third coding units 1124a and 1124b by splitting the lower second coding unit 1120b in a vertical direction. Furthermore, the image decoding apparatus 100 may determine square third coding units 1126a, 1126b, 1126c, and 1126d by splitting both the upper and lower second coding units 1120a and 1120b in a vertical direction. In this case, coding units having the same shape as the four square second coding units 1130a, 1130b, 1130c, and 1130d split from the first coding unit 1100 may be determined.

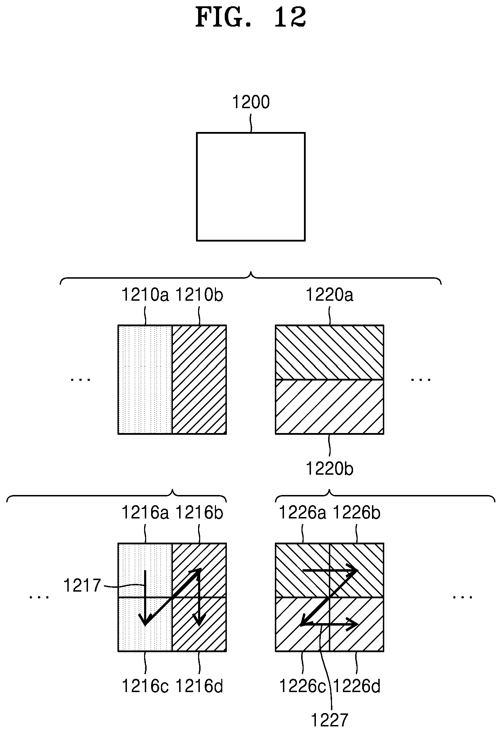

FIG. 12 illustrates that a processing order between a plurality of coding units may be changed depending on a process of splitting a coding unit, according to an embodiment.

According to an embodiment, the image decoding apparatus 100 may split a first coding unit 1200, based on split shape mode information. When a block shape indicates a square shape and the split shape mode information indicates to split the first coding unit 1200 in at least one of horizontal and vertical directions, the image decoding apparatus 100 may determine second coding units 1210a and 1210b, or 1220a and 1220b, etc. by splitting the first coding unit 1200. Referring to FIG. 12, the non-square second coding units 1210a and 1210b, or 1220a and 1220b determined by splitting the first coding unit 1200 in only a horizontal direction or vertical direction may be independently split based on the split shape mode information of each coding unit. For example, the image decoding apparatus 100 may determine third coding units 1216a, 1216b, 1216c, and 1216d by splitting the second coding units 1210a and 1210b, which are generated by splitting the first coding unit 1200 in a vertical direction, in a horizontal direction, and may determine third coding units 1226a, 1226b, 1226c, and 1226d by splitting the second coding units 1220a and 1220b, which are generated by splitting the first coding unit 1200 in a horizontal direction, in a vertical direction. An operation of splitting the second coding units 1210a and 1210b, or 1220a and 1220b has been described above in relation to FIG. 11, and thus detailed descriptions thereof will not be provided herein.

According to an embodiment, the image decoding apparatus 100 may process coding units in a preset order. An operation of processing coding units in a preset order has been described above in relation to FIG. 7, and thus detailed descriptions thereof will not be provided herein. Referring to FIG. 12, the image decoding apparatus 100 may determine four square third coding units 1216a, 1216b, 1216c, and 1216d, and 1226a, 1226b, 1226c, and 1226d by splitting the square first coding unit 1200. According to an embodiment, the image decoding apparatus 100 may determine processing orders of the third coding units 1216a, 1216b, 1216c, and 1216d, and 1226a, 1226b, 1226c, and 1226d based on a split shape by which the first coding unit 1200 is split.

According to an embodiment, the image decoding apparatus 100 may determine the third coding units 1216a, 1216b, 1216c, and 1216d by splitting the second coding units 1210a and 1210b generated by splitting the first coding unit 1200 in a vertical direction, in a horizontal direction, and may process the third coding units 1216a, 1216b, 1216c, and 1216d in a processing order 1217 for initially processing the third coding units 1216a and 1216c, which are included in the left second coding unit 1210a, in a vertical direction and then processing the third coding unit 1216b and 1216d, which are included in the right second coding unit 1210b, in a vertical direction.

According to an embodiment, the image decoding apparatus 100 may determine the third coding units 1226a, 1226b, 1226c, and 1226d by splitting the second coding units 1220a and 1220b generated by splitting the first coding unit 1200 in a horizontal direction, in a vertical direction, and may process the third coding units 1226a, 1226b, 1226c, and 1226d in a processing order 1227 for initially processing the third coding units 1226a and 1226b, which are included in the upper second coding unit 1220a, in a horizontal direction and then processing the third coding unit 1226c and 1226d, which are included in the lower second coding unit 1220b, in a horizontal direction.

Referring to FIG. 12, the square third coding units 1216a, 1216b, 1216c, and 1216d, and 1226a, 1226b, 1226c, and 1226d may be determined by splitting the second coding units 1210a and 1210b, and 1220a and 1220b, respectively. Although the second coding units 1210a and 1210b are determined by splitting the first coding unit 1200 in a vertical direction differently from the second coding units 1220a and 1220b which are determined by splitting the first coding unit 1200 in a horizontal direction, the third coding units 1216a, 1216b, 1216c, and 1216d, and 1226a, 1226b, 1226c, and 1226d split therefrom eventually show same-shaped coding units split from the first coding unit 1200. As such, by recursively splitting a coding unit in different manners based on the split shape mode information, the image decoding apparatus 100 may process a plurality of coding units in different orders even when the coding units are eventually determined to be the same shape.

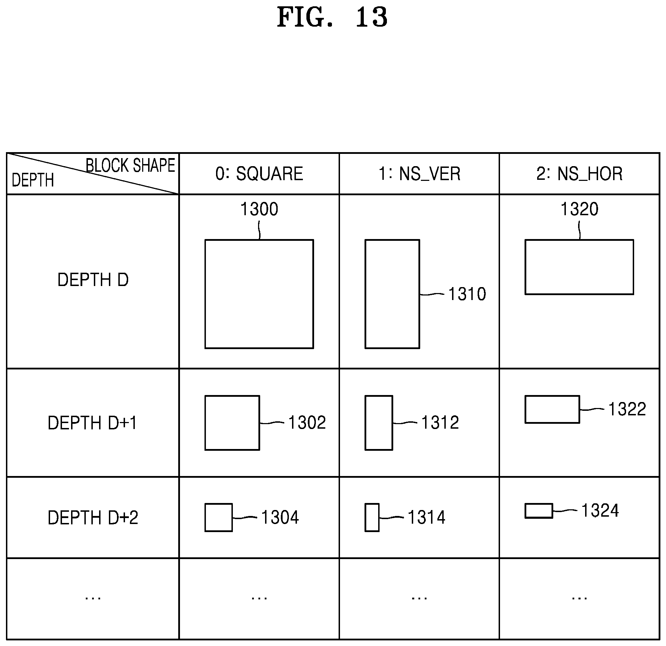

FIG. 13 illustrates a process of determining a depth of a coding unit as a shape and size of the coding unit change, when the coding unit is recursively split such that a plurality of coding units are determined, according to an embodiment.

According to an embodiment, the image decoding apparatus 100 may determine the depth of the coding unit, based on a preset criterion. For example, the preset criterion may be the length of a long side of the coding unit. When the length of a long side of a coding unit before being split is 2n times (n>0) the length of a long side of a split current coding unit, the image decoding apparatus 100 may determine that a depth of the current coding unit is increased from a depth of the coding unit before being split, by n. In the following descriptions, a coding unit having an increased depth is expressed as a coding unit of a lower depth.

Referring to FIG. 13, according to an embodiment, the image decoding apparatus 100 may determine a second coding unit 1302 and a third coding unit 1304 of lower depths by splitting a square first coding unit 1300 based on block shape information indicating a square shape (e.g., the block shape information may be expressed as '0: SQUARE'). Assuming that the size of the square first coding unit 1300 is $2N \times 2N$, the second coding unit 1302 determined by splitting a width and height of the first coding unit 1300 in 1/2 may have a size of $N \times N$. Furthermore, the third coding unit 1304 determined by splitting a width and height of the second coding unit 1302 in 1/2 may have a size of $N/2 \times N/2$. In this case, a width and height of the third coding unit 1304 are 1/4 times those of the first coding unit 1300. When a depth of the first coding unit 1300 is D, a depth of the second coding unit 1302, the width and height of which are 1/2 times those of the first coding unit 1300, may be D+1, and a depth of the third coding unit 1304, the width and height of which are 1/4 times those of the first coding unit 1300, may be D+2.

According to an embodiment, the image decoding apparatus 100 may determine a second coding unit 1312 or 1322 and a third coding unit 1314 or 1324 of lower depths by splitting a non-square first coding unit 1310 or 1320 based on block shape information indicating a non-square shape (e.g., the block shape information may be expressed as '1: NS_VER' indicating a non-square shape, a height of which is longer than a width, or as '2: NS_HOR' indicating a non-square shape, a width of which is longer than a height).

The image decoding apparatus 100 may determine a second coding unit 1302, 1312, or 1322 by splitting at least one of a width and height of the first coding unit 1310 having a size of $N \times 2N$. That is, the image decoding apparatus 100 may determine the second coding unit 1302 having a size of $N \times N$ or the second coding unit 1322 having a size of $N \times N/2$ by splitting the first coding unit 1310 in a horizontal direction, or may determine the second coding unit 1312 having a size of $N/2 \times N$ by splitting the first coding unit 1310 in horizontal and vertical directions.

According to an embodiment, the image decoding apparatus 100 may determine the second coding unit 1302, 1312, or 1322 by splitting at least one of a width and height of the first coding unit 1320 having a size of $2N \times N$. That is, the image decoding apparatus 100 may determine the second coding unit 1302 having a size of $N \times N$ or the second coding unit 1312 having a size of $N/2 \times N$ by splitting the first coding unit 1320 in a vertical direction, or may determine the second coding unit 1322 having a size of $N \times N/2$ by splitting the first coding unit 1320 in horizontal and vertical directions.

According to an embodiment, the image decoding apparatus 100 may determine a third coding unit 1304, 1314, or 1324 by splitting at least one of a width and height of the second coding unit 1302 having a size of $N \times N$. That is, the image decoding apparatus 100 may determine the third coding unit 1304 having a size of $N/2 \times N/2$, the third coding unit 1314 having a size of $N/4 \times N/2$, or the third coding unit 1324 having a size of $N/2 \times N/4$ by splitting the second coding unit 1302 in vertical and horizontal directions.

According to an embodiment, the image decoding apparatus 100 may determine the third coding unit 1304, 1314, or 1324 by splitting at least one of a width and height of the second coding unit 1312 having a size of $N/2 \times N$. That is, the image decoding apparatus 100 may determine the third coding unit 1304 having a size of $N/2 \times N/2$ or the third coding unit 1324 having a size of N/2×N/4 by splitting the second coding unit 1312 in a horizontal direction, or may determine the third coding unit 1314 having a size of N/4×N/2 by splitting the second coding unit 1312 in vertical and horizontal directions.

According to an embodiment, the image decoding apparatus 100 may determine the third coding unit 1304, 1314, or 1324 by splitting at least one of a width and height of the second coding unit 1322 having a size of N×N/2. That is, the image decoding apparatus 100 may determine the third coding unit 1304 having a size of N/2×N/2 or the third coding unit 1314 having a size of N/4×N/2 by splitting the second coding unit 1322 in a vertical direction, or may determine the third coding unit 1324 having a size of N/2×N/4 by splitting the second coding unit 1322 in vertical and horizontal directions.

According to an embodiment, the image decoding apparatus 100 may split the square coding unit 1300, 1302, or 1304 in a horizontal or vertical direction. For example, the image decoding apparatus 100 may determine the first coding unit 1310 having a size of N×2N by splitting the first coding unit 1300 having a size of 2N×2N in a vertical direction, or may determine the first coding unit 1320 having a size of 2N×N by splitting the first coding unit 1300 in a horizontal direction. According to an embodiment, when a depth is determined based on the length of the longest side of a coding unit, a depth of a coding unit determined by splitting the first coding unit 1300 having a size of 2N×2N in a horizontal or vertical direction may be the same as the depth of the first coding unit 1300.

According to an embodiment, a width and height of the third coding unit 1314 or 1324 may be 1/4 times those of the first coding unit 1310 or 1320. When a depth of the first coding unit 1310 or 1320 is D, a depth of the second coding unit 1312 or 1322, the width and height of which are 1/2 times those of the first coding unit 1310 or 1320, may be D+1, and a depth of the third coding unit 1314 or 1324, the width and height of which are 1/4 times those of the first coding unit 1310 or 1320, may be D+2.

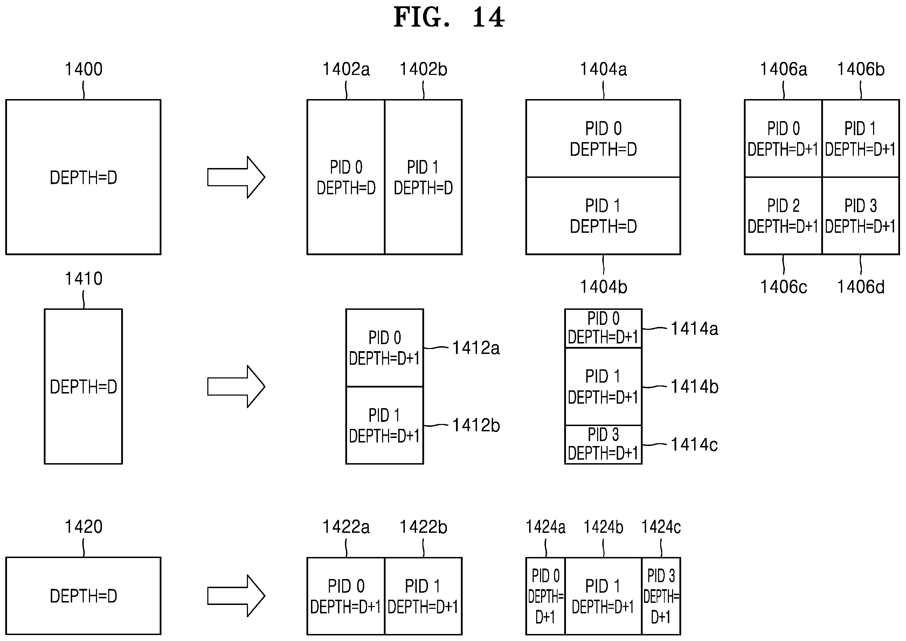

FIG. 14 illustrates depths that are determinable based on shapes and sizes of coding units, and part indexes (PIDs) for distinguishing the coding units, according to an embodiment.

According to an embodiment, the image decoding apparatus 100 may determine various-shape second coding units by splitting a square first coding unit 1400. Referring to FIG. 14, the image decoding apparatus 100 may determine second coding units 1402a and 1402b, 1404a and 1404b, and 1406a, 1406b, 1406c, and 1406d by splitting the first coding unit 1400 in at least one of vertical and horizontal directions based on split shape mode information. That is, the image decoding apparatus 100 may determine the second coding units 1402a and 1402b, 1404a and 1404b, and 1406a, 1406b, 1406c, and 1406d, based on the split shape mode information of the first coding unit 1400.

According to an embodiment, depths of the second coding units 1402a and 1402b, 1404a and 1404b, and 1406a, 1406b, 1406c, and 1406d that are determined based on the split shape mode information of the first coding unit 1400 having a square shape may be determined based on the length of a long side thereof. For example, because the length of a side of the first coding unit 1400 having a square shape equals the length of a long side of the non-square second coding units 1402a and 1402b, and 1404a and 1404b, the first coding unit 1400 and the second coding units 1402a and 1402b, and 1404a and 1404b each having a non-square shape may have the same depth, e.g., D. However, when the image decoding apparatus 100 splits the first coding unit 1400 into the four square second coding units 1406a, 1406b, 1406c, and 1406d based on the split shape mode information, because the length of a side of the square second coding units 1406a, 1406b, 1406c, and 1406d is 1/2 times the length of a side of the first coding unit 1400, a depth of the second coding units 1406a, 1406b, 1406c, and 1406d may be D+1 which is deeper than the depth D of the first coding unit 1400 by 1.

According to an embodiment, the image decoding apparatus 100 may determine a plurality of second coding units 1412a and 1412b, and 1414a, 1414b, and 1414c by splitting a first coding unit 1410, a height of which is longer than a width, in a horizontal direction based on the split shape mode information. According to an embodiment, the image decoding apparatus 100 may determine a plurality of second coding units 1422a and 1422b, and 1424a, 1424b, and 1424c by splitting a first coding unit 1420, a width of which is longer than a height, in a vertical direction based on the split shape mode information.

According to an embodiment, a depth of the second coding units 1412a and 1412b, and 1414a, 1414b, and 1414c, or 1422a and 1422b, and 1424a, 1424b, and 1424c, which are determined based on the split shape mode information of the non-square first coding unit 1410 or 1420, may be determined based on the length of a long side thereof. For example, because the length of a side of the square second coding units 1412a and 1412b is 1/2 times the length of a long side of the first coding unit 1410 having a non-square shape, a height of which is longer than a width, a depth of the square second coding units 1412a and 1412b is D+1 which is lower than the depth D of the non-square first coding unit 1410 by 1.

Furthermore, the image decoding apparatus 100 may split the non-square first coding unit 1410 into an odd number of second coding units 1414a, 1414b, and 1414c based on the split shape mode information. The odd number of second coding units 1414a, 1414b, and 1414c may include the non-square second coding units 1414a and 1414c and the square second coding unit 1414b. In this case, because the length of a long side of the non-square second coding units 1414a and 1414c and the length of a side of the square second coding unit 1414b are 1/2 times the length of a long side of the first coding unit 1410, a depth of the second coding units 1414a, 1414b, and 1414c may be D+1 which is lower than the depth D of the non-square first coding unit 1410 by 1. The image decoding apparatus 100 may determine depths of coding units split from the first coding unit 1420 having a non-square shape, a width of which is longer than a height, by using the above-described method of determining depths of coding units split from the first coding unit 1410.

According to an embodiment, the image decoding apparatus 100 may determine PIDs for identifying split coding units, based on a size ratio between the coding units when an odd number of split coding units do not have equal sizes. Referring to FIG. 14, a coding unit 1414b of a center location among an odd number of split coding units 1414a, 1414b, and 1414c may have a width equal to that of the other coding units 1414a and 1414c and a height which is two times that of the other coding units 1414a and 1414c. That is, in this case, the coding unit 1414b at the center location may include two of the other coding unit 1414a or 1414c. Therefore, when a PID of the coding unit 1414b at the center location is 1 based on a scan order, a PID of the coding unit 1414c located next to the coding unit 1414b may be increased by 2 and thus may be 3. That is, discontinuity in PID values may be present. According to an embodiment, the image decoding apparatus 100 may determine whether an odd number of split coding units do not have equal sizes, based on whether discontinuity is present in PIDs for identifying the split coding units.

According to an embodiment, the image decoding apparatus 100 may determine whether to use a specific splitting method, based on PID values for identifying a plurality of coding units determined by splitting a current coding unit. Referring to FIG. 14, the image decoding apparatus 100 may determine an even number of coding units 1412a and 1412b or an odd number of coding units 1414a, 1414b, and 1414c by splitting the first coding unit 1410 having a rectangular shape, a height of which is longer than a width. The image decoding apparatus 100 may use PIDs indicating respective coding units so as to identify the respective coding units. According to an embodiment, the PID may be obtained from a sample at a preset location of each coding unit (e.g., an upper-left sample).

According to an embodiment, the image decoding apparatus 100 may determine a coding unit at a preset location from among the split coding units, by using the PIDs for distinguishing the coding units. According to an embodiment, when the split shape mode information of the first coding unit 1410 having a rectangular shape, a height of which is longer than a width, indicates to split a coding unit into three coding units, the image decoding apparatus 100 may split the first coding unit 1410 into three coding units 1414a, 1414b, and 1414c. The image decoding apparatus 100 may assign a PID to each of the three coding units 1414a, 1414b, and 1414c. The image decoding apparatus 100 may compare PIDs of an odd number of split coding units to determine a coding unit at a center location from among the coding units. The image decoding apparatus 100 may determine the coding unit 1414b having a PID corresponding to a middle value among the PIDs of the coding units, as the coding unit at the center location from among the coding units determined by splitting the first coding unit 1410. According to an embodiment, the image decoding apparatus 100 may determine PIDs for distinguishing split coding units, based on a size ratio between the coding units when the split coding units do not have equal sizes. Referring to FIG. 14, the coding unit 1414b generated by splitting the first coding unit 1410 may have a width equal to that of the other coding units 1414a and 1414c and a height which is two times that of the other coding units 1414a and 1414c. In this case, when the PID of the coding unit 1414b at the center location is 1, the PID of the coding unit 1414c located next to the coding unit 1414b may be increased by 2 and thus may be 3. When the PID is not uniformly increased as described above, the image decoding apparatus 100 may determine that a coding unit is split into a plurality of coding units including a coding unit having a size different from that of the other coding units. According to an embodiment, when the split shape mode information indicates to split a coding unit into an odd number of coding units, the image decoding apparatus 100 may split a current coding unit in such a manner that a coding unit of a preset location among an odd number of coding units (e.g., a coding unit of a center location) has a size different from that of the other coding units. In this case, the image decoding apparatus 100 may determine the coding unit of the center location, which has a different size, by using PIDs of the coding units. However, the PIDs and the size or location of the coding unit of the preset location are not limited to the above-described examples, and various PIDs and various locations and sizes of coding units may be used.

According to an embodiment, the image decoding apparatus 100 may use a preset data unit where a coding unit starts to be recursively split.

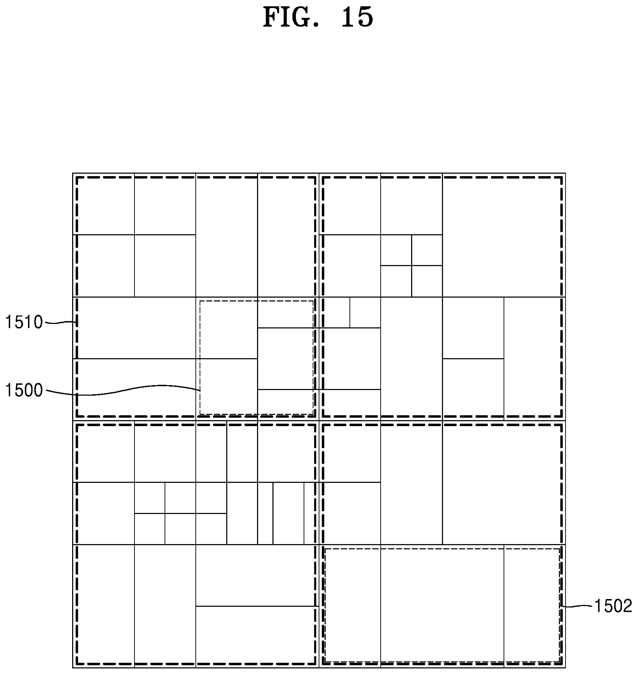

FIG. 15 illustrates that a plurality of coding units are determined based on a plurality of preset data units included in a picture, according to an embodiment.

According to an embodiment, a preset data unit may be defined as a data unit where a coding unit starts to be recursively split by using split shape mode information. That is, the preset data unit may correspond to a coding unit of an uppermost depth, which is used to determine a plurality of coding units split from a current picture. In the following descriptions, for convenience of explanation, the preset data unit is referred to as a reference data unit.

According to an embodiment, the reference data unit may have a preset size and a preset shape. According to an embodiment, a reference data unit may include M×N samples. Herein, M and N may be equal to each other, and may be integers expressed as powers of 2. That is, the reference data unit may have a square or non-square shape, and may be split into an integer number of coding units.

According to an embodiment, the image decoding apparatus 100 may split the current picture into a plurality of reference data units. According to an embodiment, the image decoding apparatus 100 may split the plurality of reference data units, which are split from the current picture, by using the split shape mode information of each reference data unit. The operation of splitting the reference data unit may correspond to a splitting operation using a quadtree structure.

According to an embodiment, the image decoding apparatus 100 may predetermine the minimum size allowed for the reference data units included in the current picture. Accordingly, the image decoding apparatus 100 may determine various reference data units having sizes equal to or greater than the minimum size, and may determine one or more coding units by using the split shape mode information with reference to the determined reference data unit.

Referring to FIG. 15, the image decoding apparatus 100 may use a square reference coding unit 1500 or a non-square reference coding unit 1502. According to an embodiment, the shape and size of reference coding units may be determined based on various data units capable of including one or more reference coding units (e.g., sequences, pictures, slices, slice segments, tiles, tile groups, largest coding units, or the like).

According to an embodiment, the bitstream obtainer 110 of the image decoding apparatus 100 may obtain, from a bitstream, at least one of reference coding unit shape information and reference coding unit size information with respect to each of the various data units. An operation of splitting the square reference coding unit 1500 into one or more coding units has been described above in relation to the operation of splitting the current coding unit 300 of FIG. 3, and an operation of splitting the non-square reference coding unit 1502 into one or more coding units has been described above in relation to the operation of splitting the current coding unit 400 or 450 of FIG. 4. Thus, detailed descriptions thereof will not be provided herein.

According to an embodiment, the image decoding apparatus 100 may use a PID for identifying the size and shape of reference coding units, to determine the size and shape of reference coding units according to some data units predetermined based on a preset condition. That is, the bitstream obtainer 110 may obtain, from the bitstream, only the PID for identifying the size and shape of reference coding units with respect to each slice, slice segment, tile, tile group, or largest coding unit which is a data unit satisfying a preset condition (e.g., a data unit having a size equal to or smaller than a slice) among the various data units (e.g., sequences, pictures, slices, slice segments, tiles, tile groups, largest coding units, or the like). The image decoding apparatus 100 may determine the size and shape of reference data units with respect to each data unit, which satisfies the preset condition, by using the PID. When the reference coding unit shape information and the reference coding unit size information are obtained and used from the bitstream according to each data unit having a relatively small size, efficiency of using the bitstream may not be high, and therefore, only the PID may be obtained and used instead of directly obtaining the reference coding unit shape information and the reference coding unit size information. In this case, at least one of the size and shape of reference coding units corresponding to the PID for identifying the size and shape of reference coding units may be predetermined. That is, the image decoding apparatus 100 may determine at least one of the size and shape of reference coding units included in a data unit serving as a unit for obtaining the PID, by selecting the predetermined at least one of the size and shape of reference coding units based on the PID.

According to an embodiment, the image decoding apparatus 100 may use one or more reference coding units included in a largest coding unit. That is, a largest coding unit split from a picture may include one or more reference coding units, and coding units may be determined by recursively splitting each reference coding unit. According to an embodiment, at least one of a width and height of the largest coding unit may be integer times at least one of the width and height of the reference coding units. According to an embodiment, the size of reference coding units may be obtained by splitting the largest coding unit n times based on a quadtree structure. That is, the image decoding apparatus 100 may determine the reference coding units by splitting the largest coding unit n times based on a quadtree structure, and may split the reference coding unit based on at least one of the block shape information and the split shape mode information according to various embodiments.

According to an embodiment, the image decoding apparatus 100 may obtain block shape information indicating the shape of a current coding unit or split shape mode information indicating a splitting method of the current coding unit, from the bitstream, and may use the obtained information. The split shape mode information may be included in the bitstream related to various data units. For example, the image decoding apparatus 100 may use the split shape mode information included in a sequence parameter set, a picture parameter set, a video parameter set, a slice header, a slice segment header, a tile header, or a tile group header. Furthermore, the image decoding apparatus 100 may obtain, from the bitstream, a syntax element corresponding to the block shape information or the split shape mode information according to each largest coding unit or each reference coding unit, and may use the obtained syntax element.

Hereinafter, a method of determining a split rule, according to an embodiment of the disclosure will be described in detail.

The image decoding apparatus 100 may determine a split rule of an image. The split rule may be predetermined between the image decoding apparatus 100 and the image encoding apparatus 200. The image decoding apparatus 100 may determine the split rule of the image, based on information obtained from a bitstream. The image decoding apparatus 100 may determine the split rule based on the information obtained from at least one of a sequence parameter set, a picture parameter set, a video parameter set, a slice header, a slice segment header, a tile header, and a tile group header. The image decoding apparatus 100 may determine the split rule differently according to frames, slices, tiles, temporal layers, largest coding units, or coding units.

The image decoding apparatus 100 may determine the split rule based on a block shape of a coding unit. The block shape may include a size, shape, a ratio of width and height, and a direction of the coding unit. The image encoding apparatus 200 and the image decoding apparatus 100 may predetermine to determine the split rule based on the block shape of the coding unit. However, embodiments are not limited thereto. The image decoding apparatus 100 may determine the split rule based on the information obtained from the bitstream received from the image encoding apparatus 200.

The shape of the coding unit may include a square and a non-square. When the lengths of the width and height of the coding unit are the same, the image decoding apparatus 100 may determine the shape of the coding unit to be a square. In addition, when the lengths of the width and height of the coding unit are not the same, the image decoding apparatus 100 may determine the shape of the coding unit to be a non-square.

The size of the coding unit may include various sizes, such as 4x4, 8x4, 4x8, 8x8, 16x4, 16x8, and to 256x256. The size of the coding unit may be classified based on the length of a long side of the coding unit, the length of a short side, or the area. The image decoding apparatus 100 may apply the same split rule to coding units classified as the same group. For example, the image decoding apparatus 100 may classify coding units having the same lengths of the long sides as having the same size. Also, the image decoding apparatus 100 may apply the same split rule to coding units having the same lengths of long sides.

The ratio of the width and height of the coding unit may include 1:2, 2:1, 1:4, 4:1, 1:8, 8:1, 1:16, 16:1, 32:1, 1:32, or the like. Also, a direction of the coding unit may include a horizontal direction and a vertical direction. The horizontal direction may indicate a case in which the length of the width of the coding unit is longer than the length of the height thereof. The vertical direction may indicate a case in which the length of the width of the coding unit is shorter than the length of the height thereof.

The image decoding apparatus 100 may adaptively determine the split rule based on the size of the coding unit. The image decoding apparatus 100 may differently determine an allowable split shape mode based on the size of the coding unit. For example, the image decoding apparatus 100 may determine whether splitting is allowed based on the size of the coding unit. The image decoding apparatus 100 may determine a split direction according to the size of the coding unit. The image decoding apparatus 100 may determine an allowable split type according to the size of the coding unit.

The split rule determined based on the size of the coding unit may be a split rule pre-determined between the image encoding apparatus 200 and the image decoding apparatus 100. Also, the image decoding apparatus 100 may determine the split rule based on the information obtained from the bitstream.

The image decoding apparatus 100 may adaptively determine the split rule based on a location of the coding unit. The image decoding apparatus 100 may adaptively determine the split rule based on the location of the coding unit in the image.

Also, the image decoding apparatus 100 may determine the split rule such that coding units generated via different splitting paths do not have the same block shape. However, an embodiment is not limited thereto, and the coding units generated via different splitting paths have the same block shape. The coding units generated via the different splitting paths may have different decoding processing orders. Because the decoding processing orders is described above with reference to FIG. 12, details thereof are not provided again.

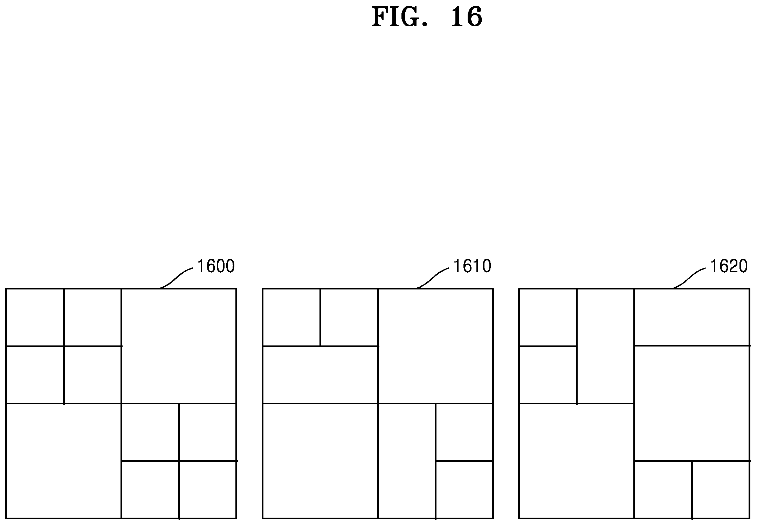

FIG. 16 illustrates coding units of individual pictures, when the individual pictures have different split shape combinations of coding units, according to an embodiment.

Referring to FIG. 16, the image decoding apparatus 100 may determine different split shape combinations of coding units for individual pictures. For example, the image decoding apparatus 100 may decode an image by using a picture 1600 that can be split into four coding units, a picture 1610 that can be split into two or four coding units, and a picture 1620 that can be split into two, three, or four coding units, among at least one picture included in the image. The image decoding apparatus 100 may use only split shape information indicating splitting into four square coding units, in order to split the picture 1600 into a plurality of coding units. The image decoding apparatus 100 may use only split shape information indicating splitting into two or four coding units, in order to split the picture 1610. The image decoding apparatus 100 may use only split shape information indicating splitting into two, three, or four coding units, in order to split the picture 1620. The above-described split shape combinations are embodiments for describing operations of the image decoding apparatus 100, and therefore, the above-described split shape combinations should not be interpreted to be limited to the above-described embodiments. It should be interpreted that various split shape combinations can be used for each preset data unit.

According to an embodiment, the bitstream obtainer 110 of the image decoding apparatus 100 may obtain a bitstream including an index representing a combination of split shape information for each preset data unit (for example, a sequence, a picture, a slice, a slice segment, a tile, a tile group, etc.). For example, the bitstream obtainer 110 may obtain an index representing a combination of split shape information from a sequence parameter set, a picture parameter set, a slice header, a tile header, or a tile group header. The bitstream obtainer 110 of the image decoding apparatus 100 may use the obtained index to determine a split shape combination into which coding units can be split for each preset data unit, and accordingly, the bitstream obtainer 110 may use different split shape combinations for individual preset data units.

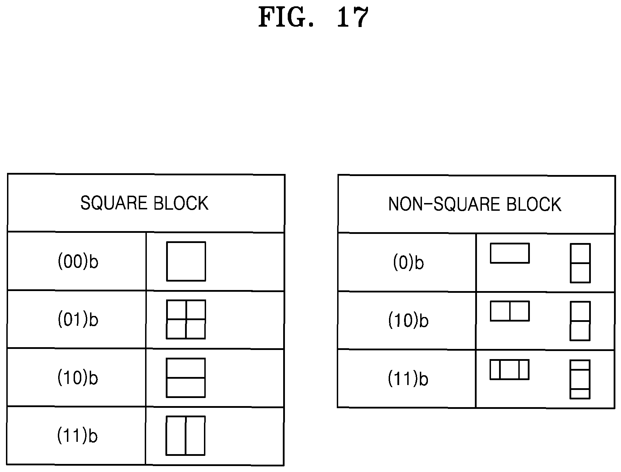

FIG. 17 illustrates various shapes of coding units that can be determined based on split shape mode information that can be expressed with a binary code, according to an embodiment.

According to an embodiment, the image decoding apparatus 100 may split coding units into various shapes by using block shape information and split shape mode information obtained through the bitstream obtainer 110. Shapes into which coding units can be split may be various shapes including shapes described above through the embodiments.

Referring to FIG. 17, the image decoding apparatus 100 may split a coding unit having a square shape in at least one direction of a horizontal direction and a vertical direction, and a coding unit having a non-square shape in the horizontal direction or the vertical direction, based on split shape mode information.

According to an embodiment, when the image decoding apparatus 100 can split a coding unit having a square shape in the horizontal direction and the vertical direction to determine four square coding units, split shape mode information of a square coding unit may represent four split shapes. According to an embodiment, the split shape mode information may be expressed with a binary code of 2 digits, and each split shape may be assigned a binary code. For example, when a coding unit is not split, split shape mode information may be expressed as (00)b, when a coding unit is split in the horizontal direction and the vertical direction, split shape mode information may be expressed as (01)b, when a coding unit is split in the horizontal direction, split shape mode information may be expressed as (10)b, and when a coding unit is split in the vertical direction, split shape mode information may be expressed as (11)b.

According to an embodiment, when the image decoding apparatus 100 splits a coding unit having a non-square shape in the horizontal direction or the vertical direction, kinds of split shapes that can be represented by split shape mode information may depend on the number of coding units into which the coding unit is to be split. Referring to FIG. 17, the image decoding apparatus 100 may split a coding unit having a non-square shape up to three, according to an embodiment. Also, the image decoding apparatus 100 may split a coding unit into two coding units. In this case, split shape mode information may be expressed as (10)b. The image decoding apparatus 100 may split a coding unit into three coding units. In this case, split shape mode information may be expressed as (11)b. The image decoding apparatus 100 may determine not to split a coding unit. In this case, split shape mode information may be expressed as (0)b. That is, the image decoding apparatus 100 may use Variable Length Coding (VLC), instead of Fixed Length Coding (FLC), in order to use a binary code representing split shape mode information.

According to an embodiment, referring to FIG. 17, a binary code of split shape mode information representing that a coding unit is not split may be expressed as (0)b. In the case in which a binary code of split shape mode information representing that a coding unit is not split is set to (00)b, a binary code of split shape mode information of 2 bits may need to be all used although there is no split shape mode information set to (01)b. However, in the case in which three split shapes of a coding unit having a non-square shape are used, as shown in FIG. 17, the image decoding apparatus 100 may determine that a coding unit is not split by using a binary code (0)b of 1 bit as split shape mode information, thereby efficiently using a bitstream. However, split shapes of a coding unit having a non-square shape, which are represented by split shape mode information, should be not interpreted to be limited to three shapes shown in FIG. 17, and should be interpreted to be various shapes including the above-described embodiments.

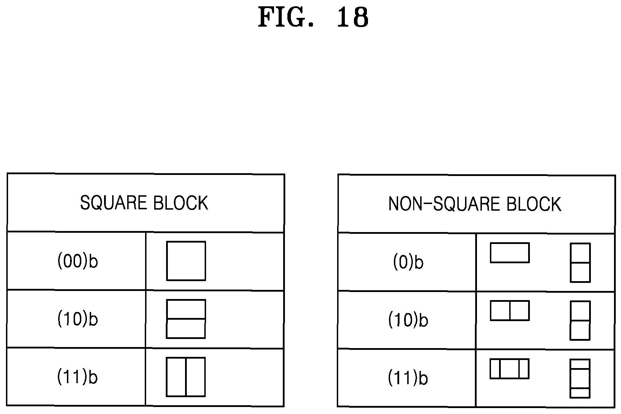

FIG. 18 illustrates other shapes of coding units that can be determined based on split shape mode information that can be represented with a binary code, according to an embodiment.

Referring to FIG. 18, the image decoding apparatus 100 may split a coding unit having a square shape in the horizontal direction or the vertical direction, and a coding unit having a non-square shape in the horizontal direction or the vertical direction, based on split shape mode information. That is, the split shape mode information may indicate splitting a coding unit having a square shape in one direction. In this case, a binary code of split shape mode information representing that a coding unit having a square shape is not split may be expressed as (0)b. In the case in which a binary code of split shape mode information representing that a coding unit is not split is set to (00)b, a binary code of split shape mode information of 2 bits may need to be all used although there is no split shape mode information set to (01)b. However, in the case in which three split shapes of a coding unit having a square shape are used, as shown in FIG. 18, the image decoding apparatus 100 may determine that a coding unit is not split by using a binary code (0)b of 1 bit as split shape mode information, thereby efficiently using a bitstream. However, split shapes of a coding unit having a square shape, which are represented by split shape mode information, should be not interpreted to be limited to three shapes shown in FIG. 18, and should be interpreted to be various shapes including the above-described embodiments.

According to an embodiment, block shape information or split shape mode information may be expressed by using a binary code, and the block shape information or split shape mode information may be generated directly as a bitstream. Also, block shape information or split shape mode information that can be expressed with a binary code may be used as an input binary code in context adaptive binary arithmetic coding (CABAC), instead of being generated directly as a bitstream.

A process in which the image decoding apparatus 100 obtains a syntax for block shape information or split shape mode information through CABAC, according to an embodiment, will be described. The image decoding apparatus 100 may obtain a bitstream including a binary code for the syntax through the bitstream obtainer 110. The image decoding apparatus 100 may inversely binarize a bin string included in the obtained bitstream to detect a syntax element representing block shape information or split shape mode information. According to an embodiment, the image decoding apparatus 100 may obtain a group of binary bin strings corresponding to a syntax element to be decoded, and decode the individual bins by using probability information. The image decoding apparatus 100 may repeat the operation until a bin string configured with the decoded bins is identical to one of previously obtained bin strings. The image decoding apparatus 100 may perform inverse binarization on the bin string to determine a syntax element.

According to an embodiment, the image decoding apparatus 100 may perform a decoding process of adaptive binary arithmetic coding to determine a syntax for the bin string, and the image decoding apparatus 100 may update a probability model for the bins obtained through the bitstream obtainer 110. Referring to FIG. 17, the bitstream obtainer 110 of the image decoding apparatus 100 may obtain a bitstream that represents a binary code representing split shape mode information, according to an embodiment. The image decoding apparatus 100 may determine a syntax for the split shape mode information by using the obtained binary code having a size of 1 or 2 bits. The image decoding apparatus 100 may update a probability for each bit of the binary code of 2 bits, in order to determine the syntax for the split shape mode information. That is, the image decoding apparatus 100 may update, according to which one of 0 or 1 a value of a first bin of the binary code of 2 bits is, a probability that the next bin will have a value of 0 or 1 upon decoding.

According to an embodiment, in the process of determining the syntax, the image decoding apparatus 100 may update probabilities for the bins that are used in a process of decoding the bins of the bin string for the syntax, and the image decoding apparatus 100 may determine that a specific bit of the bin string has the same probability, without updating a probability of the specific bit.

Referring to FIG. 17, in a process of determining a syntax by using a bin string representing split shape mode information of a coding unit having a non-square shape, the image decoding apparatus 100 may determine a syntax for the split shape mode information by using a bin having a value of 0 in the case in which the coding unit having the non-square shape is not split. That is, when block shape information represents that a current coding unit has a non-square shape, a first bin of the bin string for the split shape mode information may be 0 in the case in which the coding unit having the non-square shape is not split, and may be 1 in the case in which the coding unit is split into two or three coding units. Accordingly, a probability that the first bin of the bin string of the split shape mode information of the coding unit having the non-square shape will be 0 may be 1/3, and a probability that the first bin will be 1 may be 2/3. Because split shape mode information representing that a coding unit having a non-square shape is not split can be expressed with a bin string of 1 bit having a value of 0, as described above, the image decoding apparatus 100 may determine, only in the case in which the first bin of the split shape mode information is 1, whether a second bin is 0 or 1 to determine the syntax for the split shape mode information. According to an embodiment, when the first bin for the split shape mode information is 1, the image decoding apparatus 100 may determine that a probability that the second bin will be 0 is equal to a probability that the second bin will be 1, and decode the second bin.

Accordingly, the image decoding apparatus 100 may use, in the process of determining the bins of the bin string for the split shape mode information, various probabilities for the individual bins. According to an embodiment, the image decoding apparatus 100 may determine different probabilities of bins for split shape mode information according to a width of a current coding unit or a length of a longer side of the current coding unit. According to an embodiment, the image decoding apparatus 100 may determine different probabilities of bins for split shape mode information according to an area of a current coding unit or a length of a longer side of the current coding unit. According to an embodiment, the image decoding apparatus 100 may determine different probabilities of bins for split shape mode information according to at least one of a shape of a current coding unit and a length of a longer side of the current coding unit.

According to an embodiment, the image decoding apparatus 100 may determine that probabilities of bins for split shape mode information are the same with respect to coding units that are equal to or larger than a preset size. For example, the image decoding apparatus 100 may determine that probabilities of bins for split shape mode information are the same with respect to coding units of which lengths of longer sides are equal to or greater than 64 samples.

According to an embodiment, the image decoding apparatus 100 may determine initial probabilities for bins constituting a bin string of split shape mode information based on a slice type (for example, an I slice, a P slice, or a B slice).

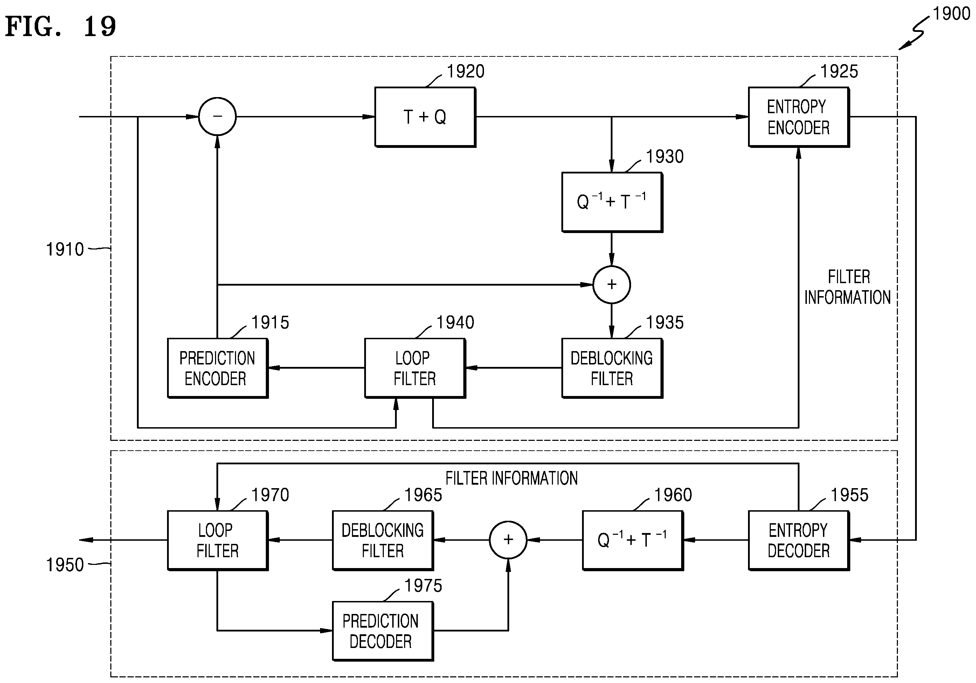

FIG. 19 is a block diagram of an image encoding and decoding system that performs loop filtering.

An encoding end 1910 of an image encoding and decoding system 1900 may transmit an encoded bitstream of an image, and a decoding end 1950 of the image encoding and decoding system 1900 may receive a bitstream and decode the bitstream to output a reconstructed image. Here, the encoding end 1910 may be a configuration that is similar to the image encoding apparatus 200 to be described below, and the decoding end 1950 may be a configuration that is similar to the image decoding apparatus 100.

In the encoding end 1910, a prediction encoder 1915 outputs prediction data through inter prediction and intra prediction, and a transformer and quantizer 1920 outputs a quantized transform coefficient of residual data between the prediction data and a current input image. An entropy encoder 1925 encodes the quantized transform coefficient and outputs the encoded quantized transform coefficient as the bitstream. The quantized transform coefficient is reconstructed into data of a spatial domain via an inverse quantizer and inverse transformer 1930, and the reconstructed data of the spatial domain may be output as a reconstructed image via a deblocking filter 1935 and a loop filter 1940. The reconstructed image may be used as a reference image of a next input image in the prediction encoder 1915.

Encoded image data among the bitstream received by the decoding end 1950 is reconstructed as residual data of a spatial domain via an entropy decoder 1955 and an inverse quantizer and inverse transformer 1960. Image data of a spatial domain may be configured when prediction data output by a prediction decoder 1975 and the residual data are combined, and a deblocking filter 1965 and a loop filter 1970 may output a reconstructed image for a current original image by performing filtering on the image data of the spatial domain. The reconstructed image may be used as a reference image for a next original image by the prediction decoder 1975.

The loop filter 1940 of the encoding end 1910 performs loop filtering by using filter information input according to a user input or system settings. Filter information used by the loop filter 1940 is output to the entropy encoder 1925 and transmitted to the decoding end 1950 along with the encoded image data. The loop filter 1970 of the decoding end 1950 may perform loop filtering based on the filter information input from the decoding end 1950.

Various embodiments described above describe operations related to an image decoding method that is performed by the image decoding apparatus 100. Hereinafter, operations of the image encoding apparatus 200 that performs an image encoding method corresponding to a reverse order of the image decoding method will be described through various embodiments.

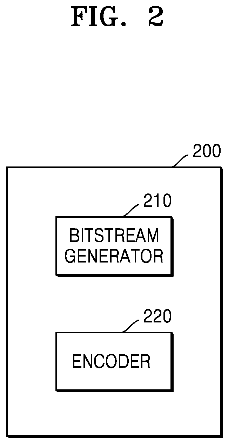

FIG. 2 is a block diagram of the image encoding apparatus 200 capable of encoding an image, based on at least one of block shape information and split shape mode information, according to an embodiment.

The image encoding apparatus 200 may include an encoder 220 and a bitstream generator 210. The encoder 220 may receive an input image and encode the input image. The encoder 220 may encode the input image to obtain at least one syntax element. The syntax element may include at least one of a skip flag, a prediction mode, a motion vector difference, a motion vector prediction method (or index), a transform quantized coefficient, a coded block pattern, a coded block flag, an intra prediction mode, a direct flag, a merge flag, a delta QP, a reference index, a prediction direction, or a transform index. The encoder 220 may determine a context model, based on block shape information including at least one of a shape, a direction, a ratio of a height and a width, or a size of a coding unit.

The bitstream generator 210 may generate a bitstream, based on an encoded input image. For example, the bitstream generator 210 may generate a bitstream by performing entropy encoding on a syntax element based on a context model. The image encoding apparatus 200 may transmit the bitstream to the image decoding apparatus 100.

According to an embodiment, the encoder 220 of the image encoding apparatus 200 may determine a shape of a coding unit. For example, a coding unit may have a square shape or a non-square shape, and information representing such a shape may be included in block shape information.

According to an embodiment, the encoder 220 may determine a shape into which a coding unit is to be split. The encoder 220 may determine a shape of at least one coding unit included in a coding unit, and the bitstream generator 210 may generate a bitstream including split shape mode information including information about the shape of the coding unit.

According to an embodiment, the encoder 220 may determine whether or not to split a coding unit. When the encoder 220 determines that a coding unit includes only one coding unit or that a coding unit is not split, the bitstream generator 210 may generate a bitstream including split shape mode information representing that the coding unit is not split. The encoder 220 may split a coding unit into a plurality of coding units included in the coding unit, and the bitstream generator 210 may generate a bitstream including split shape mode information representing that a coding unit is to be split into a plurality of coding units.

According to an embodiment, information representing the number of coding units into which a coding unit is split or a direction in which the coding unit is split may be included in the split shape mode information. For example, the split shape mode information may represent splitting in at least one direction of a vertical direction and a horizontal direction or may represent non-splitting.

The image encoding apparatus 200 may determine split shape mode information based on a split shape mode of a coding unit. The image encoding apparatus 200 may determine a context model, based on at least one of a shape, a direction, a ratio of a width and a height, or a size of the coding unit. The image encoding apparatus 200 may generate information about a split shape mode for splitting the coding unit as a bitstream based on the context model.

To determine the context model, the image encoding apparatus 200 may obtain an arrangement for making at least one of a shape, a direction, a ratio of a width and a height, or a size of the coding unit correspond to an index for the context model. The image encoding apparatus 200 may obtain the index for the context model, based on at least one of the shape, the direction, the ratio of the width and the height, or the size of the coding unit, from the arrangement. The image encoding apparatus 200 may determine the context model, based on the index for the context model.

To determine the context model, the image encoding apparatus 200 may determine the context model further based on block shape information including at least one of a shape, a direction, a ratio of a width and a height, or a size of a surrounding coding unit adjacent to the coding unit. The surrounding coding unit may include at least one of coding units located on the left-lower side, left side, left-upper side, upper side, right-upper side, right side, or right-lower side of the coding unit.

To determine the context model, the image encoding apparatus 200 may compare a length of a width of an upper surrounding coding unit with a length of the width of the coding unit. The image encoding apparatus 200 may compare lengths of heights of left and right surrounding coding units with a length of the height of the coding unit. The image encoding apparatus 200 may determine the context model, based on results of the comparisons.

Operations of the image encoding apparatus 200 include contents that are similar to those of the image decoding apparatus 100 described above with reference to FIGS. 3 to 19, and therefore, detailed descriptions thereof will be omitted.

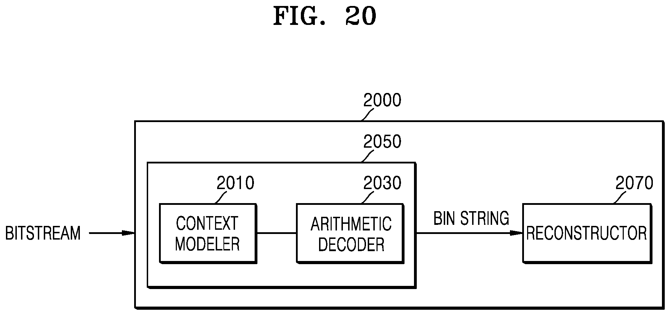

FIG. 20 is a block diagram of a structure of an image decoding apparatus 2000 according to an embodiment.

Referring to FIG. 20, the image decoding apparatus 2000 may include a context modeler 2010, an arithmetic decoder 2030, and a reconstructor 2070.

The context modeler 2010, the arithmetic decoder 2030, and the reconstructor 2070, according to an embodiment, may be implemented as at least one processor. According to an embodiment, the context modeler 2010, the arithmetic decoder 2030, and the reconstructor 2070 may operate according to at least one instruction stored in at least one memory.

The image decoding apparatus 2000 may include at least one memory for storing input/output data of the context modeler 2010, the arithmetic decoder 2030, and the reconstructor 2070. The image decoding apparatus 2000 may also include a memory controller for controlling data input/output of the at least one memory.

According to an embodiment, the context modeler 2010 and the arithmetic decoder 2030 may correspond to the entropy decoder 1955 shown in FIG. 19, and the reconstructor 2070 may correspond to the inverse quantizer and inverse transformer 1960 and the prediction decoder 1975 shown in FIG. 19.

According to an embodiment, an apparatus including the context modeler 2010 and the arithmetic decoder 2030 may be referred to as an entropy decoding apparatus 2050.

The image decoding apparatus 2000 may obtain a bitstream corresponding to a result of image encoding, and reconstruct an image from the bitstream.

According to an embodiment, the image decoding apparatus 2000 may receive the bitstream from an image encoding apparatus through a network.

According to an embodiment, the image decoding apparatus 2000 may obtain the bitstream from a data storage medium including a magnetic medium (such as, a hard disk, a floppy disk, or a magnetic tape), an optical recording medium (such as, CD-ROM or DVD), or a magneto-optical medium (such as, a floptical disk).

According to an embodiment, the bits included in the bitstream may correspond to a result of entropy-encoding bin strings corresponding to syntax elements. The syntax elements may be generated through image encoding.

According to an embodiment, the context modeler 2010 may determine a probability value of each context of the syntax elements, in order to reconstruct bins from the bits included in the bitstream. There may be one or more contexts for each syntax element. The probability value may refer to an occurrence probability of a specific bin (e.g., 0 or 1). According to an embodiment, the probability value may represent a probability value of a symbol (e.g., a least probable symbol (LPS)) with a lower occurrence probability from among 0 or 1.

According to an embodiment, when a syntax element to be currently reconstructed satisfies predetermined conditions, for example, when the syntax element to be currently reconstructed is a first syntax element of an independent slice segment, the context modeler 2010 may determine an initial probability value of each context of the syntax element. A process of determining the initial probability value of each context may be referred to as context initialization. The initial probability value of each context may be updated during bin reconstruction.

According to an embodiment, the context modeler 2010 may obtain information (e.g., ctxldx) indicating specific context by using, for example, the type of syntax element to be currently reconstructed, location information of a bin within a bin string, and information of a neighboring block. The context modeler 2010 may determine the probability value of specific context from among respective probability values of contexts of the syntax element that is to be currently reconstructed, based on the obtained information (e.g., ctxldx).

According to an embodiment, when the probability value of a bin is determined by the context modeler 2010, the arithmetic decoder 2030 may obtain a bin string corresponding to the syntax element from the bits included in the bitstream, based on the probability value of the bin. According to an embodiment, the bin string may be converted into a syntax element through inverse binarization.

Whenever a bin is reconstructed by the arithmetic decoder 2030, the context modeler 2010 may update the probability value of the bin, and the arithmetic decoder 2030 may reconstruct the bin by using the updated probability value of the bin.

According to an embodiment, the arithmetic decoder 2030 may reconstruct the bin string by repeating a process of dividing a predetermined integer range according to the probability value of the bin.

According to an embodiment, when the bin string is reconstructed by the entropy decoder 2050, the reconstructor 2070 may reconstruct an image by using the syntax element obtained through inverse binarization with respect to the bin string.

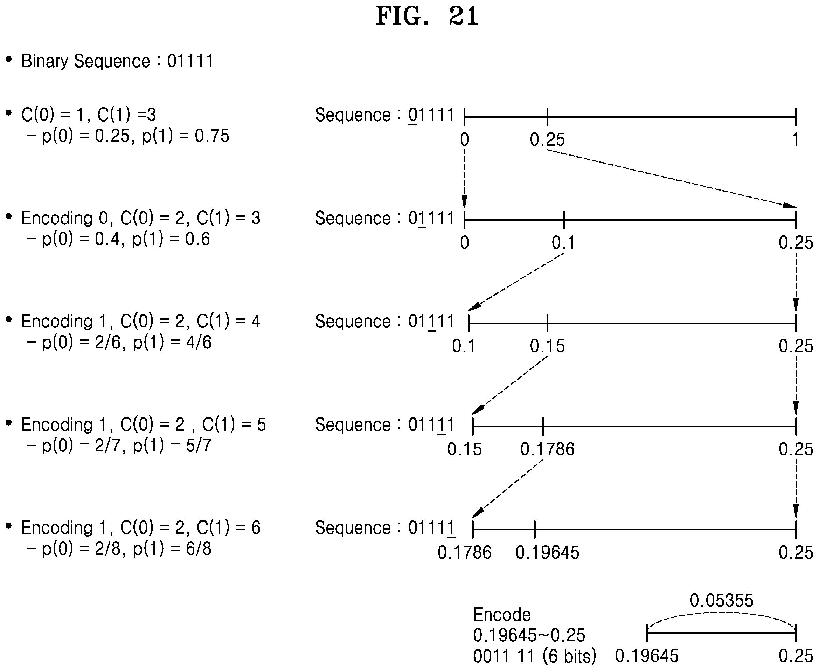

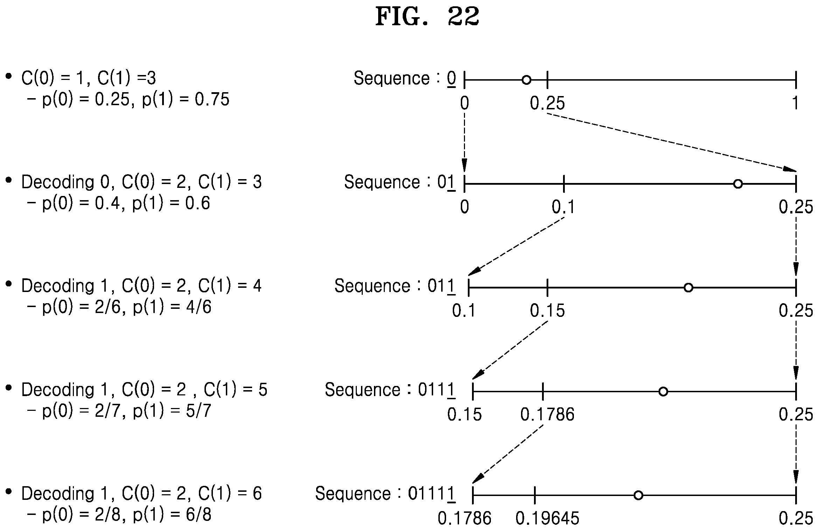

An arithmetic encoding process and an arithmetic decoding process will now be described with reference to FIGS. 21 and 22.

FIG. 21 is a diagram for describing an arithmetic encoding process according to an embodiment.

To arithmetically encode a binary sequence of 01111 (bin string), an initial probability value p(0) of 0 may be set to be 0.25, and an initial probability value p(1) of 1 may be set to be 0.75.

In FIG. 21, because C(0) is a value obtained by accumulating the number of occurrences of 0 and C(1) is a value obtained by accumulating the number of occurrences of 1, C(0) may be 1 and C(1) may be 3. p(0) may be obtained by dividing C(0) by a sum of C(0) and C(1), and p(1) may be obtained by dividing C(1) by the sum of C(0) and C(1).

A predetermined range of 0 to 1 may be divided into a range of 0 to 0.25 and a range of 0.25 to 1, according to the initial probability value of 0, which is 0.25, and the initial probability value of 1, which is 0.75.

Because a bin value to be initially encoded is 0, the range of 0 to 0.25 may be selected. Because the value of C(0) has been changed to 2, the probability value p(0) of 0 may be updated to 0.4, and the probability value p(1) of 1 may be updated to 0.6.

The range of 0 to 0.25 may be divided into a range of 0 to 0.1 and a range of 0.1 to 0.25, according to a probability value of 0, which is 0.4, and a probability value of 1, which is 0.6. Because a bin value to be encoded next is 1, the range of 0.1 to 0.25 may be selected. Because the value of C(1) has been changed to 4, the probability value p(0) of 0 may be updated to 2/6, and the probability value p(1) of 1 may be updated to 4/6.

The range of 0.1 to 0.25 may be divided into a range of 0.1 to 0.15 and a range of 0.15 to 0.25, according to a probability value of 0, which is 2/6, and a probability value of 1, which is 4/6. Because a bin value to be encoded next is 1, the range of 0.15 to 0.25 may be selected. Because the value of C(1) has been changed to 5, the probability value p(0) of 0 may be updated to 2/7, and the probability value p(1) of 1 may be updated to 5/7.

The range of 0.15 to 0.25 may be divided into a range of 0.15 to 0.1786 and a range of 0.1786 to 0.25, according to a probability value of 0, which is 2/7, and a probability value of 1, which is 5/7. Because a bin value to be encoded next is 1, the range of 0.1786 to 0.25 may be selected. Because the value of C(1) has been changed to 6, the probability value p(0) of 0 may be updated to 2/8, and the probability value p(1) of 1 may be changed to 6/8.

The range of 0.1786 to 0.25 may be divided into a range of 0.1786 to 0.19645 and a range of 0.19645 to 0.25, according to a probability value of 0, which is 2/8, and a probability value of 1, which is 6/8. Because the bin value to be encoded next is 1, the range of 0.19645 to 0.25 may be selected.

Because there are no more bins to be encoded, bits (001111) representing any value within the finally selected range of 0.19645 to 0.25 may be output as a result of the arithmetic encoding.

FIG. 22 is a diagram for describing an arithmetic decoding process according to an embodiment.

The arithmetic decoding process illustrated in FIG. 22 may correspond to a reverse process of the arithmetic encoding process described above with reference to FIG. 21.

Similar to the arithmetic encoding process, also in the arithmetic decoding process, an initial probability value p(0) of 0 may be set to be 0.25, and an initial probability value p(1) of 1 may be set to be 0.75.

A predetermined range of 0 to 1 may be divided into a range of 0 to 0.25 and a range of 0.25 to 1, according to the initial probability value of 0, which is 0.25, and the initial probability value of 1, which is 0.75.

Because values within the range of 0.19645 to 0.25 represented by the bits (001111) of a bitstream are included in the range of 0 to 0.25, the range of 0 to 0.25 may be selected, and thus the bin of 0 may be reconstructed.

As 0 is reconstructed, the value of C(0) may be changed to 2, the probability value p(0) of 0 may be updated to 0.4, and the probability value p(1) of 1 may be updated to 0.6.

The range of 0 to 0.25 may be divided into a range of 0 to 0.1 and a range of 0.1 to 0.25, according to the probability value of 0, which is 0.4, and the probability value of 1, which is 0.6. Because values within the range of 0.19645 to 0.25 are included in the range of 0.1 to 0.25, the range of 0.1 to 0.25 may be selected, and thus 1 may be reconstructed.

As 1 is reconstructed, the value of C(1) may be changed to 4, the probability value p(0) of 0 may be updated to 2/6, and the probability value p(1) of 1 may be updated to 4/6.

The range of 0.1 to 0.25 may be divided into a range of 0.1 to 0.15 and a range of 0.15 to 0.25, according to a probability value of 0, which is 2/6, and a probability value of 1, which is 4/6. Because values within the range of 0.19645 to 0.25 are included in the range of 0.15 to 0.25, the range of 0.15 to 0.25 may be selected, and thus 1 may be reconstructed.

As 1 is reconstructed, the value of C(1) may be changed to 5, the probability value p(0) of 0 may be updated to 2/7, and the probability value p(1) of 1 may be updated to 5/7.

The range of 0.15 to 0.25 may be divided into a range of 0.15 to 0.1786 and a range of 0.1786 to 0.25, according to a probability value of 0, which is 2/7, and a probability value of 1, which is 5/7. Because values within the range of 0.19645 to 0.25 are included in the range of 0.1786 to 0.25, the range of 0.1786 to 0.25 may be selected, and thus 1 may be reconstructed.

As 1 is reconstructed, the value of C(1) may be changed to 6, the probability value p(0) of 0 may be updated to 2/8, and the probability value p(1) of 1 may be updated to 6/8.

The range of 0.1786 to 0.25 may be divided into a range of 0.1786 to 0.19645 and a range of 0.19645 to 0.25, according to a probability value of 0, which is 2/8, and a probability value of 1, which is 6/8. Because values within the range of 0.19645 to 0.25 are included in the range of 0.19645 to 0.25, 1 may be reconstructed.

When there are no more bins to be reconstructed, a bin string of 01111 may be output as a result of the arithmetic decoding.

In general, when an initial probability of a bin is not accurately predicted, the number of bits generated through arithmetic encoding increases, which increase the bitrate of a bitstream. Therefore, in terms of bitrate, it is important to accurately predict a probability value of the bin used to encode and decode the bin, and video standards such as HEVC and VVC also propose tools for accurately predicting the probability value of a bin.

According to an embodiment, in order to perform entropy-decoding with respect to a current block split from a current upper block, the context modeler 2010 may obtain a probability value of a context of a syntax element that is stored after entropy decoding with respect to a previous block reconstructed before the current block. The context modeler 2010 may entropy decode a syntax element for the current block by using the obtained probability value of the context.

Because the current block and the previous block are spatially adjacent to each other within a current image, there may be similarity in image features. Therefore, the efficiency of entropy encoding/entropy decoding may be improved by using, for the current block, the probability value of a context, which is finally updated through entropy decoding of the previous block.

According to an embodiment, an upper block may include a slice, a tile, or a largest coding unit split from an image. And a block split from the upper block may include a tile split from the slice, a largest coding unit split from the slice, a coding unit split from the slice, a largest coding unit split from the tile, a coding unit split from the tile, or a coding unit split from the largest coding unit.

It will now be explained assuming that the upper block is a largest coding unit, and a block split from the upper block is a coding unit.

According to an embodiment, when a current coding unit corresponds to a first decoding target among at least one coding unit split from a current largest coding unit, the context modeler 2010 may obtain a probability value of each context of a syntax element that is stored after entropy decoding with respect to a previous largest coding unit reconstructed before the current largest coding unit is completed. The context modeler 2010 may use the obtained probability value of each context as the probability value of each context of the syntax element for the current coding unit.

According to an embodiment, when a current coding unit does not correspond to a first decoding target among coding units split from a current largest coding unit, the context modeler 2010 may obtain a probability value of each context of a syntax element that is stored after entropy decoding with respect to a previous coding unit reconstructed before the current coding unit from among the coding units included in the current largest coding unit is completed. The context modeler 2010 may use the obtained probability value of each context as the probability value of each context of the syntax element for the current coding unit.

Largest coding units split from an image may be reconstructed according to a raster scan order, and at least one coding unit split from a largest coding unit may be reconstructed according to a nested tree order. Accordingly, when a current coding unit corresponds to a first decoding target within a current largest coding unit, the current coding unit and a previous coding unit may be spatially distant from each other. In other words, because the current coding unit is not adjacent to the previous coding unit, the probability value of the context stored after entropy decoding with respect to the previous coding unit is completed may not be suitable for entropy decoding with respect to the current coding unit.

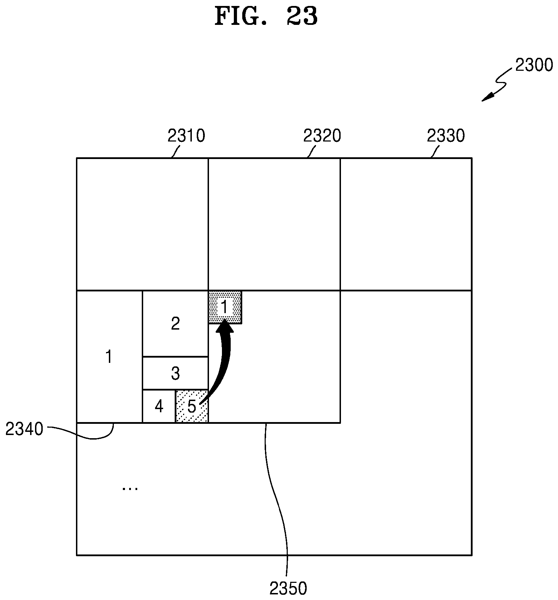

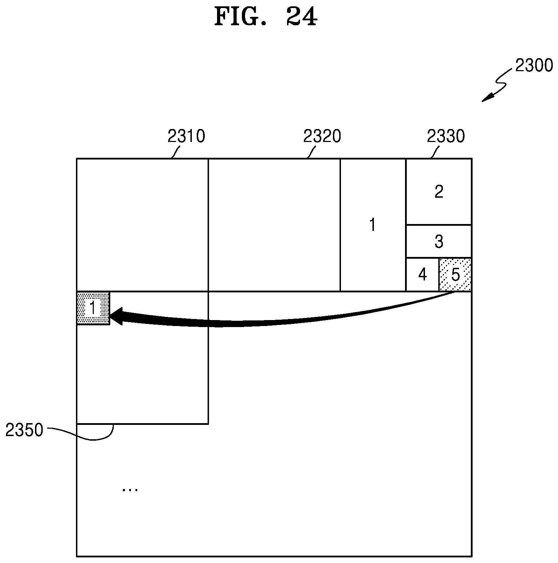

A case where the current coding unit is not adjacent to the previous coding unit will now be described with reference to FIGS. 23 and 24.

FIG. 23 is a diagram for explaining a method of obtaining a probability value of a context used in an entropy decoding process of a previous coding unit in order to perform entropy-decoding with respect to a current coding unit, according to an embodiment.

Referring to FIG. 23, a current image 2300 may be split into a plurality of largest coding units including a first largest coding unit 2310, a second largest coding unit 2320, a third largest coding unit 2330, a fourth largest coding unit 2340, and a current largest coding unit 2350.

According to a raster scan order, reconstruction may be performed in the order of the first largest coding unit 2310, the second largest coding unit 2320, the third largest coding unit 2330, the fourth largest coding unit 2340, and the current largest coding unit 2350.

The fourth largest coding unit 2340 may be split into a plurality of coding units, and the plurality of coding units may be reconstructed according to a nested tree order. In FIG. 23, the numbers marked on the coding units within the fourth largest coding unit 2340 may refer to reconstruction orders.

According to an embodiment, when entropy decoding with respect to a fifth coding unit within the fourth largest coding unit 2340 is completed, the context modeler 2010 may store a finally updated probability value of each context of syntax element.

According to an embodiment, completion of entropy decoding may mean that reconstruction of a last syntax element necessary for reconstructing a coding unit has been completed.

According to an embodiment, for accurate prediction of a probability value for a current coding unit, the context modeler 2010 may use a probability value of each context stored after entropy decoding with respect to a fifth coding unit within the fourth largest coding unit 2340 has been completed. However, as described above, because the fifth coding unit within the fourth largest coding unit 2340 is located on a lower right side within the fourth largest coding unit 2340 and the current coding unit is located on an upper left side of the current largest coding unit 2350, the probability value of each context stored after entropy decoding with respect to the fifth coding unit within the fourth largest coding unit 2340 is completed may not be optimized for the current coding unit.

FIG. 24 is a diagram for explaining a method of obtaining a probability value of a context used in an entropy decoding process on a previous coding unit, in order to perform entropy-decoding with respect to a current coding unit, according to an embodiment.

Referring to FIG. 24, a current image 2300 may be split into a plurality of largest coding units including a first largest coding unit 2310, a second largest coding unit 2320, a third largest coding unit 2330, and a current largest coding unit 2350.

According to a raster scan order, reconstruction may be performed in the order of the first largest coding unit 2310, the second largest coding unit 2320, the third largest coding unit 2330, and the current largest coding unit 2350.

The third largest coding unit 2330 is included in the same row together with the first largest coding unit 2310 and the second largest coding unit 2320. Because the third largest coding unit 2330 is located at the end of the row, the current largest coding unit 2350, which is the first largest coding unit of a next row, may be reconstructed after the third largest coding unit 2330 is reconstructed.

According to an embodiment, when entropy decoding with respect to a fifth coding unit within the third largest coding unit 2330 is completed, the context modeler 2010 may store a finally updated probability value of each context of a syntax element.

According to an embodiment, the context modeler 2010 may reconstruct syntax elements for a current coding unit within the current largest coding unit 2350, by using a probability value of each context stored after entropy decoding with respect to the fifth coding unit within the third largest coding unit 2330 is completed.

As shown in FIG. 24, because the fifth coding unit within the third largest coding unit 2330 is located in a lower right portion of the row including the third largest coding unit 2330 and the current coding unit is located in an upper left portion of a row including the current largest coding unit 2350, the probability value of each context for the fifth coding unit within the third largest coding unit 2330 may not be optimized for the current coding unit.

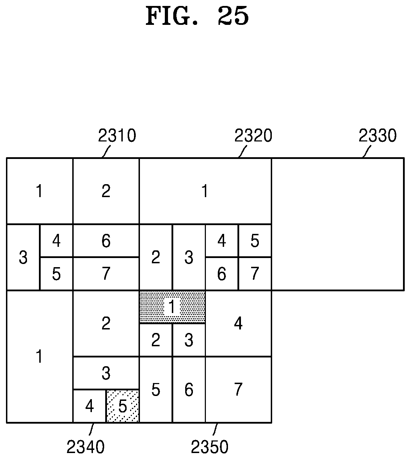

According to an embodiment, to compensate for discontinuities between the current coding unit and the previous coding unit, the context modeler 2010 may tune the probability value of each context stored after entropy decoding with respect to the previous coding unit, based on a bin of each context of syntax elements used to reconstruct a previous largest coding unit or the previous coding unit. The context modeler 2010 may use the tuned probability value of each context, in entropy decoding with respect to the current coding unit. This will be described with reference to FIG. 25.

FIG. 25 is a diagram for explaining a method of updating a probability value of a context, based on a bin stored according to acontext, according to an embodiment.

As described above, the context modeler 2010 may obtain a probability value of each context of a syntax element that is stored after entropy decoding with respect to a fifth coding unit within the fourth largest coding unit 2340 is completed, in order to perform entropy decoding with respect to a first coding unit corresponding to a current coding unit from among the coding units within the current largest coding unit 2350.

According to an embodiment, the context modeler 2010 may store, according to a context of a syntax element, a bin obtained through entropy decoding with respect to at least one coding unit included in at least one of the first largest coding unit 2310, the second largest coding unit 2320, or the fourth largest coding unit 2340. The context modeler 2010 may tune a probability value of each context of a syntax element obtained from the fifth coding unit within the fourth largest coding unit 2340, by using the bin stored according to the context.

According to an embodiment, a bin may be stored for a coding unit adjacent to a right boundary or a lower boundary from among coding units included in the first largest coding unit 2310, the second largest coding unit 2320, or the fourth largest coding unit 2340.

For example, the context modeler 2010 may perform entropy decoding on a second coding unit, a third coding unit, a sixth coding unit, and a seventh coding unit of the second largest coding unit 2320, and, when a bin corresponding to a syntax element is obtained, may store the bin in a memory (or a buffer) according to a context.

The context modeler 2010 may tune a probability value of each context of a syntax element stored after entropy decoding with respect to the fifth coding unit within the fourth largest coding unit 2340, according to the bin stored in the memory.

According to an embodiment, tuning the probability value of each context may be understood as updating the probability value according to the bin for each context.

As described above, the probability value of a bin may be updated every time the bin is reconstructed during entropy decoding. According to an embodiment, the context modeler 2010 may update the probability values for each context obtained from the previous coding unit, according to the bin for each context obtained from at least one previous coding unit adjacent to the current coding unit, so that a probability value for the current coding unit is more optimized for the current coding unit.

According to an embodiment, a sum of the bins stored for each context may be set to be less than or equal to a first threshold value pre-determined for a largest coding unit. This is to prevent excessive load from occurring due to buffering and probability value updating.

For example, a bin generated during entropy decoding on a second coding unit, a third coding unit, a sixth coding unit, and a seventh coding unit within the second largest coding unit 2320 may be stored in the memory, and the context modeler 2010 may allow a sum of the bins stored in the memory to be less than or equal to 512. Herein, 512 is an example, and various values may be set as a first threshold value.

In addition, according to an embodiment, the number of bins stored for one context may be set to be less than or equal to a second threshold value. This is to prevent bins for other contexts from failing to be stored in the memory due to a plurality of bins for a specific context being stored in the memory. According to an embodiment, the second threshold value may be, but is not limited to, 32. For example, the second threshold value may be $2^n$ (where n is an integer).

In summary, according to an embodiment, the context modeler 2010 may store, in memory according to context, a bin generated during entropy decoding with respect to a previous largest coding unit reconstructed before the current largest coding unit 2350. The context modeler 2010 may ensure that the number of bins stored for a specific context does not exceed the second threshold value, and that the total number of bins stored for contexts does not exceed the first threshold value.

According to an embodiment, when the current largest coding unit 2350 is located on a leftmost side of the row including the current largest coding unit 2350, the context modeler 2010 may tune the probability value for each context by using the bin generated during the entropy decoding with respect to a largest coding unit located above the current largest coding unit 2350.

According to an embodiment, the probability value for each context of a syntax element may include a first probability value and a second probability value. The first probability value may be a probability value updated based on a first factor, and the second probability value may be a probability value updated based on a second factor. According to an embodiment, the first factor and the second factor are integer values, and the first factor may be less than the second factor.

The context modeler 2010 may determine a final probability value for each context by weighted-summing the first probability value for each context and the second probability value for each context, and the arithmetic decoder 2030 may reconstruct a bin corresponding to the syntax element, based on the determined final probability value.

According to an embodiment, the first probability value and the second probability value may be updated according to Equations 1 and 2 below.

$$\text{Updated first probability value} = \text{first probability value} - (\text{first probability value} >> \text{shift0}) + (a*\text{binVal} >> \text{shift0}) \qquad \text{[Equation 1]}$$

$$\text{Updated second probability value} = \text{second probability value} - (\text{second probability value} >> \text{shift1}) + (b*\text{binVal} >> \text{shift1}) \qquad \text{[Equation 2]}$$

In Equations 1 and 2, >> may be a bit shift operator, shift0 may correspond to the first factor, and shift1 may correspond to the second factor. In Equations 1 and 2, binVal may represent the value of a bin reconstructed based on the first probability value and the second probability value. In Equations 1 and 2, a and b may be pre-determined constant numbers.

shift0 and shift1 may be determined independently for each context of a syntax element.

For example, shift0 and shift1 for a first context of a first syntax element, and shift0 and shift1 for a second context of the first syntax element may be determined independently of each other. According to an embodiment, shift0 and shift1 for the first context of the first syntax element, and shift0 and shift1 for the second context of the first syntax element may be the same as each other or may be different from each other.

For example, shift0 and shift1 for the first context of the first syntax element, and shift0 and shift1 for a first context of the second syntax element may be determined independently of each other. According to an embodiment, shift0 and shift1 for the first context of the first syntax element, and shift0 and shift1 for the first context of the second syntax element may be the same as each other or may be different from each other.

According to an embodiment, shift0 may be less than shift1. This may mean that a range over which the first probability value changes according to updating of the first probability value is greater than a range over which the second probability value changes according to updating of the second probability value. In other words, a degree to which the first probability value changes according to the updating may be great, and a degree to which the second probability value changes according to the updating may be relatively small.

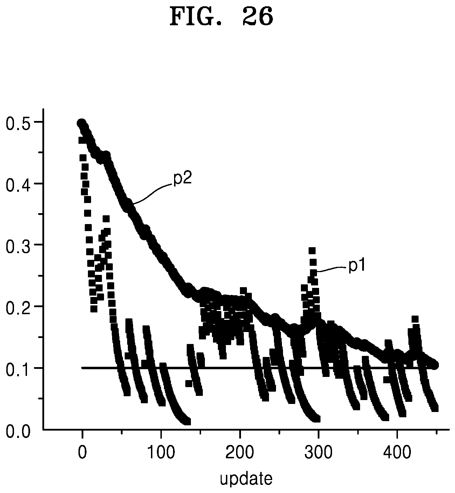

FIG. 26 is a graph showing a tendency of a first probability value and a second probability value that are updated according to a first factor and a second factor, respectively, according to an embodiment.

Referring to FIG. 26, it may be seen that, because a first probability value p1 is updated according to the first factor, which is less than the second factor, the first probability value p1 has greater variability than the second probability value p2 that is updated according to the second factor.

A weighted sum of the first probability value p1 with high variability and the second probability value p2 with low variability may be used in entropy coding so that a probability value for each context may be quickly and stably approximated to an actual probability value of bins.

According to an embodiment, when updating the probability value for each context, based on the bin stored according to each context, the context modeler 2010 may update both the first probability value for each context and the second probability value for each context.

According to an embodiment, when updating the probability value for each context, based on the bin stored according to each context, the context modeler 2010 may update only the first probability value for each context from among the first probability value for each context and the second probability value for each context.

According to an embodiment, when updating the probability value for each context, based on the bin stored according to each context, the context modeler 2010 may update only the second probability value for each context from among the first probability value for each context and the second probability value for each context.

According to an embodiment, the probability value for each context may include only one probability value representing an occurrence probability of a bin. In this case, the context modeler 2010 may update the probability value for each context, based on one factor.

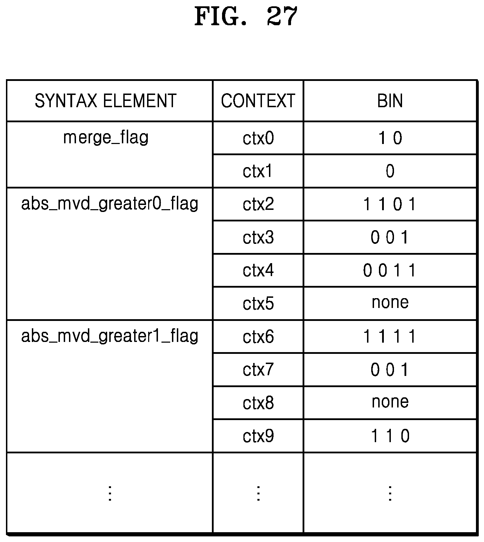

A process of determining a probability value for each context for a current coding unit will now be described with reference to FIGS. 27 through 29.

FIG. 27 is a table showing bins obtained through entropy decoding with respect to at least one coding unit within a largest coding unit according to an embodiment.

FIG. 27 illustrates bins stored according to contexts of a syntax element, and the bins illustrated in FIG. 27 may be, for example, bins reconstructed through entropy decoding with respect to the second coding unit, the third coding unit, the sixth coding unit, and the seventh coding unit within the second largest coding unit 2320 illustrated in FIG. 25.

Referring to FIG. 27, it may be seen that ctx0 and ctx1 exist for a syntax element merge_flag, bins of 1 and 0 have been reconstructed based on ctx0, and a bin of 0 has been reconstructed based on ctx1.

It may be also seen that ctx2, ctx3, ctx4, and ctx5 exist for a syntax element abs_mvd_greater0_flag, and ctx6, ctx7, ctx8, and ctx9 exist for a syntax element abs_mvd_greater1_flag.

In FIG. 27, no bins are stored for ctx5 of the syntax element abs_mvd_greater0_flag. This means that there is no bins reconstructed according to ctx5 in a bin string corresponding to abs_mvd_greater0_flag.

FIG. 27 shows only merge_flag, abs_mvd_greater0_flag, and abs_mvd_greater1_flag as syntax elements, but this is an example. Bins may be stored for various types of syntax elements that are not shown.

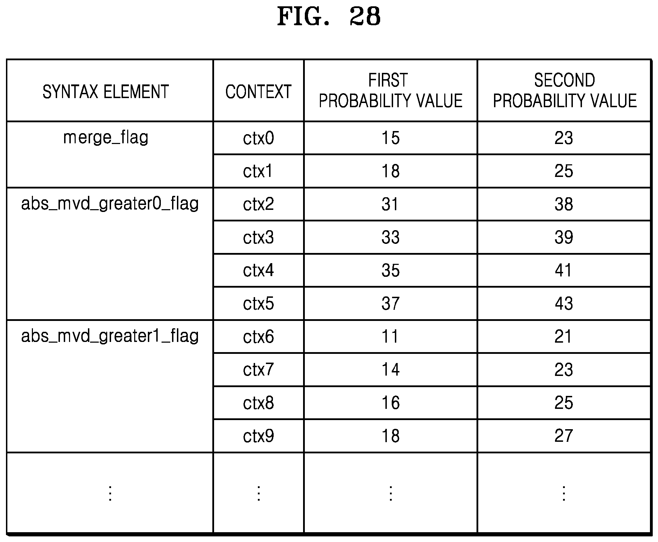

FIG. 28 is a table showing a probability value of a context of a syntax element stored after entropy decoding with respect to a previous coding unit is completed, according to an embodiment.

FIG. 28 illustrates a first probability value and a second probability value for each context of a syntax element. The first probability value and the second probability value for each context illustrated in FIG. 28 may be, for example, a first probability value and a second probability value for each context stored after entropy decoding with respect to the fifth coding unit in the fourth largest coding unit 2340 illustrated in FIG. 25 is completed.

According to an embodiment, the context modeler 2010 may update the first probability value for each context and/or the second probability value for each context whenever a bin is reconstructed during entropy decoding with respect to the fifth coding unit within the fourth largest coding unit 2340, and, when reconstruction of a last syntax element for the fifth coding unit is completed, may use a finally-updated first probability value for each context and a finally-updated second probability value for each context in entropy decoding with respect to a current coding unit.

For example, in FIG. 28, the first probability value of ctx0 of the syntax element merge_flag is 15, and the second probability value is 23, which may be a first probability value and a second probability value each updated every time the bins corresponding to the syntax element merge_flag for the coding units within the fourth largest coding unit 2340 are reconstructed according to ctx0 after an initial probability value of ctx0 of the syntax element merge_flag is determined.

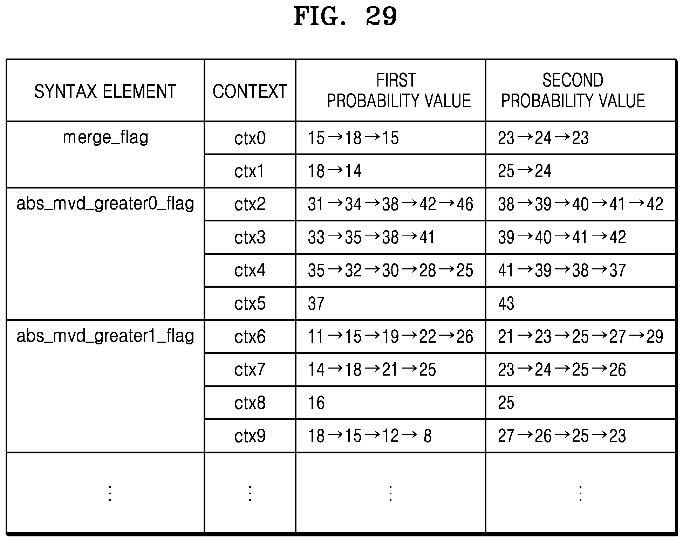

FIG. 29 is a table showing a process in which the probability values of the contexts shown in FIG. 28 are updated according to the bins shown in FIG. 27, according to an embodiment.

According to an embodiment, the context modeler 2010 may tune a probability value for each context of syntax elements after entropy decoding with respect to a previous coding unit is completed, based on bins obtained through entropy decoding with respect to at least one coding unit within a previous largest coding unit, and may use the tuned probability values in entropy decoding with respect to a current coding unit.

As previously illustrated in FIGS. 27 and 28, the first probability value of ctx0 of the syntax element merge_flag may be 15, and the second probability value may be 23. For ctx0 of the syntax element merge_flag, the bin of 1 and the bin of 0 may be stored.

Referring to FIG. 29, the context modeler 2010 may update the first probability value and the second probability value of ctx0 of the syntax element merge_flag according to the bin of 1 and the bin of 0, respectively. Because two bins have been stored for ctx0 of the syntax element merge_flag, each of the first probability value and the second probability value may be updated twice.

According to an embodiment, the context modeler 2010 may first consider later-stored bins when updating the first probability value and the second probability value. For example, when the bin of 1 is stored and then the bin of 0 is stored for ctx0 of the syntax element merge_flag, the context modeler 2010 may first update the first probability value and the second probability value of ctx0 of the syntax element merge_flag according to the bin of 0, and then update them according to the bin of 1. Updating a probability value by first using bins stored later may mean that the probability value is updated by first using bins obtained through entropy decoding with respect to a coding unit with a later decoding order.

When a single bin has been stored for ctx1 of the syntax element merge_flag, the first probability value and the second probability value may be updated once, as shown in FIG. 29.

In FIG. 29, the first probability value and the second probability value of ctx5 of the syntax element abs_mvd_greater0_flag are not updated, because a bin corresponding to ctx5 of the syntax element abs_mvd_greater0_flag is not stored.

According to an embodiment, the context modeler 2010 may update the first probability value and the second probability value for each context of syntax elements, based on Equation 1 and Equation 2 both described above.

FIG. 29 illustrates that both the first probability value for each context and the second probability value for each context of syntax elements are updated according to bins. However, according to an embodiment, only one of the first probability value and the second probability value may be updated according to bins.

As described above, bins obtained during the entropy decoding with respect to at least one coding unit within the previous largest coding unit are stored in memory according to contexts. In this case, the number of bins stored for any one context may be limited to a second threshold value or less, and the total number of bins stored for contexts may be limited to a first threshold value or less.

For example, when the first threshold value is 512 and the second threshold value is 32, the minimum number of contexts that may be tuned is 16 (512/32). This means that the probability values of the 16 contexts may be updated according to bins.

The total number of contexts defined in the VVC standard exceeds 300, and thus, when only 16 contexts are tuned, it may be difficult to derive a probability value optimized for entropy decoding of a current coding unit.

According to an embodiment, when bins obtained during entropy decoding of at least one coding unit within the previous largest coding unit are stored in the memory, the number of bins stored for any one context may be limited to no more than a smaller value among the second threshold value and a limit value.

According to an embodiment, the limit value may be a value corresponding to a first factor used to update the first probability value of the context. For example, the limit value may be a value corresponding to a 2^first factor ($2^{\text{first factor}}$).

By considering the first factor in limiting the number of bins, an accurate probability value of the current coding unit may be properly predicted simply by updating the first probability value by using the bins.

In detail, the first factor, which is a value used to update the first probability value of the context, may be less than the second factor used to update the second probability value.

Equation 1 described above is calculated from an assumption that there will be N bins for a specific context, and the 2^first factor may correspond to N. This will be explained with reference to Equation 3 and Equation 4 below.

[Equation 3]

$$P' = \frac{N \cdot P + Y}{N+1} = \frac{(N+1) \cdot P + Y - P}{N+1} = P + \frac{Y}{N+1} - \frac{P}{N+1} = P\left(1 - \frac{1}{N+1}\right) + \frac{1}{N+1} \cdot Y$$

In Equation 3, P indicates a probability value of a bin of a specific value (e.g., 1), and P' indicates an updated probability value. N indicates the number of bins existing for a specific context, and Y indicates a value of a reconstructed bin.

When N+1 corresponding to a window size is approximated as N' to eliminate a division operation of Equation 3 and N' is changed to 1<<W, Equation 3 is changed to Equation 4 below.

[Equation 4]

$$P' = P(1 - (1 \gg W)) + Y * (1 \gg W)$$

It may be seen that, when Equation 1 and Equation 2 are compared with Equation 4, Equation 1 and Equation 2 are the same as Equation 4 except for constants a and b. That is, W in Equation 4 may correspond to shift0 and shift1 in Equation 1 and Equation 2.

W in Equation 4 is a value determined based on the number N of bins existing for a specific context. The larger N is, the larger W may be determined to be, and the smaller N is, the smaller W may be determined to be. Because N is approximated as 1<<W above, N becomes 2^W.

That the aforementioned limit value is set as the 2^first factor may mean that the number of bins to be stored is limited to less than or equal to the number N of bins considered in updating the first probability value.

By limiting the number of bins stored to update the first probability value to no more than a limit value calculated from the first factor, an accurate probability value may be derived even when the first probability value is updated with only a small number of bins.

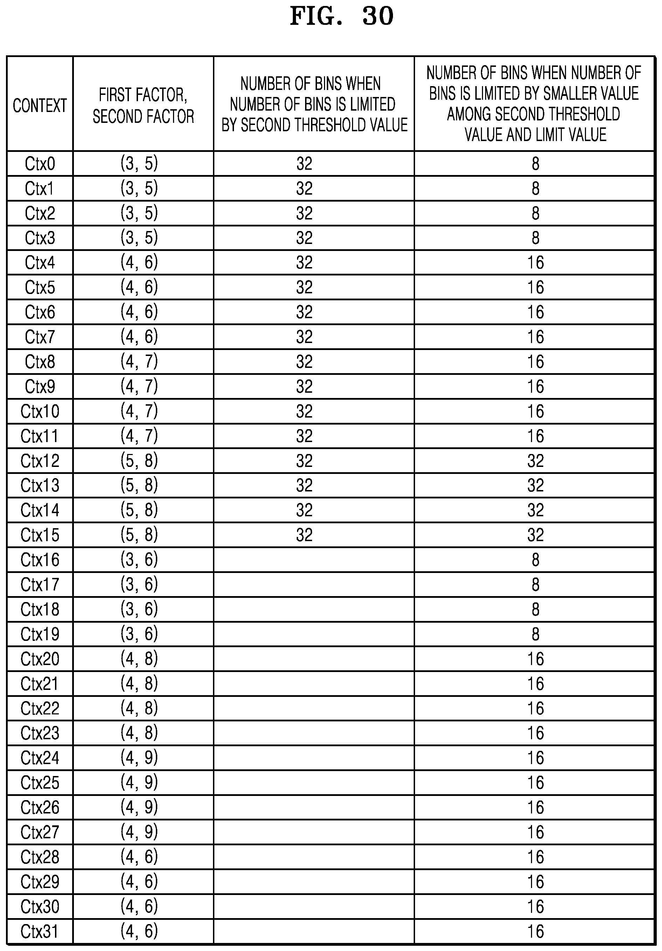

A difference between a case of limiting the number of bins stored for any one context by considering only the second threshold value and a case of limiting the number of bins stored for any one context by considering both the limit value and the second threshold value will be explained with reference to FIG. 30.

FIG. 30 is a table showing a comparison between the number of contexts tunable when the number of bins is limited to a second threshold value and the number of contexts tunable when the number of bins is limited to a smaller value among the second threshold value and a limit value, according to an embodiment.

It is assumed that the total number of bins that may be stored for contexts is limited according to a first threshold value of 512.

As illustrated in FIG. 30, when the number of bins stored according to context is limited by a second threshold value of 32, bins may be stored only for ctx0 to ctx15. Therefore, probability value tuning may only be performed for 16 contexts from ctx0 to ctx15.

When the number of bins stored according to context is limited by a smaller value from among the second threshold value of 32 and the limit value corresponding to the 2^first factor, bins may be stored for 32 contexts from ctx0 to ctx31. Therefore, probability value tuning may be performed for 32 contexts.

As shown in FIG. 30, because the first factor of most contexts has a value of 5 or less, the number of contexts on which probability value tuning may be performed may be increased by using the 2^first factor as a limit value, compared to a case where the number of bins is limited using only the second threshold value of 32.

According to an embodiment, the limit value may be set independently for each context, regardless of the first factor. For example, the limit value may be set to be 32 for one context, and the limit value may be set to be 16 for another context.

According to an embodiment, the context modeler 2010 may control the number of bins stored for each context by using a table showing a limit value for each context.

According to an embodiment, the context modeler 2010 may control the number of bins stored for each context by using only the limit value for each context. For example, the context modeler 2010 may control the number of bins stored for each context to be no more than the limit value for each context.

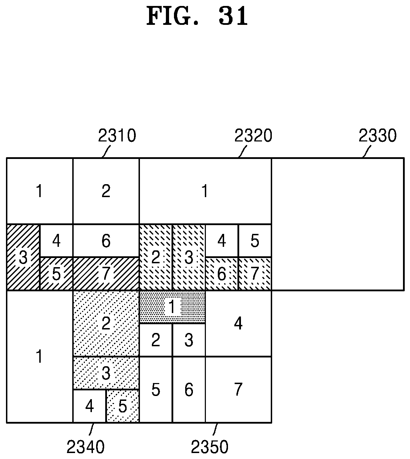

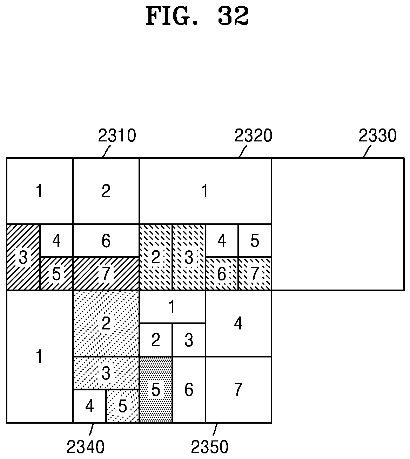

Which coding unit's bins may be used to tune a probability value for a current coding unit will now be described with reference to FIGS. 31 and 32.

FIG. 31 is a diagram illustrating a previous coding unit that may be used to update a probability value of a context, according to an embodiment.

In FIG. 31, when a current coding unit within the current largest coding unit 2350 corresponds to a first coding unit, the context modeler 2010 may obtain a probability value for each context after entropy decoding with respect to a fifth coding unit within the fourth largest coding unit 2340 is completed. The context modeler 2010 may tune the probability value for each context according to bins for each context stored in the memory.

According to an embodiment, the context modeler 2010 may store, according to context, bins obtained through entropy decoding with respect to at least one of the coding units adjacent to a lower boundary from among the coding units within the first largest coding unit 2310, for example, at least one of the third coding unit, the fifth coding unit, or the seventh coding unit.

According to an embodiment, the context modeler 2010 may store, according to context, bins obtained through entropy decoding with respect to at least one of the coding units adjacent to a lower boundary from among the coding units within the second largest coding unit 2320, for example, at least one of the second coding unit, the third coding unit, the sixth coding unit, or the seventh coding unit.

According to an embodiment, the context modeler 2010 may store, according to context, bins obtained through entropy decoding with respect to at least one of the coding units adjacent to a right boundary from among the coding units within the fourth largest coding unit 2340, for example, at least one of the second coding unit, the third coding unit, or the fifth coding unit.

Hereinafter, a bin of a largest coding unit may represent a bin obtained through entropy decoding with respect to at least one coding unit within the largest coding unit and stored according to context. A bin of a coding unit may represent a bin obtained through entropy decoding with respect to the coding unit and stored according to context.

According to an embodiment, the context modeler 2010 may tune the probability value for each context for the current coding unit by using a bin of the second largest coding unit 2320 located above the current largest coding unit 2350 from among largest coding units adjacent to the current largest coding unit 2350.

According to an embodiment, the context modeler 2010 may tune the probability value for each context for the current coding unit by using a bin of a coding unit adjacent to an upper side of the current coding unit from among coding units within the second largest coding unit 2320, for example, a bin of a second coding unit within the second largest coding unit 2320.

According to an embodiment, the context modeler 2010 may identify, based on information included in a bitstream, which largest coding unit's bin from among the largest coding units adjacent to the current largest coding unit 2350 is used for probability value tuning for the current coding unit.

For example, when the information included in the bitstream indicates the second largest coding unit 2320 from among the first largest coding unit 2310, the second largest coding unit 2320, and the fourth largest coding unit 2340, the context modeler 2010 may perform probability value tuning by using a bin of the second largest coding unit 2320.

For example, when the information included in the bitstream indicates the fourth largest coding unit 2340 from among the first largest coding unit 2310, the second largest coding unit 2320, and the fourth largest coding unit 2340, the context modeler 2010 may perform probability value tuning by using a bin of the fourth largest coding unit 2340.

According to an embodiment, the context modeler 2010 may determine, from the information included in the bitstream, which coding unit from among previous coding units adjacent to the current coding unit may be used for probability value tuning for the current coding unit. The previous coding units adjacent to the current coding unit may include the second coding unit within the second largest coding unit 2320 and the second coding unit within the fourth largest coding unit 2340. For example, the previous coding units adjacent to the current coding unit may include an eleventh coding unit within the first largest coding unit 2310, the second coding unit within the second largest coding unit 2320, and the second coding unit within the fourth largest coding unit 2340. For example, the previous coding units adjacent to the current coding unit may include coding units adjacent to a lower boundary from among coding units within the second largest coding unit 2320 and coding units adjacent to a right boundary from among coding units within the fourth largest coding unit 2340. For example, the previous coding units adjacent to the current coding unit may include coding units adjacent to a lower boundary from among coding units within the first largest coding unit 2310, coding units adjacent to a lower boundary from among coding units within the second largest coding unit 2320, and coding units adjacent to a right boundary from among coding units within the fourth largest coding unit 2340.

According to an embodiment, the context modeler 2010 may identify, based on a size of the current coding unit, which largest coding unit's bin from among largest coding units adjacent to the current largest coding unit 2350 is used for probability value tuning for the current coding unit. According to an embodiment, the size of the current coding unit may correspond to a result of a comparison between a width and a height of the current coding unit.

For example, when the width of the current coding unit is greater than the height thereof, the context modeler 2010 may tune a probability value by using the bin of the second largest coding unit 2320 located above the current largest coding unit 2350 or the bin of the second coding unit within the second largest coding unit 2320 located above the current coding unit.

For example, when the height of the current coding unit is greater than the width thereof, the context modeler 2010 may tune a probability value by using the bin of the fourth largest coding unit 2340 located on the left side of the current largest coding unit 2350 or the bin of the second coding unit within the fourth largest coding unit 2340 located on the left side of the current coding unit.

For example, when the width and the height of the current coding unit are the same as each other, the context modeler 2010 may tune a probability value by using the bin of a largest coding unit or a coding unit located at a pre-determined position (e.g., a left upper side).

According to an embodiment, the context modeler 2010 may identify which largest coding unit's bin from among largest coding units adjacent to the current largest coding unit 2350 is used for probability value tuning for the current coding unit, based on the size of a boundary in contact with the current coding unit from among the boundaries of the coding units adjacent to the current coding unit.

Referring to FIG. 31, a lower boundary of a second coding unit within the second largest coding unit 2320, a lower boundary of a third coding unit, and a right boundary of a second coding unit within the fourth largest coding unit 2340 are in contact with the current coding unit. According to an embodiment, the context modeler 2010 may identify a largest coding unit usable for probability value tuning based on a result of a comparison between a length (i.e., a width) of the lower boundary of the second coding unit within the second largest coding unit 2320, a length (i.e., a width) of the lower boundary of the third coding unit, and a length (i.e., a height) of the right boundary of the second coding unit within the fourth largest coding unit 2340.

For example, in FIG. 31, because a height of the second coding unit within the fourth largest coding unit 2340 is greater than a width of the second coding unit within the second largest coding unit 2320 and a width of the third coding unit, the context modeler 2010 may perform probability value tuning by using the bin of the fourth largest coding unit 2340 or the bin of the second coding unit within the fourth largest coding unit 2340.

For example, because the width of the second coding unit within the second largest coding unit 2320 is greater than the width of the third coding unit within the second largest coding unit 2320 and the height of the second coding unit within the fourth largest coding unit 2340, the context modeler 2010 may perform probability value tuning by using the bin of the second largest coding unit 2320 or the bin of the second coding unit within the second largest coding unit 2320.

For example, because the width of the second coding unit within the second largest coding unit 2320, the width of the third coding unit within the second largest coding unit 2320, and the height of the second coding unit within the fourth largest coding unit 2340 are all the same as each other, the context modeler 2010 may perform probability value tuning by using the bin of a largest coding unit or a coding unit located at a predetermined position (e.g., an upper side).

According to an embodiment, the context modeler 2010 may identify which largest coding unit's bin from among largest coding units adjacent to the current largest coding unit 2350 is used in probability value tuning for the current coding unit, based on areas of the coding units adjacent to the current coding unit.

For example, the context modeler 2010 may tune a probability value for the current coding unit by using the bin of a largest coding unit including a coding unit with a largest area from among coding units adjacent to the current coding unit or the bin of the coding unit with a largest area.

For example, when the areas of the coding units adjacent to the current coding unit are the same as each other, the context modeler 2010 may tune a probability value by using the bin of a largest coding unit or a coding unit located at a pre-determined position (e.g., an upper side).

In FIG. 31, because an area of the second coding unit within the fourth largest coding unit 2340 is greatest among the coding units adjacent to the current coding unit, the context modeler 2010 may perform probability value tuning by using the bin of the fourth largest coding unit 2340 or the bin of the second coding unit within the fourth largest coding unit 2340.

FIG. 32 is a diagram illustrating a previous coding unit that may be used to update a probability value of a context, according to an embodiment.

In FIG. 32, the current coding unit is a fifth coding unit adjacent to the left boundary of the current largest coding unit 2350, and it is assumed that reconstruction of the first coding unit, the second coding unit, the third coding unit, and the fourth coding unit has been completed.

According to an embodiment, because reconstruction of the fourth coding unit has been completed immediately before the current coding unit, the context modeler 2010 may obtain a probability value for each context after entropy decoding with respect to a fourth coding unit within the current largest coding unit 2350, in order to perform entropy decoding with respect to the current coding unit.

According to an embodiment, the context modeler 2010 may selectively tune a probability value for each context after entropy decoding with respect to a fourth coding unit within the current largest coding unit 2350, according to a bin for each context stored in the memory.

For example, the context modeler 2010 may obtain, from the bitstream, information indicating whether tuning of the probability value is necessary, and, when the obtained information indicates that tuning of the probability value is necessary, the context modeler 2010 may tune the probability value according to the bin for each context stored in the memory.

According to an embodiment, because the current coding unit is adjacent to the left boundary of the current largest coding unit 2350 and is not adjacent to the upper boundary thereof, the context modeler 2010 may tune the probability value by using a bin of the fourth largest coding unit 2340 closest to the current coding unit or a bin of the third coding unit adjacent to the current coding unit from among the coding units within the fourth largest coding unit 2340.

According to an embodiment, when probability value tuning with respect to the current coding unit is necessary, the context modeler 2010 may identify a coding unit used in probability value tuning according to the embodiment described with reference to FIG. 31, for example, an embodiment of identifying which coding unit's bin is used in probability value tuning for the current coding unit.

According to an embodiment, the context modeler 2010 may determine whether to perform probability value tuning with respect to the current coding unit according to the size of the current coding unit. According to an embodiment, the size of the current coding unit may correspond to a result of a comparison between a width and a height of the current coding unit.

For example, when the height of the current coding unit is greater than the width thereof, the context modeler 2010 may tune a probability value by using the bin of the fourth largest coding unit 2340 or the bin of the third coding unit adjacent to the left side of the current coding unit from among the coding units within the fourth largest coding unit 2340. That the height of the current coding unit is greater than the width thereof means that, because many regions of the current coding unit are in contact with the fourth largest coding unit 2340, the probability value is tuned using the bin of the fourth largest coding unit 2340.

For example, when the width of the current coding unit is greater than the height thereof, the context modeler 2010 may not perform probability value tuning for the current coding unit. In other words, a probability value for each context stored after entropy decoding with respect to the fourth coding unit within the current largest coding unit 2350 may be used in entropy decoding for the current coding unit.

For example, when the height and the width of the current coding unit are the same as each other, the context modeler 2010 may determine whether to perform probability value tuning for the current coding unit, based on the information included in the bitstream.

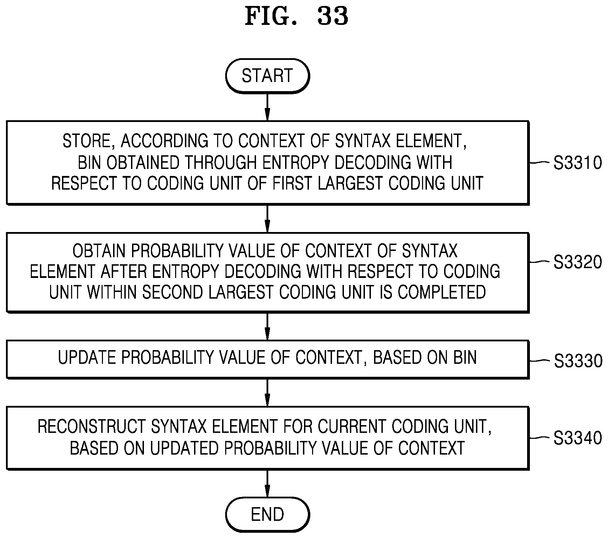

FIG. 33 is a flowchart of an image decoding method according to an embodiment.

The image decoding method of FIG. 33 may be performed by the above-described image decoding apparatus 2000.

In operation S3310, the image decoding apparatus 2000 may store, according to the context of a syntax element, a bin obtained through entropy decoding with respect to at least one coding unit within a first largest coding unit.

The first largest coding unit may be reconstructed earlier than the current largest coding unit, and the first largest coding unit may include at least one of a largest coding unit located on the left side of the current largest coding unit, a largest coding unit located above the current largest coding unit, and a largest coding unit located on the left upper side of the current largest coding unit.

For example, the first largest coding unit may include at least one of the first largest coding unit 2310, the second largest coding unit 2320, or the fourth largest coding unit 2340 illustrated in FIG. 31.

According to an embodiment, at least one coding unit within the first largest coding unit may be adjacent to a lower boundary or a right boundary of the first largest coding unit.

According to an embodiment, the image decoding apparatus 2000 may identify at least one coding unit adjacent to a boundary that is in contact with the current largest coding unit or the current coding unit within the current largest coding unit from among the boundaries of the first largest coding unit, and may store, according to the context of the syntax element, a bin obtained through entropy decoding with respect to the identified at least one coding unit.

In operation S3320, the image decoding apparatus 2000 may obtain a probability value of a context of the syntax element after entropy decoding with respect to at least one coding unit within the second largest coding unit is completed, in order to entropy decode with respect to a current coding unit within the current largest coding unit.

According to an embodiment, the second largest coding unit may be reconstructed earlier than the current largest coding unit.

According to an embodiment, the second largest coding unit may be located on the left side of the current largest coding unit. For example, the second largest coding unit may be the fourth largest coding unit 2340 illustrated in FIG. 31.

According to an embodiment, the second largest coding unit may be located on a rightmost side of an upper row that is above a largest coding unit row including the current largest coding unit. For example, the second largest coding unit may be the third largest coding unit 2330 illustrated in FIG. 31.

According to an embodiment, the image decoding apparatus 2000 may update the probability value for each context while reconstructing bins of the syntax element for at least one coding unit within the second largest coding unit, and obtain a finally-updated probability value for each context for the current coding unit.

In operation S3330, the image decoding apparatus 2000 may update the probability value of the context, based on the bin stored according to context.

According to an embodiment, the probability value of the context may include a first probability value of the context and a second probability value of the context. The image decoding apparatus 2000 may update the first probability value of the context by using a first factor independently set according to context and the bin stored according to context, and may update the second probability value of the context by using a second factor independently set according to context and the bin stored according to context.

According to an embodiment, the image decoding apparatus 2000 may also update only one of the first probability value of the context and the second probability value of the context according to the bin.

In operation S3340, the image decoding apparatus 2000 may reconstruct a syntax element for the current coding unit, based on the updated probability value of the context.

According to an embodiment, the image decoding apparatus 2000 may reconstruct bins of a syntax element for the current coding unit, based on the updated probability value of the context, and may obtain the syntax element by de-binarizing a bin string including the reconstructed bins.

In operation S3310 described above, when the bins are stored according to context, the image decoding apparatus 2000 may limit the number of bins to be stored.

According to an embodiment, the image decoding apparatus 2000 may limit the total number of bins stored for any one largest coding unit to be less than or equal to a first threshold value. For example, when the first threshold value is 512, a maximum of 512 bins may be stored for any one largest coding unit, and a maximum of 512 bins may be stored for another largest coding unit.

According to an embodiment, the image decoding apparatus 2000 may limit the number of bins stored for any one largest coding unit to be less than or equal to a smaller value from among a limit value and a pre-determined second threshold value.

According to an embodiment, the limit value may be a value set independently for each context, and the second threshold value may be a value set equally for contexts.

For example, the same second threshold value of 32 may be set for both the first context and the second context, while a limit value of 16 may be set for the first context and a limit value of 32 may be set for the second context. In this case, a maximum of 16 bins may be stored for the first context and a maximum of 32 bins may be stored for the second context.

According to an embodiment, the limit value may be a value corresponding to the first factor set for each context in order to update the first probability value of the context. For example, the limit value may be a 2^first factor.

According to an embodiment, when syntax elements for the current coding unit are reconstructed, the image decoding apparatus 2000 may reconstruct the current coding unit by using the reconstructed syntax elements.

The probability value of the context of the syntax element after entropy decoding with respect to the current coding unit may be used in entropy decoding with respect to a next coding unit.

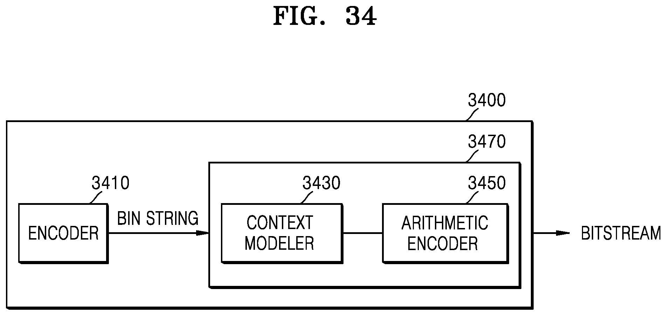

FIG. 34 is a block diagram of a structure of an image encoding apparatus 3400 according to an embodiment.

Referring to FIG. 34, the image encoding apparatus 3400 may include an encoder 3410, a context modeler 3430, and an arithmetic encoder 3450.

The encoder 3410, the context modeler 3430, and the arithmetic encoder 3450 according to an embodiment may be implemented as at least one processor. According to an embodiment, the encoder 3410, the context modeler 3430, and the arithmetic encoder 3450 may operate according to at least one instruction stored in at least one memory.

The image encoding apparatus 3400 may include at least one memory for storing input/output data of the encoder 3410, the context modeler 3430, and the arithmetic encoder 3450. The image encoding apparatus 3400 may include a memory controller for controlling data input/output of the at least one memory.

According to an embodiment, the obtainer 3410 may correspond to the prediction encoder 1915, the transformer and quantizer 1920, the inverse quantizer and inverse transformer 1930, the deblocking filter 1935, and the loop filter 1940 illustrated in FIG. 19. According to an embodiment, the context modeler 3430 and the arithmetic encoder 3450 may correspond to the entropy encoder 1925 illustrated in FIG. 19.

According to an embodiment, an apparatus including the context modeler 3430 and the arithmetic encoder 3450 may be referred to as an entropy encoding apparatus 3470.

The image encoding apparatus 3400 may generate a bitstream by encoding an image.

According to an embodiment, the image encoding apparatus 3400 may transmit the bitstream to the image decoding apparatus 2000 via a network. According to an embodiment, the image encoding apparatus 3400 may store the bitstream in a data storage medium including magnetic media (such as, a hard disk, a floppy disk, and a magnetic tape), optical recording media (such as, CD-ROM and DVD), and magneto-optical media (such as, a floptical disk).

According to an embodiment, the encoder 3410 may encode the image to obtain syntax elements as a result of the encoding.

According to an embodiment, the encoder 3410 may split a current image into largest coding units and split the largest coding units into at least one coding unit. The encoder 3410 may encode each coding unit according to a prediction mode such as an intra mode or an inter mode.

The syntax elements obtained by the encoder 3410 may be transformed into a bin string through binarization, and the bin string may be input to the entropy encoding apparatus 3470.

According to an embodiment, the context modeler 3430 may determine a probability value of each context of syntax elements, in order to entropy-encode the bins of the bin string.

According to an embodiment, when a syntax element to be currently encoded satisfies predetermined conditions, for example, when the syntax element to be currently encoded is a first syntax element of an independent slice segment, the context modeler 3430 may determine an initial probability value of each context of the syntax elements.

According to an embodiment, the context modeler 3430 may obtain information (e.g., ctxIdx) indicating specific context by using, for example, the type of syntax element to be currently encoded, location information of a bin within a bin string, and surrounding block information. The context modeler 3430 may determine the probability value of specific context from among respective probability values of contexts of the syntax element that is to be currently encoded, based on the obtained information (e.g., ctxIdx).

According to an embodiment, when the probability value of a bin is determined by the context modeler 3430, the arithmetic encoder 3450 may arithmetically encode bins included in the bin string, based on the probability value of the bin, and may obtain a bitstream as a result of the arithmetically encoding.

Whenever the bin is arithmetically encoded by the arithmetic encoder 3450, the context modeler 3430 may update the probability value of the bin, and the arithmetic encoder 3450 may arithmetically encode the bin by using the updated probability value of the bin.

According to an embodiment, the arithmetic encoder 3450 may arithmetically encode the bins included in the bin string, while repeating a process of dividing a predetermined integer range according to the probability value of the bin.

According to an embodiment, in order to entropy encode with respect to a current block split from a current upper block, the context modeler 3430 may obtain a probability value of a context of a syntax element stored after entropy encoding with respect to a previous block encoded before the current block. The context modeler 3430 may also entropy encode a syntax element for the current block by using the obtained probability value of the context.

According to an embodiment, an upper block may include a slice, a tile, or a largest coding unit split from an image, and a block split from the upper block may include a tile split from the slice, a largest coding unit split from the slice, a coding unit split from the slice, a largest coding unit split from the tile, a coding unit split from the tile, or a coding unit split from the largest coding unit.

It will now be explained assuming that the upper block is a largest coding unit and thus a block split from the upper block is a coding unit.

According to an embodiment, when a current coding unit corresponds to a first encoding target among at least one coding unit split from a current largest coding unit, the context modeler 3430 may obtain a probability value of each context of a syntax element stored after entropy encoding with respect to a previous largest coding unit encoded before the current largest coding unit. The context modeler 3430 may use the obtained probability value of each context as the probability value of each context of the syntax element for the current coding unit.

According to an embodiment, when a current coding unit does not correspond to a first encoding target among coding units split from a current largest coding unit, the context modeler 3430 may obtain a probability value of each context of a syntax element stored after entropy encoding with respect to a previous coding unit encoded before the current coding unit from among the coding units included in the current largest coding unit. The context modeler 3430 may use the obtained probability value of each context as the probability value of each context of the syntax element for the current coding unit.

According to an embodiment, to compensate for discontinuities between the current coding unit and the previous coding unit, the context modeler 3430 may tune the probability value for each context stored after entropy encoding with respect to the previous coding unit, based on a bin for each context of syntax elements of a previous largest coding unit or the previous coding unit. The context modeler 3430 may use the tuned probability value of each context, in entropy encoding with respect to the current coding unit.

According to an embodiment, referring to FIG. 25, the context modeler 3430 may obtain a probability value of each context of a syntax element stored after entropy encoding with respect to a fifth coding unit within the fourth largest coding unit 2340 in order to perform entropy-encoding with respect to a current coding unit (first coding unit) within the current largest coding unit 2350.

According to an embodiment, the context modeler 3430 may store, according to each context of the syntax element, a bin obtained through entropy encoding with respect to at least one coding unit included in at least one of the first largest coding unit 2310, the second largest coding unit 2320, or the fourth largest coding unit 2340.

The context modeler 3430 may tune a probability value of each context of a syntax element obtained from the fifth coding unit within the fourth largest coding unit 2340, by using the bin stored according to each context.

According to an embodiment, a bin may be stored for a coding unit adjacent to a right boundary or a lower boundary from among coding units included in the first largest coding unit 2310, the second largest coding unit 2320, or the fourth largest coding unit 2340.

According to an embodiment, a sum of the bins stored for each context may be set to be less than or equal to a first threshold value pre-determined for a largest coding unit.

According to an embodiment, the number of bins stored for one context may be set to be less than or equal to a smaller value from among a second threshold value and a limit value.

According to an embodiment, the limit value may be a value set independently for each context, and the second threshold value may be a value set equally for contexts.

According to an embodiment, the context modeler 3430 may control the number of bins stored for each context by using a table showing a limit value for each context.

According to an embodiment, the probability value of each context of the syntax element may include a first probability value and a second probability value, and the first probability value may be updated according to a first factor and the second probability value may be updated according to a second factor. According to an embodiment, the first factor may be less than the second factor.

According to an embodiment, the limit value may be a value corresponding to a first factor used to update the first probability value of the context. For example, the limit value may be a value corresponding to a 2^first factor ($2^{\text{first factor}}$).

According to an embodiment, the context modeler 3430 may update the first probability value for each context and the second probability value for each context, based on the bin stored according to context.

According to an embodiment, the context modeler 3430 may update only the first probability value for each context from among the first probability value for each context and the second probability value for each context, based on the bin stored according to context.

According to an embodiment, the context modeler 3430 may update only the second probability value for each context from among the first probability value for each context and the second probability value for each context, based on the bin stored according to context.

According to an embodiment, the probability value for each context may include only one probability value representing the probability of generation of a bin. In this case, the context modeler 3430 may update the probability value for each context, based on one factor.

According to an embodiment, the context modeler 3430 may determine which coding unit's (which largest coding unit's) bin may be used for probability value tuning with respect to a current coding unit, by considering at least one of information included in the bitstream, the size of the current coding unit, the size of a boundary that is in contact with the current coding unit from among boundaries of coding units adjacent to the current coding unit, or the areas of the coding units adjacent to the current coding unit.

According to an embodiment, the context modeler 3430 may determine whether probability value tuning needs to be performed on the current coding unit, by considering at least one of the information included in the bitstream or the size of the current coding unit.

A method of determining which coding unit's (or which largest coding unit's) bins are used for probability value tuning with respect to the current coding unit and whether probability value tuning needs to be performed on the current coding unit has been described with reference to FIGS. 31 and 32, so a detailed description thereof is omitted here.

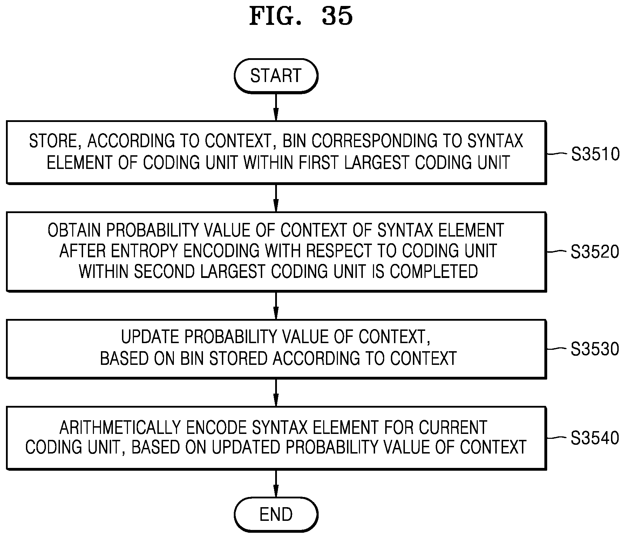

FIG. 35 is a flowchart of an image encoding method according to an embodiment.

The image encoding method of FIG. 35 may be performed by the above-described image encoding apparatus 3400.

In operation S3510, the image encoding apparatus 3400 may store a bin corresponding to a syntax element of at least one coding unit within a first largest coding unit, according to a context of the syntax element.

The first largest coding unit may be encoded earlier than a current largest coding unit, and the first largest coding unit may include at least one of a largest coding unit located on the left side of the current largest coding unit, a largest coding unit located above the current largest coding unit, and a largest coding unit located on the left upper side of the current largest coding unit.

For example, the first largest coding unit may include at least one of the first largest coding unit 2310, the second largest coding unit 2320, or the fourth largest coding unit 2340 illustrated in FIG. 31.

According to an embodiment, at least one coding unit within the first largest coding unit may be adjacent to a lower boundary or a right boundary of the first largest coding unit.

According to an embodiment, the image encoding apparatus 3400 may identify at least one coding unit adjacent to a boundary that is in contact with the current largest coding unit or the current coding unit within the current largest coding unit from among the boundaries of the first largest coding unit, and may store a bin corresponding to a syntax element of the identified at least one coding unit according to the context of the syntax element.

In operation S3520, the image encoding apparatus 3400 may obtain a probability value of a context of the syntax element after entropy encoding with respect to at least one coding unit within the second largest coding unit, in order to perform entropy-encoding with respect to a current coding unit within the current largest coding unit.

According to an embodiment, the second largest coding unit may be encoded earlier than the current largest coding unit. According to an embodiment, an encoding order of the second largest coding unit may be later than that of the first largest coding unit.

According to an embodiment, the second largest coding unit may be located on the left side of the current largest coding unit. For example, the second largest coding unit may be the fourth largest coding unit 2340 illustrated in FIG. 31.

According to an embodiment, the second largest coding unit may be located on a rightmost side of an upper row that is above a largest coding unit row including the current largest coding unit. For example, the second largest coding unit may be the third largest coding unit 2330 illustrated in FIG. 31.

According to an embodiment, the image encoding apparatus 3400 may update the probability value for each context while arithmetically encoding bins of the syntax element for at least one coding unit within the second largest coding unit, and obtain a finally-updated probability value for each context for the current coding unit.

In operation S3530, the image encoding apparatus 3400 may update the probability value of the context, based on the bin stored according to context.

According to an embodiment, the probability value of the context may include a first probability value of the context and a second probability value of the context. The image encoding apparatus 3400 may update the first probability value of the context by using a first factor independently set according to context and the bin stored according to context, and may update the second probability value of the context by using a second factor independently set according to context and the bin stored according to context.

According to an embodiment, the image encoding apparatus 3400 may update only one of the first probability value of the context and the second probability value of the context according to the bin.

In operation S3540, the image encoding apparatus 3400 may arithmetically encode a syntax element for the current coding unit, based on the updated probability value of the context.

According to an embodiment, the image encoding apparatus 3400 may obtain a bin string by binarizing the syntax element of the current coding unit, and obtain a bitstream by arithmetically encoding the bins within the bin string according to the updated probability value of the context.

In operation S3510 described above, when the bins are stored according to context, the image encoding apparatus 3400 may limit the number of bins to be stored.

According to an embodiment, the image encoding apparatus 3400 may limit the total number of bins stored for any one largest coding unit to be less than or equal to a first threshold value. For example, when the first threshold value is 512, a maximum of 512 bins may be stored for any one largest coding unit, and a maximum of 512 bins may be stored for another largest coding unit.

According to an embodiment, the image encoding apparatus 3400 may limit the number of bins stored for any one largest coding unit to be less than or equal to a smaller value from among a limit value and a pre-determined second threshold value.

According to an embodiment, the limit value may be a value set independently for each context, and the second threshold value may be a value set equally for contexts.

For example, the same second threshold value of 32 may be set for both the first context and the second context, while a limit value of 16 may be set for the first context and a limit value of 32 may be set for the second context. In this case, a maximum of 16 bins may be stored for the first context and a maximum of 32 bins may be stored for the second context.

According to an embodiment, the limit value may be a value corresponding to the first factor set for each context in order to update the first probability value of the context. For example, the limit value may be a 2^first factor.

The probability value of the context of the syntax element after entropy encoding with respect to the current coding unit may be used for entropy decoding with respect to a next coding unit.

An embodiment aims to reduce the bitrate of a bitstream through entropy coding using probability value tuning.

An embodiment aims to stably maintain a load according to buffering and probability value tuning, by limiting the number of bins stored in a buffer, based on a preset block.

An embodiment aims to enable probability values of a plurality of contexts to be tuned, by adjusting, based on context, the number of bins stored in a buffer.

The technical problems to be addressed through this disclosure are not limited to the above-mentioned technical problems, and other technical problems not mentioned will be clearly understood by a person skilled in the art to which the disclosure pertains from the following description.

An image decoding method according to an embodiment may include storing, according to a context of a syntax element, a bin obtained through entropy decoding with respect to at least one coding unit within a first largest coding unit, and at least one coding unit may be adjacent to a lower boundary or a right boundary of the first largest coding unit.

The image decoding method according to an embodiment may include obtaining a probability value of a context of a syntax element after entropy decoding with respect to at least one coding unit within a second largest coding unit is completed, in order to entropy-decode a current coding unit within the current largest coding unit 2350, and the first largest coding unit and the second largest coding unit may be reconstructed before the current largest coding unit 2350.

The image decoding method according to an embodiment may include updating the probability value of the context, based on the bin stored according to the context.

The image decoding method according to an embodiment may include reconstructing a syntax element for the current coding unit, based on the updated probability value of the context.

According to an embodiment, a total number of bins stored according to the context may be less than or equal to a pre-determined first threshold value.

According to an embodiment, the number of bins stored for any one context may be less than or equal to a limit value set for the any one context, or less than or equal to a smaller value from among the limit value and a pre-determined second threshold value.

According to the image decoding method according to an embodiment, probability values of a plurality of contexts may be tuned by adjusting the number of bins stored in a buffer, based on context.

According to an embodiment, the limit value may be set independently for each context, and the second threshold value may be determined to be the same value for contexts. Accordingly, the probability values of the plurality of contexts may be tuned.

According to an embodiment, the limit value may be a value corresponding to a first factor set independently for each context in order to update the probability value.

According to an embodiment, the probability value of the context includes a first probability value updated based on the first factor and a second probability value updated based on a second factor, and a size of the first factor may be less than a size of the second factor. Accordingly, the probability values of the plurality of contexts may be tuned, and, by setting the limit value based on the first factor, the probability of the context may quickly converge to an accurate probability.

According to an embodiment, the first largest coding unit may be located on an upper side, a left side, or on an upper left side of the current largest coding unit 2350, and the second largest coding unit may be located on the left side of the current largest coding unit 2350 or on a rightmost side of an upper row that is above a largest coding unit row including the current largest coding unit 2350.

According to an embodiment, the updating may include identifying any one of the first largest coding unit 2340 located on the left side of the current largest coding unit 2350, the first largest coding unit 2320 located on the upper side of the current largest coding unit 2350, and the first largest coding unit 2310 located on the upper left side of the current largest coding unit 2350, based on information included in a bitstream; and updating the probability value of the context, based on the bin obtained through entropy decoding with respect to at least one coding unit within the identified first largest coding unit. According to an embodiment, appropriate probability value tuning of the context may be performed.

According to an embodiment, the updating may include identifying one of the first largest coding unit 2340 located on the left side of the current largest coding unit 2350 and the first largest coding unit 2320 located on the upper side of the current largest coding unit 2350, based on a result of a comparison between a width and a height of the current coding unit; and updating the probability value of the context, based on the bin obtained through entropy decoding with respect to at least one coding unit within the identified first largest coding unit. According to an embodiment, appropriate probability value tuning of the context may be performed.

According to an embodiment, the updating may include identifying one of the first largest coding unit 2340 located on the left side of the current largest coding unit 2350 and the first largest coding unit 2320 located on the upper side of the current largest coding unit 2350, based on a result of a comparison between a height of a coding unit adjacent to the left side of the current coding unit from among coding units within the first largest coding unit 2340 located on the left side of the current largest coding unit 2350 and a width of a coding unit adjacent to the upper side of the current coding unit from among coding units within the first largest coding unit 2320 located on the upper side of the current largest coding unit 2350; and updating the probability value of the context, based on the bin obtained through entropy decoding with respect to at least one coding unit within the identified first largest coding unit. According to an embodiment, appropriate probability value tuning of the context may be performed.

According to an embodiment, the updating may include identifying one of the first largest coding unit 2340 located on the left side of the current largest coding unit 2350, the first largest coding unit 2320 located on the upper side of the current largest coding unit 2350, and the first largest coding unit 2310 located on the upper left side of the current largest coding unit 2350, based on a result of a comparison between an area of a coding unit within the first largest coding unit 2340 located on the left side of the current largest coding unit 2350, an area of a coding unit within the first largest coding unit 2320 located on the upper side of the current largest coding unit 2350, and an area of a coding unit within the first largest coding unit 2310 located on the upper left side of the current largest coding unit 2350; and updating the probability value of the context, based on the bin obtained through entropy decoding with respect to at least one coding unit within the identified first largest coding unit. According to an embodiment, appropriate probability value tuning of the context may be performed.

According to an embodiment, the image decoding method may further include obtaining a probability value of a context of a syntax element after entropy decoding with respect to a coding unit reconstructed before the current coding unit from among coding units included in the current largest coding unit 2350 is completed, and the updating may include updating, based on the bin stored according to the context, the probability value of the context of the syntax element after the entropy decoding with respect to the coding unit reconstructed before the current coding unit is completed.

According to an embodiment, the current coding unit may be adjacent to a left boundary of the current largest coding unit 2350, the first largest coding unit 2340 may be located on a left side of the current largest coding unit 2350, and the updating may include, when the height of the current coding unit is greater than the width of the current coding unit, updating the probability value of the context of the syntax element after the entropy decoding with respect to the coding unit reconstructed before the current coding unit is completed, based on a bin obtained through entropy decoding with respect to at least one coding unit within the first largest coding unit 2340 located on the left side of the current largest coding unit 2350. According to an embodiment, appropriate probability value tuning of the context may be performed.

An image decoding apparatus according to an embodiment may include the context modeler 2010 configured to store, according to a context of a syntax element, a bin obtained through entropy decoding with respect to at least one coding unit within a first largest coding unit, obtain a probability value of a context of a syntax element after entropy decoding with respect to at least one coding unit within a second largest coding unit is completed, in order to entropy-decode a current coding unit within the current largest coding unit 2350, and update the probability value of the context, based on the bin stored according to the context. The image decoding apparatus according to an embodiment may include the arithmetic decoder 2030 configured to reconstruct a syntax element for the current coding unit, based on the updated probability value of the context.

According to an embodiment, at least one coding unit within the first largest coding unit may be adjacent to a lower boundary or a right boundary of the first largest coding unit.

According to an embodiment, the first largest coding unit and the second largest coding unit may be reconstructed before the current largest coding unit 2350.

According to an embodiment, a total number of bins stored according to the context may be less than or equal to a pre-determined first threshold value.

According to an embodiment, the number of bins stored for any one context may be less than or equal to a limit value set for the any one context, or less than or equal to a smaller value from among the limit value and a pre-determined second threshold value.

According to the image decoding apparatus according to an embodiment, probability values of a plurality of contexts may be tuned by adjusting the number of bins stored in a buffer, based on context.

An image encoding method according to an embodiment may include storing, according to a context of a syntax element, a bin corresponding to a syntax element of at least one coding unit within a first largest coding unit, wherein the at least one coding unit may be adjacent to a lower boundary or a right boundary of the first largest coding unit.

The image encoding method according to an embodiment may include obtaining a probability value of a context of a syntax element after entropy encoding with respect to at least one coding unit within a second largest coding unit is completed, in order to entropy encode a current coding unit within the current largest coding unit 2350, wherein the first largest coding unit and the second largest coding unit may be encoded before the current largest coding unit 2350.

The image encoding method according to an embodiment may include updating the probability value of the context, based on the bin stored according to the context.

The image encoding method according to an embodiment may include arithmetically encoding a syntax element for the current coding unit, based on the updated probability value of the context.

According to an embodiment, a total number of bins stored according to the context may be less than or equal to a pre-determined first threshold value.

According to an embodiment, the number of bins stored for any one context may be less than or equal to a limit value set for the any one context, or less than or equal to a smaller value from among the limit value and a pre-determined second threshold value.

According to the image encoding method according to an embodiment, a bit rate of a bitstream may be reduced through entropy coding using probability value tuning.

An image encoding apparatus according to an embodiment may include the context modeler 3430 configured to store, according to a context of a syntax element, a bin corresponding to a syntax element of at least one coding unit within a first largest coding unit, obtain a probability value of a context of a syntax element after entropy encoding with respect to at least one coding unit within a second largest coding unit is completed, in order to entropy encode a current coding unit within the current largest coding unit 2350, and update the probability value of the context, based on the bin stored according to the context.

The image encoding apparatus according to an embodiment may include the arithmetic encoder 3450 configured to arithmetically encode a syntax element for the current coding unit, based on the updated probability value of the context.

According to an embodiment, at least one coding unit within the first largest coding unit may be adjacent to a lower boundary or a right boundary of the first largest coding unit.

According to an embodiment, the first largest coding unit and the second largest coding unit may be encoded before the current largest coding unit 2350.

According to an embodiment, a total number of bins stored according to the context may be less than or equal to a pre-determined first threshold value.

According to an embodiment, the number of bins stored for any one context may be less than or equal to a limit value set for the any one context, or less than or equal to a smaller value from among the limit value and a pre-determined second threshold value.

According to the image encoding apparatus according to an embodiment, a bit rate of a bitstream may be reduced through entropy coding using probability value tuning.

In a computer-readable recording medium having recorded a bitstream thereon, according to an embodiment, the bitstream may correspond to a result of arithmetic encoding a syntax element for a current coding unit.

According to an embodiment, the result of arithmetic encoding the syntax element may be obtained by storing a bin corresponding to a syntax element of at least one coding unit within a first largest coding unit, according to a context of the syntax element.

According to an embodiment, the result of arithmetic encoding the syntax element may be obtained by obtaining a probability value of a context of the syntax element after entropy encoding with respect to at least one coding unit within a second largest coding unit, in order to entropy encode the current coding unit within the current largest coding unit 2350.

According to an embodiment, the result of arithmetic encoding the syntax element may be obtained by updating the probability value of the context, based on the bin stored according to the context.

According to an embodiment, the result of arithmetic encoding the syntax element may be obtained by arithmetically encoding a syntax element for the current coding unit, based on the updated probability value of the context.

According to an embodiment, at least one coding unit within the first largest coding unit may be adjacent to a lower boundary or a right boundary of the first largest coding unit.

According to an embodiment, the first largest coding unit and the second largest coding unit may be encoded before the current largest coding unit 2350.

According to an embodiment, a total number of bins stored according to the context may be less than or equal to a pre-determined first threshold value.

According to an embodiment, the number of bins stored for any one context may be less than or equal to a limit value set for the any one context, or less than or equal to a smaller value from among the limit value and a pre-determined second threshold value.

An embodiment may reduce the bitrate of a bitstream through entropy coding using probability value tuning.

An embodiment may stably maintain a load according to buffering and probability value tuning, by limiting the number of bins stored in a buffer, based on a preset block.

An embodiment may enable probability values of a plurality of contexts to be tuned, by adjusting, based on context, the number of bins stored in a buffer.

Effects obtainable from the disclosure are not limited to the aforementioned technical effects, and other effects not mentioned will be clearly understood by a person skilled in the art to which the disclosure pertains from the following description.

The above-described embodiments of the disclosure can be written as computer-executable programs, and the written computer-executable programs can be stored in a machine-readable storage medium.

The machine-readable storage medium may be provided as a non-transitory storage medium. The 'non-transitory storage medium' is a tangible device and only means that it does not contain a signal (e.g., electromagnetic waves). This term does not distinguish a case in which data is stored semi-permanently in a storage medium from a case in which data is temporarily stored. For example, the non-transitory recording medium may include a buffer in which data is temporarily stored.

According to an embodiment of the disclosure, methods according to various disclosed embodiments may be provided by being included in a computer program product. The computer program product, which is a commodity, may be traded between sellers and buyers. Computer program products are distributed in the form of device-readable storage media (e.g., compact disc read only memory (CD-ROM)), or may be distributed (e.g., downloaded or uploaded) through an application store or between two user devices (e.g., smartphones) directly and online. In the case of online distribution, at least a portion of the computer program product (e.g., a downloadable app) may be stored at least temporarily in a device-readable storage medium, such as a memory of a manufacturer's server, a server of an application store, or a relay server, or may be temporarily generated.

While one or more embodiments of the present disclosure have been described with reference to the figures, it will be understood by those of ordinary skill in the art that various changes in form and details may be made therein without departing from the spirit and scope as defined by the following claims.

**Claims**

1. An image decoding method comprising:

   storing, according to a context of a syntax element, a bin obtained through entropy decoding with respect to at least one coding unit within a first largest coding unit, wherein at least one coding unit is adjacent to a lower boundary or a right boundary of the first largest coding unit;

   obtaining a probability value of a context of a syntax element after entropy decoding with respect to at least one coding unit within a second largest coding unit is completed, in order to entropy decode with respect to a current coding unit within a current largest coding unit (2350), wherein the first largest coding unit and the second largest coding unit are reconstructed before the current largest coding unit (2350);

   updating the probability value of the context, based on the bin stored according to the context; and

   reconstructing a syntax element for the current coding unit, based on the updated probability value of the context, wherein a total number of bins stored according to the context is less than or equal to a pre-determined first threshold value, and

   the number of bins stored for any one context is less than or equal to a limit value set for the any one context, or less than or equal to a smaller value from among the limit value and a pre-determined second threshold value.

2. The image decoding method of claim 1, wherein

   the limit value is set independently for each context, and
   the second threshold value is determined to be a same value for contexts.

3. The image decoding method of any one of claims 1 and 2, wherein
   the limit value is a value corresponding to a first factor that is independently set for each context in order to update the probability value.

4. The image decoding method of any one of claims 1 through 3, wherein

the probability value of the context includes a first probability value updated based on the first factor and a second probability value updated based on a second factor, and
a size of the first factor is less than a size of the second factor.

5. The image decoding method of any one of claims 1 through 4, wherein

the first largest coding unit is located on an upper side, a left side, or on an upper left side of the current largest coding unit (2350), and
the second largest coding unit is located on the left side of the current largest coding unit (2350) or on a rightmost side of an upper row that is above a largest coding unit row including the current largest coding unit (2350).

6. The image decoding method of any one of claims 1 through 5, wherein
the updating comprises:

identifying any one among a first largest coding unit (2340) located on the left side of the current largest coding unit (2350), a first largest coding unit (2320) located on the upper side of the current largest coding unit (2350), and a first largest coding unit (2310) located on the upper left side of the current largest coding unit (2350), based on information included in a bitstream; and
updating the probability value of the context, based on the bin obtained through entropy decoding with respect to at least one coding unit within the identified first largest coding unit.

7. The image decoding method of any one of claims 1 through 6, wherein
the updating comprises:

identifying one of the first largest coding unit (2340) located on the left side of the current largest coding unit (2350) and the first largest coding unit (2320) located on the upper side of the current largest coding unit (2350), based on a comparison result between a width and a height of the current coding unit; and
updating the probability value of the context, based on the bin obtained through entropy decoding with respect to at least one coding unit within the identified first largest coding unit.

8. The image decoding method of any one of claims 1 through 7, wherein
the updating comprises:

identifying one of the first largest coding unit (2340) located on the left side of the current largest coding unit (2350) and the first largest coding unit (2320) located on the upper side of the current largest coding unit (2350), based on a comparison result between a height of a coding unit adjacent to the left side of the current coding unit from among coding units within the first largest coding unit (2340) located on the left side of the current largest coding unit (2350) and a width of a coding unit adjacent to the upper side of the current coding unit from among coding units within the first largest coding unit (2320) located on the upper side of the current largest coding unit (2350); and
updating the probability value of the context, based on the bin obtained through entropy decoding with respect to at least one coding unit within the identified first largest coding unit.

9. The image decoding method of any one of claims 1 through 8, wherein
the updating comprises:

identifying one among the first largest coding unit (2340) located on the left side of the current largest coding unit (2350), the first largest coding unit (2320) located on the upper side of the current largest coding unit (2350), and the first largest coding unit (2310) located on the upper left side of the current largest coding unit (2350), based on a comparison result among an area of a coding unit within the first largest coding unit (2340) located on the left side of the current largest coding unit (2350), an area of a coding unit within the first largest coding unit (2320) located on the upper side of the current largest coding unit (2350), and an area of a coding unit within the first largest coding unit (2310) located on the upper left side of the current largest coding unit (2350); and
updating the probability value of the context, based on the bin obtained through entropy decoding with respect to at least one coding unit within the identified first largest coding unit.

**10.** The image decoding method of any one of claims 1 through 9,

further comprising
obtaining a probability value of a context of a syntax element after entropy decoding with respect to a coding unit reconstructed before the current coding unit, from among coding units included in the current largest coding unit (2350), is completed,
wherein the updating comprises
updating, based on the bin stored according to the context, the probability value of the context of the syntax element after the entropy decoding with respect to the coding unit reconstructed before the current coding unit is completed.

**11.** The image decoding method of any one of claims 1 through 10, wherein

the current coding unit is adjacent to a left boundary of the current largest coding unit (2350),
the first largest coding unit (2340) is located on a left side of the current largest coding unit (2350), and
wherein the updating comprises
when the height of the current coding unit is greater than the width of the current coding unit, updating the probability value of the context of the syntax element after the entropy decoding with respect to the coding unit reconstructed before the current coding unit is completed, based on a bin obtained through entropy decoding with respect to at least one coding unit within the first largest coding unit (2340) located on the left side of the current largest coding unit (2350).

**12.** An image decoding apparatus comprising:

a context modeler (2010) configured to store, according to a context of a syntax element, a bin obtained through entropy decoding with respect to at least one coding unit within a first largest coding unit, obtain a probability value of a context of a syntax element after entropy decoding with respect to at least one coding unit within a second largest coding unit is completed, in order to entropy decode with respect to a current coding unit within a current largest coding unit (2350), and update the probability value of the context, based on the bin stored according to the context; and
an arithmetic decoder (2030) configured to reconstruct a syntax element for the current coding unit, based on the updated probability value of the context,
wherein at least one coding unit within the first largest coding unit is adjacent to a lower boundary or a right boundary of the first largest coding unit,
the first largest coding unit and the second largest coding unit are reconstructed before the current largest coding unit (2350),
a total number of bins stored according to the context is less than or equal to a pre-determined first threshold value, and
the number of bins stored for any one context is less than or equal to a limit value set for the any one context, or less than or equal to a smaller value from among the limit value and a pre-determined second threshold value.

**13.** An image encoding method comprising:

storing, according to a context of a syntax element, a bin corresponding to a syntax element of at least one coding unit within a first largest coding unit, wherein the at least one coding unit is adjacent to a lower boundary or a right boundary of the first largest coding unit;
obtaining a probability value of a context of a syntax element after entropy encoding with respect to at least one coding unit within a second largest coding unit is completed, in order to entropy encode with respect to a current coding unit within a current largest coding unit (2350), wherein the first largest coding unit and the second largest coding unit are encoded before the current largest coding unit (2350);
updating the probability value of the context, based on the bin stored according to the context; and
arithmetically encoding a syntax element for the current coding unit, based on the updated probability value of the context,
wherein a total number of bins stored according to the context is less than or equal to a pre-determined first threshold value, and
the number of bins stored for any one context is less than or equal to a limit value set for the any one context, or less than or equal to a smaller value from among the limit value and a pre-determined second threshold value.

14. An image encoding apparatus comprising:

a context modeler (3430) configured to store, according to a context of a syntax element, a bin corresponding to a syntax element of at least one coding unit within a first largest coding unit, obtain a probability value of a context of a syntax element after entropy encoding with respect to at least one coding unit within a second largest coding unit is completed, in order to entropy encode with respect to a current coding unit within a current largest coding unit (2350), and update the probability value of the context, based on the bin stored according to the context; and
an arithmetic encoder (3450) configured to arithmetically encode a syntax element for the current coding unit, based on the updated probability value of the context,
wherein at least one coding unit within the first largest coding unit is adjacent to a lower boundary or a right boundary of the first largest coding unit,
the first largest coding unit and the second largest coding unit are encoded before the current largest coding unit (2350),
a total number of bins stored according to the context is less than or equal to a pre-determined first threshold value, and
the number of bins stored for any one context is less than or equal to a limit value set for the any one context, or less than or equal to a smaller value from among the limit value and a pre-determined second threshold value.

15. A computer-readable recording medium having recorded a bitstream thereon,

wherein the bitstream corresponds to a result of arithmetic encoding a syntax element for a current coding unit,
the result of arithmetic encoding a syntax element for a current coding unit is obtained by:

storing a bin corresponding to a syntax element of at least one coding unit within a first largest coding unit, according to a context of the syntax element;
obtaining a probability value of a context of a syntax element after entropy encoding with respect to at least one coding unit within a second largest coding unit is completed, in order to entropy encode with respect to the current coding unit within a current largest coding unit (2350);
updating the probability value of the context, based on the bin stored according to the context; and
arithmetically encoding a syntax element for the current coding unit, based on the updated probability value of the context,
wherein the at least one coding unit within the first largest coding unit is adjacent to a lower boundary or a right boundary of the first largest coding unit,
the first largest coding unit and the second largest coding unit are encoded before the current largest coding unit (2350),
a total number of bins stored according to the context is less than or equal to a pre-determined first threshold value, and
the number of bins stored for any one context is less than or equal to a limit value set for the any one context, or less than or equal to a smaller value from among the limit value and a pre-determined second threshold value.

# FIG. 1

# FIG. 2

200

210

BITSTREAM
GENERATOR

220

ENCODER

# FIG. 3

EP 4 753 260 A1

# FIG. 4

FIG. 5

# FIG. 6

# FIG. 7

700

710a 710b

710c

730a

730c

750a 750b

750e

730b

750c 750d

720a
720c
720b

# FIG. 8

# FIG. 9

900

910a
910b
910c
920a
920b
920c

930

950

**FIG. 10**

1000

1010a 1010b
1020a
1030a 1030b
1030c 1030d
1020b

1012a
1012b
1014a
1014b

1022a 1022b
1024a 1024b

# FIG. 11

EP 4 753 260 A1

# FIG. 12

1200

1210a 1210b

1220a

1220b

1216a 1216b

1226a 1226b

1217

1216c 1216d

1226c 1226d

1227

# FIG. 13

| BLOCK SHAPE<br>DEPTH | 0: SQUARE | 1: NS_VER | 2: NS_HOR |
|---|---|---|---|
| DEPTH D | 1300 | 1310 | 1320 |
| DEPTH D+1 | 1302 | 1312 | 1322 |
| DEPTH D+2 | 1304 | 1314 | 1324 |
| ... | ... | ... | ... |

# FIG. 14

EP 4 753 260 A1

# FIG. 15

FIG. 16

1600

1610

1620

# FIG. 17

| SQUARE BLOCK | |
|---|---|
| (00)b | |
| (01)b | |
| (10)b | |
| (11)b | |

| NON-SQUARE BLOCK | |
|---|---|
| (0)b | |
| (10)b | |
| (11)b | |

EP 4 753 260 A1

# FIG. 18

| SQUARE BLOCK | | |
|---|---|---|
| (00)b | □ | |
| (10)b | ▭ | |
| (11)b | ▯ | |

| NON-SQUARE BLOCK | | |
|---|---|---|
| (0)b | ▭ | ▯ |
| (10)b | ▭▭ | ▯ |
| (11)b | ▭▭▭ | ▯ |

63

FIG. 19

# FIG. 20

FIG. 21

- Binary Sequence : 01111

- C(0) = 1, C(1) =3
  – p(0) = 0.25, p(1) = 0.75

Sequence : 01111

0    0.25    1

- Encoding 0, C(0) = 2, C(1) = 3
  – p(0) = 0.4, p(1) = 0.6

Sequence : 01111

0    0.1    0.25

- Encoding 1, C(0) = 2, C(1) = 4
  – p(0) = 2/6, p(1) = 4/6

Sequence : 01111

0.1    0.15    0.25

- Encoding 1, C(0) = 2 , C(1) = 5
  – p(0) = 2/7, p(1) = 5/7

Sequence : 01111

0.15    0.1786    0.25

- Encoding 1, C(0) = 2, C(1) = 6
  – p(0) = 2/8, p(1) = 6/8

Sequence : 01111

0.1786    0.19645    0.25

Encode
0.19645~0.25
0011 11 (6 bits)

0.05355

0.19645    0.25

EP 4 753 260 A1

# FIG. 22

- C(0) = 1, C(1) = 3
  - p(0) = 0.25, p(1) = 0.75

Sequence : 0 |———o——|——————————————|
            0      0.25                        1

- Decoding 0, C(0) = 2, C(1) = 3
  - p(0) = 0.4, p(1) = 0.6

Sequence : 01 |——————|———————————o——|
              0      0.1                    0.25

- Decoding 1, C(0) = 2, C(1) = 4
  - p(0) = 2/6, p(1) = 4/6

Sequence : 011 |——————|————————o——|
               0.1    0.15              0.25

- Decoding 1, C(0) = 2, C(1) = 5
  - p(0) = 2/7, p(1) = 5/7

Sequence : 0111 |———|————————o——|
                0.15  0.1786          0.25

- Decoding 1, C(0) = 2, C(1) = 6
  - p(0) = 2/8, p(1) = 6/8

Sequence : 01111 |———|————————o——|
                 0.1786  0.19645        0.25

EP 4 753 260 A1

67

# FIG. 23

# FIG. 24

# FIG. 25

FIG. 26

# FIG. 27

| SYNTAX ELEMENT | CONTEXT | BIN |
|---|---|---|
| merge_flag | ctx0 | 1 0 |
| | ctx1 | 0 |
| abs_mvd_greater0_flag | ctx2 | 1 1 0 1 |
| | ctx3 | 0 0 1 |
| | ctx4 | 0 0 1 1 |
| | ctx5 | none |
| abs_mvd_greater1_flag | ctx6 | 1 1 1 1 |
| | ctx7 | 0 0 1 |
| | ctx8 | none |
| | ctx9 | 1 1 0 |
| ⋮ | ⋮ | ⋮ |

# FIG. 28

| SYNTAX ELEMENT | CONTEXT | FIRST PROBABILITY VALUE | SECOND PROBABILITY VALUE |
|---|---|---|---|
| merge_flag | ctx0 | 15 | 23 |
| | ctx1 | 18 | 25 |
| abs_mvd_greater0_flag | ctx2 | 31 | 38 |
| | ctx3 | 33 | 39 |
| | ctx4 | 35 | 41 |
| | ctx5 | 37 | 43 |
| abs_mvd_greater1_flag | ctx6 | 11 | 21 |
| | ctx7 | 14 | 23 |
| | ctx8 | 16 | 25 |
| | ctx9 | 18 | 27 |
| ⋮ | ⋮ | ⋮ | ⋮ |

# FIG. 29

| SYNTAX ELEMENT | CONTEXT | FIRST PROBABILITY VALUE | SECOND PROBABILITY VALUE |
|---|---|---|---|
| merge_flag | ctx0 | 15→18→15 | 23→24→23 |
| | ctx1 | 18→14 | 25→24 |
| abs_mvd_greater0_flag | ctx2 | 31→34→38→42→46 | 38→39→40→41→42 |
| | ctx3 | 33→35→38→41 | 39→40→41→42 |
| | ctx4 | 35→32→30→28→25 | 41→39→38→37 |
| | ctx5 | 37 | 43 |
| abs_mvd_greater1_flag | ctx6 | 11→15→19→22→26 | 21→23→25→27→29 |
| | ctx7 | 14→18→21→25 | 23→24→25→26 |
| | ctx8 | 16 | 25 |
| | ctx9 | 18→15→12→ 8 | 27→26→25→23 |
| ⋮ | ⋮ | ⋮ | ⋮ |

# FIG. 30

| CONTEXT | FIRST FACTOR, SECOND FACTOR | NUMBER OF BINS WHEN NUMBER OF BINS IS LIMITED BY SECOND THRESHOLD VALUE | NUMBER OF BINS WHEN NUMBER OF BINS IS LIMITED BY SMALLER VALUE AMONG SECOND THRESHOLD VALUE AND LIMIT VALUE |
|---|---|---|---|
| Ctx0 | (3, 5) | 32 | 8 |
| Ctx1 | (3, 5) | 32 | 8 |
| Ctx2 | (3, 5) | 32 | 8 |
| Ctx3 | (3, 5) | 32 | 8 |
| Ctx4 | (4, 6) | 32 | 16 |
| Ctx5 | (4, 6) | 32 | 16 |
| Ctx6 | (4, 6) | 32 | 16 |
| Ctx7 | (4, 6) | 32 | 16 |
| Ctx8 | (4, 7) | 32 | 16 |
| Ctx9 | (4, 7) | 32 | 16 |
| Ctx10 | (4, 7) | 32 | 16 |
| Ctx11 | (4, 7) | 32 | 16 |
| Ctx12 | (5, 8) | 32 | 32 |
| Ctx13 | (5, 8) | 32 | 32 |
| Ctx14 | (5, 8) | 32 | 32 |
| Ctx15 | (5, 8) | 32 | 32 |
| Ctx16 | (3, 6) | | 8 |
| Ctx17 | (3, 6) | | 8 |
| Ctx18 | (3, 6) | | 8 |
| Ctx19 | (3, 6) | | 8 |
| Ctx20 | (4, 8) | | 16 |
| Ctx21 | (4, 8) | | 16 |
| Ctx22 | (4, 8) | | 16 |
| Ctx23 | (4, 8) | | 16 |
| Ctx24 | (4, 9) | | 16 |
| Ctx25 | (4, 9) | | 16 |
| Ctx26 | (4, 9) | | 16 |
| Ctx27 | (4, 9) | | 16 |
| Ctx28 | (4, 6) | | 16 |
| Ctx29 | (4, 6) | | 16 |
| Ctx30 | (4, 6) | | 16 |
| Ctx31 | (4, 6) | | 16 |

# FIG. 31

# FIG. 32

# FIG. 33

START

STORE, ACCORDING TO CONTEXT OF SYNTAX ELEMENT, BIN OBTAINED THROUGH ENTROPY DECODING WITH RESPECT TO CODING UNIT OF FIRST LARGEST CODING UNIT — S3310

OBTAIN PROBABILITY VALUE OF CONTEXT OF SYNTAX ELEMENT AFTER ENTROPY DECODING WITH RESPECT TO CODING UNIT WITHIN SECOND LARGEST CODING UNIT IS COMPLETED — S3320

UPDATE PROBABILITY VALUE OF CONTEXT, BASED ON BIN — S3330

RECONSTRUCT SYNTAX ELEMENT FOR CURRENT CODING UNIT, BASED ON UPDATED PROBABILITY VALUE OF CONTEXT — S3340

END

# FIG. 34

# FIG. 35

START

STORE, ACCORDING TO CONTEXT, BIN CORRESPONDING TO SYNTAX ELEMENT OF CODING UNIT WITHIN FIRST LARGEST CODING UNIT — S3510

OBTAIN PROBABILITY VALUE OF CONTEXT OF SYNTAX ELEMENT AFTER ENTROPY ENCODING WITH RESPECT TO CODING UNIT WITHIN SECOND LARGEST CODING UNIT IS COMPLETED — S3520

UPDATE PROBABILITY VALUE OF CONTEXT, BASED ON BIN STORED ACCORDING TO CONTEXT — S3530

ARITHMETICALLY ENCODE SYNTAX ELEMENT FOR CURRENT CODING UNIT, BASED ON UPDATED PROBABILITY VALUE OF CONTEXT — S3540

END

## INTERNATIONAL SEARCH REPORT

| International application No. |
|---|
| **PCT/KR2024/006505** |

### A. CLASSIFICATION OF SUBJECT MATTER

**H04N 19/13**(2014.01)i; **H04N 19/70**(2014.01)i; **H04N 19/426**(2014.01)i

According to International Patent Classification (IPC) or to both national classification and IPC

### B. FIELDS SEARCHED

Minimum documentation searched (classification system followed by classification symbols)

H04N 19/13(2014.01); H04N 19/105(2014.01); H04N 19/119(2014.01); H04N 19/184(2014.01); H04N 19/513(2014.01); H04N 19/91(2014.01); H04N 7/24(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 신택스(syntax), 컨텍스트(context), 확률(probability), 갱신(update), 복원(reconstruct), 임계(threshold)

### C. DOCUMENTS CONSIDERED TO BE RELEVANT

| Category* | Citation of document, with indication, where appropriate, of the relevant passages | Relevant to claim No. |
|---|---|---|
| Y | KR 10-2019-0140862 A (ELECTRONICS AND TELECOMMUNICATIONS RESEARCH INSTITUTE et al.) 20 December 2019 (2019-12-20) See paragraphs [0312]-[0317], [0344]-[0348], [0456], [0461], [0465] and [0475]; and claims 1-5. | 1-15 |
| Y | US 2017-0289579 A1 (SAMSUNG ELECTRONICS CO., LTD.) 05 October 2017 (2017-10-05) See paragraphs [0114]-[0121]; claim 1; and figure 11. | 1-15 |
| Y | KR 10-2023-0087621 A (HUAWEI TECHNOLOGIES CO., LTD.) 16 June 2023 (2023-06-16) See paragraphs [0213] and [0220]; and figure 8. | 6 |
| A | KR 10-2021-0018140 A (HYUNDAI MOTOR COMPANY et al.) 17 February 2021 (2021-02-17) See claims 1-5. | 1-15 |
| A | KR 10-1867613 B1 (INDUSTRY-UNIVERSITY COOPERATION FOUNDATION KOREA AEROSPACE UNIVERSITY) 15 June 2018 (2018-06-15) See claims 1-2 and 4-5. | 1-15 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 August 2024** | **26 August 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/006505**

| Patent document cited in search report | | | Publication date (day/month/year) | Patent family member(s) | | | Publication date (day/month/year) |
|---|---|---|---|---|---|---|---|
| KR | 10-2019-0140862 | A | 20 December 2019 | US | 12015778 | B2 | 18 June 2024 |
| | | | | US | 2022-0408091 | A1 | 22 December 2022 |
| | | | | WO | 2019-240493 | A1 | 19 December 2019 |
| US | 2017-0289579 | A1 | 05 October 2017 | US | 10027991 | B2 | 17 July 2018 |
| | | | | US | 10158890 | B2 | 18 December 2018 |
| | | | | US | 2017-0155926 | A1 | 01 June 2017 |
| | | | | US | 2017-0295381 | A1 | 12 October 2017 |
| | | | | WO | 2011-126277 | A2 | 13 October 2011 |
| | | | | WO | 2011-126277 | A3 | 19 January 2012 |
| KR | 10-2023-0087621 | A | 16 June 2023 | CN | 112534808 | A | 19 March 2021 |
| | | | | EP | 3815358 | A1 | 05 May 2021 |
| | | | | JP | 2023-038228 | A | 16 March 2023 |
| | | | | JP | 7237144 | B2 | 10 March 2023 |
| | | | | KR | 10-2021-0025645 | A | 09 March 2021 |
| | | | | KR | 10-2542433 | B1 | 13 June 2023 |
| | | | | US | 11653032 | B2 | 16 May 2023 |
| | | | | US | 2023-0319322 | A1 | 05 October 2023 |
| | | | | WO | 2020-030187 | A1 | 13 February 2020 |
| KR | 10-2021-0018140 | A | 17 February 2021 | CN | 114556927 | A | 27 May 2022 |
| | | | | US | 12003786 | B2 | 04 June 2024 |
| | | | | US | 2022-0132173 | A1 | 28 April 2022 |
| | | | | WO | 2021-025485 | A1 | 11 February 2021 |
| KR | 10-1867613 | B1 | 15 June 2018 | KR | 10-1850152 | B1 | 24 April 2018 |
| | | | | KR | 10-1867096 | B1 | 14 June 2018 |
| | | | | KR | 10-2016-0031059 | A | 22 March 2016 |
| | | | | KR | 10-2016-0031060 | A | 22 March 2016 |
| | | | | KR | 10-2016-0031061 | A | 22 March 2016 |

Form PCT/ISA/210 (patent family annex) (July 2022)